# EUROPEAN PATENT SPECIFICATION

(11) **EP 1 444 691 B1**
(45) Date of publication and mention of the grant of the patent: **06.07.2005**
(21) Application number: 02787557.4
(22) Date of filing: 05.11.2002
(51) Int. Cl.: G11B 7/24, C09B 67/22, C09B 69/04

(54) **COMPOSITIONS COMPRISING AT LEAST ONE OXONOL DYE AND AT LEAST ONE METAL COMPLEX**
ZUSAMMENSETZUNGEN ENTHALTEND MINDESTENS EINEN OXONOL-FARBSTOFF UND MINDESTENS EINEN METALLKOMPLEX
COMPOSITIONS COMPRENANT AU MOINS UN COLORANT A BASE D'OXONOL ET AU MOINS UN COMPLEXE METALLIQUE

(30) Priority: 13.11.2001 EP 01811092; 13.12.2001 EP 01811226
(43) Date of publication of application: 11.08.2004
(73) Proprietor: Ciba Specialty Chemicals Holding Inc., 4057 Basel (CH)
(72) Inventor: SCHMIDHALTER, Beat, CH-4416 Bubendorf (CH); ADAM, Jean-Marie, F-68300 Rosenau (FR); FEILER, Leonhard, 79395 Neuenburg (DE); LEHMANN, Urs, CH-4057 Basel (CH); DE KEYZER, Gerardus, CH-4125 Riehen (CH); YOUSAF, Taher, CH-4057 Basel (CH)
(86) International application number: PCT/EP2002/012307
(87) International publication number: WO 2003/042989

(56) References cited:
- EP-A- 0 458 257
- EP-A- 0 833 314
- EP-A- 0 962 923
- WO-A-01/42211
- WO-A-98/28737
- US-A- 4 655 783
- DATABASE WPI Section Ch, Week 198516 Derwent Publications Ltd., London, GB; Class A12, AN 1985-096276 XP002201857 -& JP 60 044390 A (TDK CORP), 9 March 1985 (1985-03-09) cited in the application
- DATABASE WPI Section Ch, Week 199927 Derwent Publications Ltd., London, GB; Class E24, AN 1999-318390 XP002201856 -& JP 11 110815 A (RICOH KK), 23 April 1999 (1999-04-23)
- DATABASE WPI Section Ch, Week 200114 Derwent Publications Ltd., London, GB; Class A89, AN 2001-127009 XP002230299 -& JP 2000 258618 A (FUJI PHOTO FILM CO LTD), 22 September 2000 (2000-09-22)
- DATABASE WPI Section Ch, Week 199735 Derwent Publications Ltd., London, GB; Class E19, AN 1997-380822 XP002230300 -& JP 09 164767 A (TOYO INK MFG CO LTD), 24 June 1997 (1997-06-24)

## Description

The present invention relates to compositions comprising at least one oxonol dye and at least one metal complex of formula (I-1) or (I-2), to recording media comprising the compositions and to use of the compositions in the production of optical recording media, colour filters and printing inks. Use of the metal complexes of formula (I) results, surprisingly, in a comparatively weak tendency of the oxonol dyes to aggregate in the solid state so that the absorption curve remains advantageously narrow even in the solid state, as a result of which recording media having high reflectivity as well as high sensitivity and good playback characteristics in the desired spectral region are made available.

The field of the invention is the optical storage of information by means of write-once storage media, the information markings (information pits) being distinguished by means of the differing optical properties of a colorant at written and unwritten locations. This technology is usually termed "WORM" (for example, "CD-R" or "DVD-R").
Compact discs that are writable at a wavelength of from 770 to 830 nm are known from "Optical Data Storage 1989", Technical Digest Series, Vol. 1, 45 (1989). They are read with reduced read-out performance. According to the Orange Book Standard, the medium must have a basic reflectivity of 65 % or more at the recording wavelength. As recording media there may be used, for example, cyanine dyes (JP-58/125246), phthalocyanines (EP-A-676 751, EP-A-712 904), azo dyes (US-A-5 441 844), double salts (US-A-4 626 496), azo metal complexes (US-A-5 272 047, US-A-5 294 471, EP-A-649 133, EP-A-649 880) or mixtures thereof (EP-A-649 884) or oxonol dyes (US-B-6 225 024, EP-A-0 833 314, US-A-4 968 593). In addition to the dyes, the recording layer may comprise stabilisers such as, for example, singlet oxygen quenchers, fluorescence quenchers and free radical capture agents.
JP 60-0044390 A accordingly relates to an optical recording medium comprising a substrate and a recording medium, the recording layer comprising a cyanine dye, or a cyanine dye and a binder, and, in addition, at least one compound of formula 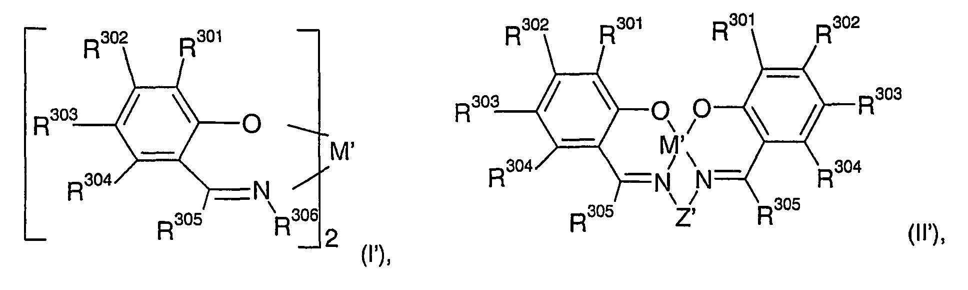 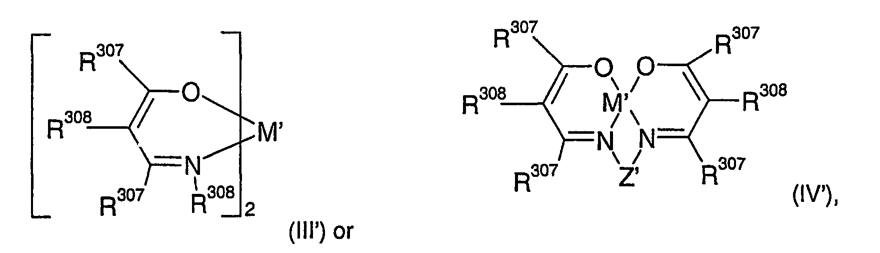 wherein R³⁰¹, R³⁰², R³⁰³ and R³⁰⁴ are each a hydrogen atom or a monovalent group, or pairs of R³⁰¹ and R³⁰², R³⁰² and R³⁰³, and R³⁰³ and R³⁰⁴ may be connected to one another to form a six-membered ring, R³⁰⁵ and R³⁰⁸ are each a hydrogen atom or a substituted or unsubstituted alkyl or aryl radical, R³⁰⁶ is a hydrogen atom, a hydroxy group or a substituted or unsubstituted alkyl or aryl radical, R³⁰⁷ is a substituted or unsubstituted alkyl or aryl radical, Z' is a group of non-metal atoms necessary for the formation of a five- or six-membered ring, and M' is a transition metal atom.

JP 09-164767 A furthermore describes a recording material comprising a recording layer comprising a phthalocyanine compound and a stabiliser of the following formula 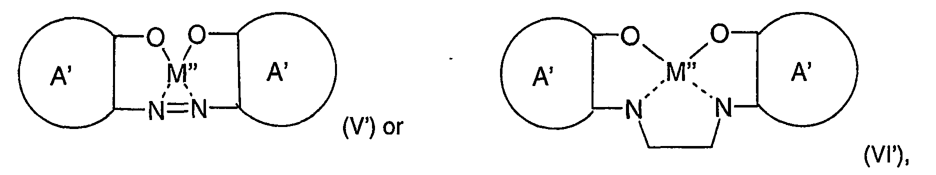 wherein A' is a phenyl or naphthalene ring which is substituted by a sulfonic acid group, and M" is a transition metal atom.

The aim of the invention was to make available an optical recording medium wherein the recording layer has a high storage capacity together with outstanding other properties. It should be possible for the recording medium to be both written and read at high speed, with as few errors as possible, at the same wavelength in the range from 600 to 700 nm (preferably from 630 to 690 nm), or at less than 450 nm.

It has now been found, surprisingly, that the following advantages are obtained by combining oxonol dyes with specific metal complexes:
- disaggregation of the dyes, resulting in an ideal absorption curve, which is not the case when the dyes known from EP-A-833 314 are used on their own;
- improvement of light-stability, and
- improved solubility of such compositions in polar solvents.

The invention accordingly relates to compositions comprising at least one oxonol dye and at least one, that is to say from 1 to 5, preferably from 1 to 3, metal complex of the following formula 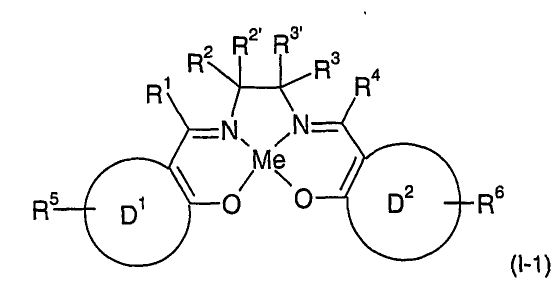 or 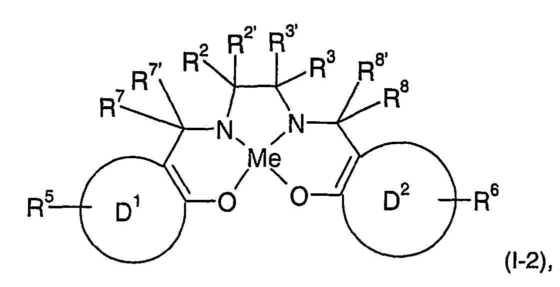 wherein
Me is a transition metal of Sub-Group 7, 8, 9, 10, 11 or 12, preferably 9, 10 or 11,
D¹ and D² are each independently of the other a carbocyclic or heterocyclic ring or ring system, which may be unsubstituted or substituted by one or more groups R⁵ and R⁶,
R⁵ and R⁶ being a halogen atom, such as fluorine, chlorine or bromine, an amino group, an alkylamino group, a dialkylamino group, a nitro group, a cyano group, a hydroxy group, an unsubstituted or substituted alkyl radical, an unsubstituted or substituted hydroxyalkyl radical, an unsubstituted or substituted alkoxy radical, an alkyl radical which is interrupted one or more times by -O- or by -S- and which may be unsubstituted or substituted, an acyl radical, a phenyl group, an ester group, such as a phosphonic acid, phosphoric acid or carboxylic acid ester group, a carboxamide group, a sulfamide group, an ammonium group, a carboxylic acid, sulfonic acid, phosphonic acid or phosphoric acid group or a salt thereof, R¹ and R⁴ are each independently of the other a hydrogen atom or an unsubstituted or substituted alkyl radical, aryl radical or aralkyl radical,
R², R^{2'}, R³ and R^{3'} are each independently of the others a hydrogen atom, a cyano group, an unsubstituted or substituted alkyl radical, alkoxy radical, aryl radical or aralkyl radical, an ester group, a carboxamide group, a sulfamide group, a trialkylammonium group, a carboxylic acid, sulfonic acid, phosphonic acid or phosphoric acid group or a salt thereof, or R² and R³ together, or R^{2'} and R^{3'} together, form a double bond, a cycloalkyl ring or a heterocyclic ring, or
R², R^{2'}, R³ and R^{3'} together form an aromatic carbocyclic or heterocyclic ring,
R² and R^{2'} together, and/or R³ and R^{3'} together, form, each pair independently of the other, a carbonyl group or a thiocarbonyl group,
R⁷, R^{7'}, R⁸ and R^{8'} are each independently of the others a hydrogen atom or an unsubstituted or substituted alkyl radical, aryl radical or aralkyl radical, or I
R⁷ and R^{7'} together, and/or R⁸ and R^{8'} together, form, each pair independently of the other, a carbonyl group or a thiocarbonyl group,
to optical recording media comprising a substrate and at least one recording layer wherein the recording layer comprises the above-mentioned composition, and to use of the above-mentioned composition in the production of optical recording media, colour filters (optical filters) and printing inks.

The use of the metal complexes of formula (I) in combination with oxonol dyes results, surprisingly, in a comparatively weak tendency of the oxonol dyes to aggregate in the solid state so that the absorption curve remains advantageously narrow even in the solid state, as a result of which recording media having high reflectivity as well as high sensitivity and good playback characteristics in the desired spectral range are made available.

The metal complex used generally has the following formula 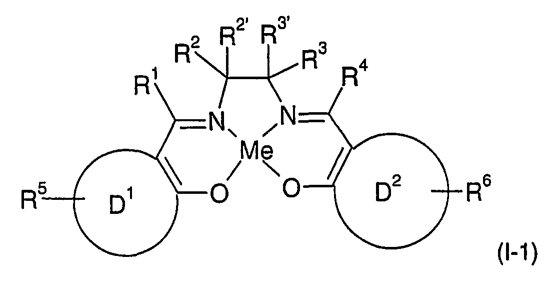 or 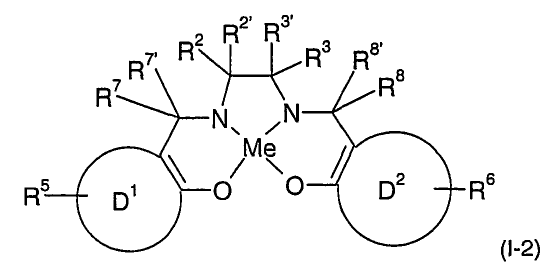 wherein
Me is a transition metal of Sub-Group 7, 8, 9, 10, 11 or 12, preferably 9, 10 or 11,
D¹ and D² are each independently of the other a carbocyclic or heterocyclic ring or ring system, which may be unsubstituted or substituted by one or more groups R⁵ and R⁶,
R⁵ and R⁶ being a halogen atom, such as fluorine, chlorine or bromine, an amino group, an alkylamino group, a dialkylamino group, a nitro group, a cyano group, a hydroxy group, an unsubstituted or substituted alkyl radical, an unsubstituted or substituted hydroxyalkyl radical, an unsubstituted or substituted alkoxy radical, an alkyl radical which is interrupted one or more times by -O- or by -S- and which may be unsubstituted or substituted, an acyl radical, a phenyl group, an ester group, such as a phosphonic acid, phosphoric acid or carboxylic acid ester group, a carboxamide group, a sulfamide group, an ammonium group, a carboxylic acid, sulfonic acid, phosphonic acid or phosphoric acid group or a salt thereof, R¹ and R⁴ are each independently of the other a hydrogen atom or an unsubstituted or substituted alkyl radical, aryl radical or aralkyl radical,
R², R^{2'}, R³ and R^{3'} are each independently of the others a hydrogen atom, a cyano group, an unsubstituted or substituted alkyl radical, alkoxy radical, aryl radical or aralkyl radical, an ester group, a carboxamide group, a sulfamide group, a trialkylammonium group, a carboxylic acid, sulfonic acid, phosphonic acid or phosphoric acid group or a salt thereof, or R² and R³ together, or R^{2'} and R^{3'} together, form a double bond, a cycloalkyl ring or a heterocyclic ring, or
R², R^{2'}, R³ and R^{3'} together form an aromatic carbocyclic or heterocyclic ring,
R² and R^{2'} together, and/or R³ and R^{3'} together, form, each pair independently of the other, a carbonyl group or a thiocarbonyl group,
R⁷, R^{7'}, R⁸ and R^{8'} are each independently of the other a hydrogen atom or an unsubstituted or substituted alkyl radical, aryl radical or aralkyl radical, or
R⁷ and R^{7'} together, and/or R⁸ and R^{8'} together, form, each pair independently of the other, a carbonyl group or a thiocarbonyl group.

Examples of cations that form a salt with a carboxylic acid, sulfonic acid, phosphonic acid or phosphoric acid group are metal cations such as a sodium, potassium, lithium, calcium, iron and copper ion, a metal complex cation or an ammonium cation.

In accordance with the invention, an alkyl radical is understood to be a straight-chain or branched C₁₋₂₄alkyl radical, preferably C₁₋₈alkyl radical, which may be unsubstituted or substituted, such as, for example, methyl, ethyl, n-propyl, isopropyl, n-butyl, sec-butyl, isobutyl, tert-butyl, cyclobutyl, n-pentyl, 2-pentyl, 3-pentyl, 2,2-dimethylpropyl, hexyl, heptyl, 2,4,4-trimethylpentyl, 2-ethylhexyl or octyl, ethoxycarbonylethyl, cyanoethyl, diethylaminoethyl, chloroethyl, acetoxyethyl and trifluoromethyl.

In accordance with the invention, an alkoxy radical is understood to be a straight-chain or branched C₁₋₂₄alkoxy radical, that is to say O-C₁₋₂₄alkyl, preferably O-C₁₋₈alkyl, such as, for example, methoxy, ethoxy, n-propoxy, isopropoxy, n-butoxy, sec-butoxy, isobutoxy, tert-butoxy, n-pentyloxy, 2-pentyloxy, 3-pentyloxy, 2,2-dimethylpropoxy, n-hexyloxy, n-heptyloxy, n-octyloxy, 1,1,3,3-tetramethylbutoxy or 2-ethylhexyloxy.

In accordance with the invention, an acyl radical or alkylcarbonyl radical is understood to be a C₁₋₂₄alkylcarbonyl radical, preferably C₁₋₈alkylcarbonyl radical, which may be unsubstituted or substituted, such as, for example, acetyl, propionyl, butanoyl or chloroacetyl.

In accordance with the invention, an aromatic carbocyclic ring or an aryl radical is understood to be a C₆₋₂₄aryl radical, preferably C₆₋₁₂aryl radical, which may be unsubstituted or substituted, such as, for example, phenyl, 4-methylphenyl, 4-methoxyphenyl, naphthyl, biphenylyl, 2-fluorenyl, phenanthryl, anthryl or terphenylyl.

In accordance with the invention, an aralkyl radical is understood to be a C₇₋₂₄aralkyl radical, preferably C₇₋₁₂aralkyl radical, which may be unsubstituted or substituted, such as, for example, benzyl, 2-benzyl-2-propyl, β-phenethyl, 9-fluorenyl, α,α-dimethylbenzyl, ω-phenyl-butyl, ω-phenyl-octyl, ω-phenyl-dodecyl or 3-methyl-5-(1',1',3',3'-tetramethyl-butyl)-benzyl.

In accordance with the invention, an alkyl radical which is interrupted one or more times by -O- or by -S- is understood to be a straight-chain or branched C₂-C₂₄alkyl radical, preferably C₂-C₈alkyl radical, which may be interrupted one or more times by -O- or by -S-, for example one, two or three times by -O- and/or by -S-, resulting in structural units such as, for example, -(CH₂)₂OCH₃, -(CH₂CH₂O)₂CH₂CH₃, -CH₂-O-CH₃, -CH₂CH₂-O-CH₂CH₃, -CH₂CH₂CH₂-O-CH(CH₃)₂, -[CH₂CH₂O]_{Y1}-CH₃ wherein Y1 = 1-3, -CH₂-CH(CH₃)-O-CH₂-CH₂CH₃ and -CH₂-CH(CH₃)-O-CH₂-CH₃.

In accordance with the present invention, the expression "ester group" encompasses carboxylic acid esters -C(O)OR¹⁰¹, phosphonic acid esters -P(O)OR¹⁰²OR¹⁰³ and phosphoric acid esters -OP(O)OR¹⁰²OR¹⁰³, wherein R¹⁰¹ is an unsubstituted or substituted alkyl, aryl or aralkyl radical or is an alkyl radical which is interrupted one or more times by -O- or by -S- and which is unsubstituted or substituted by a hydroxy group, R¹⁰² and R¹⁰³ are a hydrogen atom, an unsubstituted or substituted alkyl, aryl or aralkyl radical or are an alkyl radical which is interrupted one or more times by -O- or by -S- and which is unsubstituted or substituted by a hydroxy group, such as, for example, -C(O)OCH₂CH₂OCH₂CH₂OCH(CH₃)₂ and -C(O)OCH₂CH₂OCH₂CH₂OH.

The expression "sulfamide group" indicates a group -SO₂NR¹⁰²R¹⁰³ wherein R¹⁰² and R¹⁰³ are as defined above.

An amino group, alkylamino group or dialkylamino group is understood to be a group -NR¹⁰⁴R¹⁰⁵ wherein R¹⁰⁴ and R¹⁰⁵ are each independently of the other a hydrogen atom, a C₁₋₂₄alkyl radical, a C₁₋₂₄alkylcarbonyl radical or a C₁₋₂₄alkylcarbonyl radical substituted by halogen, a C₁₋₂₄alkoxycarbonyl radical, a C₆₋₂₄aryl radical, a C₇₋₂₄aralkyl radical or a C₆₋₂₄aryl- or C₇₋₂₄aralkyl-carbonyl radical, or R¹⁰⁴ and R¹⁰⁵ together form a five- to seven-membered heterocyclic ring. Examples are amino, methylamino, ethylamino, dimethylamino, diethylamino, phenylamino, methoxycarbonylamino, acetylamino, ethylcarbonylamino, cyclohexylcarbonylamino, benzoylamino or chloroacetylamino, morpholino, piperidino or pyrrolidino.

A C₁₋₂₄alkoxycarbonyl radical is understood to be a straight-chain or branched C(O)O-C₁₋₂₄alkyl radical, preferably C(O)O-C₁₋₈alkyl radical, such as, for example, methoxy-, ethoxy-, n-propoxy-, isopropoxy-, n-butoxy-, sec-butoxy-, isobutoxy- or tert-butoxy-carbonyl. Examples of a C₆₋₂₄aryl- or C₇₋₂₄aralkyl-carbonyl radical are a phenylcarbonyl group and a benzylcarbonyl group, respectively.

In accordance with the invention, an "ammonium group" is understood to be a group -NR¹⁰⁶R¹⁰⁷R¹⁰⁸ wherein R¹⁰⁶, R¹⁰⁷ and R¹⁰⁸ are a hydrogen atom or an unsubstituted or substituted alkyl, aryl or aralkyl radical.

Examples of an (aromatic) heterocyclic ring (or ring system) are heterocycles having from 3 to 12 carbon atoms, for example 2-thienyl, 2-furyl, 1-pyrazolyl, 2-pyridyl, 2-thiazolyl, 2-oxazolyl, 2-imidazolyl, isothiazolyl, triazolyl or any other ring system consisting of thiophene, furan, pyrazole, thiazole, oxazole, imidazole, isothiazole, thiadiazole, triazole, pyndine or benzene rings unsubstituted or substituted by from 1 to 6 ethyl, methyl, ethylene and/or methylene substituents.

Examples of a saturated heterocyclic ring are heterocycloalkanes having from 4 to 6 carbon atoms which have one or two hetero atom(s) selected from nitrogen, oxygen and sulfur, for example tetrahydrofuran, tetrahydropyran, 1,4-dioxane, thiolane, piperidine, γ-butyrolactone, 5-aminopentanoic acid lactam or pyrrolidine.

Examples of a carbocyclic ring or ring system are cycloalkyls having from 5 to 12 carbon atoms, for example cyclopentane, cyclohexane or cycloheptane, or aromatic rings having from 6 to 24 carbon atoms, such as phenyl or naphthyl.

The definitions given hereinbefore for the radicals in formulae (I-1) and (I-2) apply to the entire invention, unless otherwise specified.

Me is preferably a transition metal of Sub-Group 9, 10 or 11, especially Cu, nickel or cobalt. R¹ and R⁴ preferably are a hydrogen atom or a C₁₋₄alkyl radical, especially a methyl or ethyl group.

R², R^{2'}, R³ and R^{3'} are preferably a hydrogen atom, a C₁₋₂₄alkyl radical which is unsubstituted or substituted by a phosphoric acid ester group, for example (PhO)(HO)P(O)O-; a phosphoric acid group or phosphoric acid ester group; or a phenyl group which is unsubstituted or substituted by a sulfonic acid group, or R² and R³ together, or R^{2'} and R^{3'} together, preferably form a double bond or a cycloalkyl ring or heterocyclic ring 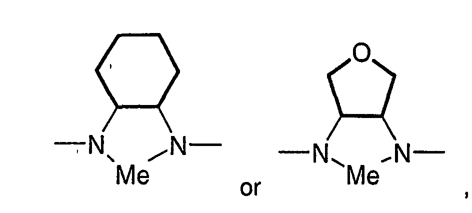 or R², R^{2'}, R³ and R^{3'} together preferably form one of the following aromatic heterocyclic rings 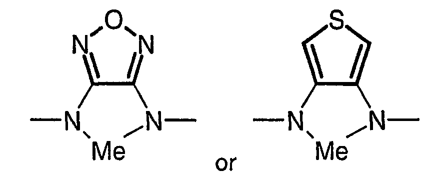 (N and Me are added for clarity reasons; the formed ring is highlighted in boldface).

R⁷, R^{7'}, R⁸ and R^{8'} are preferably a hydrogen atom or an unsubstituted or substituted C₁₋₈alkyl radical, a phenyl group or a benzyl group, or R⁷ and R^{7'} together, and/or R⁸ and R^{8'} together, form a carbonyl group or a thiocarbonyl group.

Preferred groups D¹ and D² have the following structures: 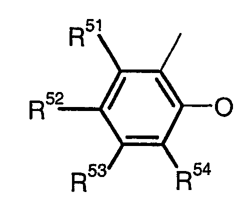 R⁵¹, R⁵², R⁵³, R⁵⁴ = H,
R⁵¹, R⁵³, R⁵⁴ = H, R⁵² = CH₃, OH, C₁₈H₃₇O, Br, Cl, 2,4,4-trimethylpentyl-1-oxymethyl or SO₃H,
R⁵¹, R⁵², R⁵⁴ = H, R⁵³ = CH₃, OH, C₄H₉O, C₈H₁₇O, C₁₂H₂₅O, 3,5,5-trimethylhexyloxy, 2-octyldodecyloxy, R^{x}O-[CH₂CH₂-O-]ₓ wherein R^{x} is a methyl group and x is 1, or R^{x} is an ethyl group and x is 2, or R^{x} is a butyl group and x is 2, or R^{x} is a methyl group and x is 3, (CH₃CH₂O)₂P(=O)O- or H₂NC(=O)CH₂O-,
R⁵¹, R⁵², R⁵³ = H, R⁵⁴ = OCH₃, CH₃ or OH,
R⁵¹, R⁵⁴ = H and R⁵² = SO₃H, R⁵³ = CH₃,
R⁵¹, R⁵³ = H and R⁵², R⁵⁴ = Cl, CH₃, OH or Br,
R⁵¹, R⁵³ = H and R⁵² = t-Bu, R⁵⁴ = CH₃,
R⁵¹, R⁵³ = H and R⁵² = Cl, R⁵⁴ = SO₃H,
R⁵¹, R⁵³ = H and R⁵² = Br, R⁵⁴ = SO₃H,
R⁵¹, R⁵³ = H and R⁵² = Cl, R⁵⁴ = OCH₃ or
R⁵¹, R⁵³ = H and R⁵² = SO₃H, R⁵⁴ = OCH₃ or CH₃, the preferred meanings of R⁶¹, R⁶², R⁶³ and R⁶⁴ being the same; 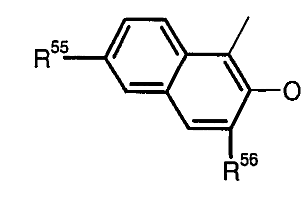 wherein
R⁵⁵ = H, R⁵⁶ = H, CO₂H, CO₂CH₃ or C(=O)NHPh; R⁵⁵ = Br, R⁵⁶= CO₂H; or R⁵⁵ = SO₃H, R⁵⁶ = H.

Preference is further given to R² and R³ together, or R^{2'} and R^{3'} together, forming a double bond and to R^{2'} and R^{3'}, or R² and R³, as the case may be, being cyano groups. Such compounds of formula (I) are coloured and make a contribution to the refractive index. The present invention accordingly relates also to the use, in the optical storage of information, of a metal complex of formula (I-1) wherein Me, D¹ and D², R⁵ and R⁶, R¹ and R⁴ are as defined hereinbefore, R² and R³ form a double bond and R^{2'} and R^{3'} are cyano groups.

The metal complex is preferably a compound of formula 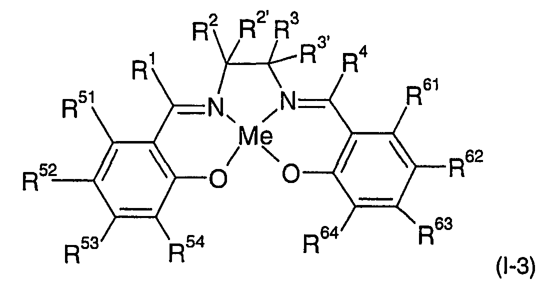 or 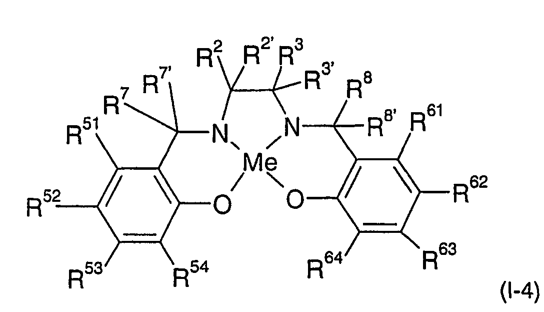 wherein
Me is Cu, Ni, Co or Zn, especially Cu,
R⁵¹, R⁵², R⁵³, R⁵⁴, R⁶¹, R⁶², R⁶³ and R⁶⁴ are a hydrogen atom, a halogen atom, such as fluorine, chlorine or bromine, an amino group, an alkylamino group, a dialkylamino group, a nitro group, a cyano group, a hydroxy group, an alkyl radical, a hydroxyalkyl radical, an alkoxy radical, an alkyl radical which is interrupted one or more times by -O- or by -S-, an acyl radical, a phenyl group, an ester group, such as a phosphonic acid, phosphoric acid or carboxylic acid ester group, a carboxamide group, a sulfamide group, a di- or tri-alkylammonium group, a carboxylic acid or sulfonic acid or phosphoric acid group or a salt thereof, or
R⁵¹ and R⁵² together, and/or R⁶¹ and R⁶² together, form an unsubstituted or substituted phenyl ring,
R¹ and R⁴ are each independently of the other a hydrogen atom or an unsubstituted or substituted alkyl radical, aryl radical or aralkyl radical,
R², R^{2'}, R³ and R^{3'} are a hydrogen atom, a cyano group or a C₁₋₈alkyl radical, or R² and R³ together, and/or R^{2'} and R^{3'} together, form a double bond, an unsubstituted or substituted cycloalkyl ring containing from 5 to 7 carbon atoms, especially a cyclohexane ring, or an unsubstituted or substituted aromatic ring containing from 5 to 7 carbon atoms, especially a phenyl ring,
R⁷, R^{7'}, R⁸ and R^{8'} are each independently of the others a hydrogen atom or an unsubstituted or substituted C₁₋₈alkyl radical, a phenyl group or a benzyl group, or
R⁷ and R^{7'} together, and/or R⁸ and R^{8'} together, form, each independently of the others, a carbonyl group or a thiocarbonyl group.

The metal complex is especially a compound of formula 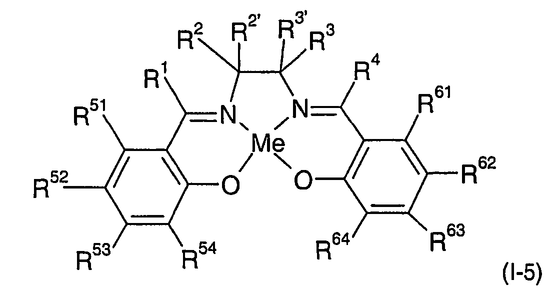 or 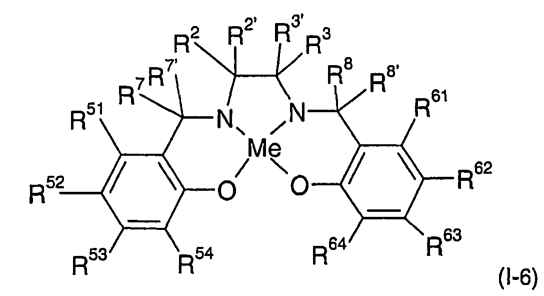 wherein
Me is Cu, Ni or Co; R⁵¹, R⁵², R⁵³, R⁵⁴, R⁶¹, R⁶², R⁶³ and R⁶⁴ are a hydrogen atom, a chlorine atom, a bromine atom, a hydroxy group, a C₁₋₈alkyl radical which may be unsubstituted or substituted by a di- or tri-alkylammonium group, a C₁₋₁₆alkoxy radical which may be unsubstituted or substituted by a di- or tri-alkylammonium group, a C₁₋₈alkyl radical which is interrupted one or more times by -O- or by -S- and which may be unsubstituted or substituted by a di- or tri-alkylammonium group; an ester group, such as a carboxylic acid ester -C(O)OR¹⁰¹, phosphonic acid ester -P(O)OR¹⁰²OR¹⁰³ or phosphoric acid ester -OP(O)OR¹⁰²OR¹⁰³, wherein R¹⁰¹ is an unsubstituted or substituted C₁₋₁₂alkyl, C₆₋₁₂aryl or C₇₋₁₂aralkyl radical, or a C₁₋₁₂alkyl radical which is interrupted one or more times by -O- or by -S- and which is unsubstituted or substituted by a hydroxy group, such as, for example, -C(O)OCH₂CH₂OCH₂CH₂OCH(CH₃)₂ or -C(O)OCH₂CH₂OCH₂CH₂OH, R¹⁰² and R¹⁰³ are a hydrogen atom, an unsubstituted or substituted C₁₋₁₂alkyl, C₆₋₁₂aryl or C₇₋₁₂aralkyl radical or a C₁₋₁₂alkyl radical which is interrupted one or more times by -O- or by -S- and which is unsubstituted or substituted by a hydroxy group, such as, for example, -C(O)OCH₂CH₂OCH₂CH₂OCH(CH₃)₂ or -C(O)OCH₂CH₂OCH₂CH₂OH; a carboxamide group, a sulfamide group or a di- or tri-alkylammonium group; R¹ and R⁴ are each independently of the other a hydrogen atom or an alkyl radical; R², R^{2'}, R³ and R^{3'} are a hydrogen atom, a cyano group or a C₁₋₈alkyl radical or pairs of the radicals R² and R^{2'} together and R³ and R^{3'} together form a double bond or a cyclohexane ring, at least one of the radicals R⁵¹, R⁵², R⁵³, R⁵⁴, R⁶¹, R⁶², R⁶³ and R⁶⁴ being a di- or tri-alkylammonium group or being substituted by a di- or tri-alkylammonium group;
R⁷, R^{7'}, R⁸ and R^{8'} are each independently of the others a hydrogen atom or an unsubstituted or substituted C₁₋₈alkyl radical, a phenyl group or a benzyl group, or
R⁷ and R^{7'} together, and/or R⁸ and R^{8'} together, form, each pair independently of the other, a carbonyl group or a thiocarbonyl group, so that they can function as a cation to the oxonol dyes according to the invention.

An example of such an ion pair is the composition M-11 indicated below:

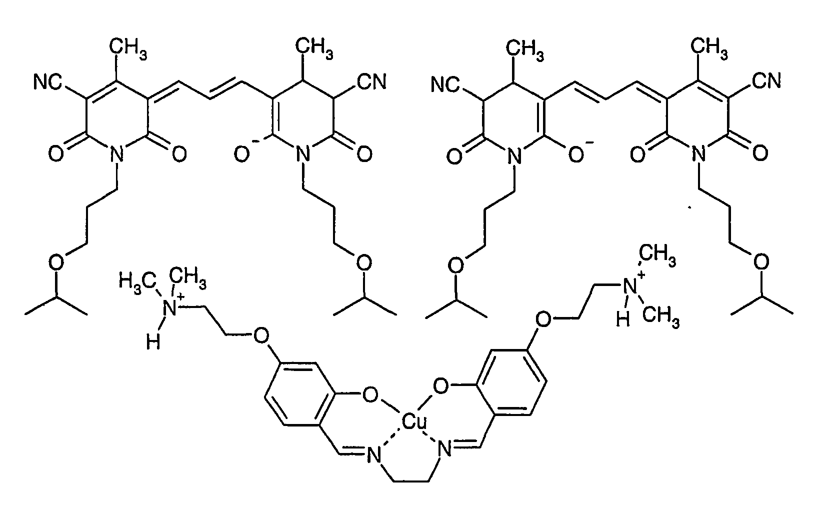

Where the ammonium groups do not function as a cation to the oxonol dyes according to the invention, examples of anions are inorganic or organic anions, such as carboxylates, sulfonates, phenolates, phosphonates, Cl⁻, Br⁻, I⁻ and ClO₄ ⁻.

Special preference is given to compounds of formulae (I-5) and (I-6) wherein Me is Cu, Ni or Co; R⁵¹, R⁵², R⁵³, R⁵⁴, R⁶¹, R⁶², R⁶³ and R⁶⁴ are a hydrogen atom, a chlorine or bromine atom, an amino group, a C₁₋₄alkylamino group, a di(C₁₋₄alkyl)amino group, a cyano group, a hydroxy group, a C₁₋₄alkyl radical, a C₁₋₁₆alkoxy radical which may be unsubstituted or substituted by a tri(C₁₋₄alkyl)ammonium group; a radical R¹¹⁰O-[CH₂CH₂-O-]ₓ₁ wherein R¹¹⁰ is a C₁₋₄alkyl radical and X1 is a number from 1 to 4; a carboxylic acid ester group, a phosphoric acid ester group, a carboxamide group, a sulfamide group, a tri(C₁₋₄alkyl)ammonium group, a carboxylic acid or sulfonic acid or phosphoric acid group or a salt thereof, or R⁵¹ and R⁵² together, and/or R⁶¹ and R⁶² together, form an unsubstituted or substituted phenyl ring; R¹ and R⁴ are each independently of the other a hydrogen atom or a C₁₋₄alkyl radical; R² and R³ are a hydrogen atom or a C₁₋₄alkyl radical or together form a double bond or a cyclohexane ring, especially compounds of formula (1-5) wherein the substituents are as defined in Table 1, which follows:

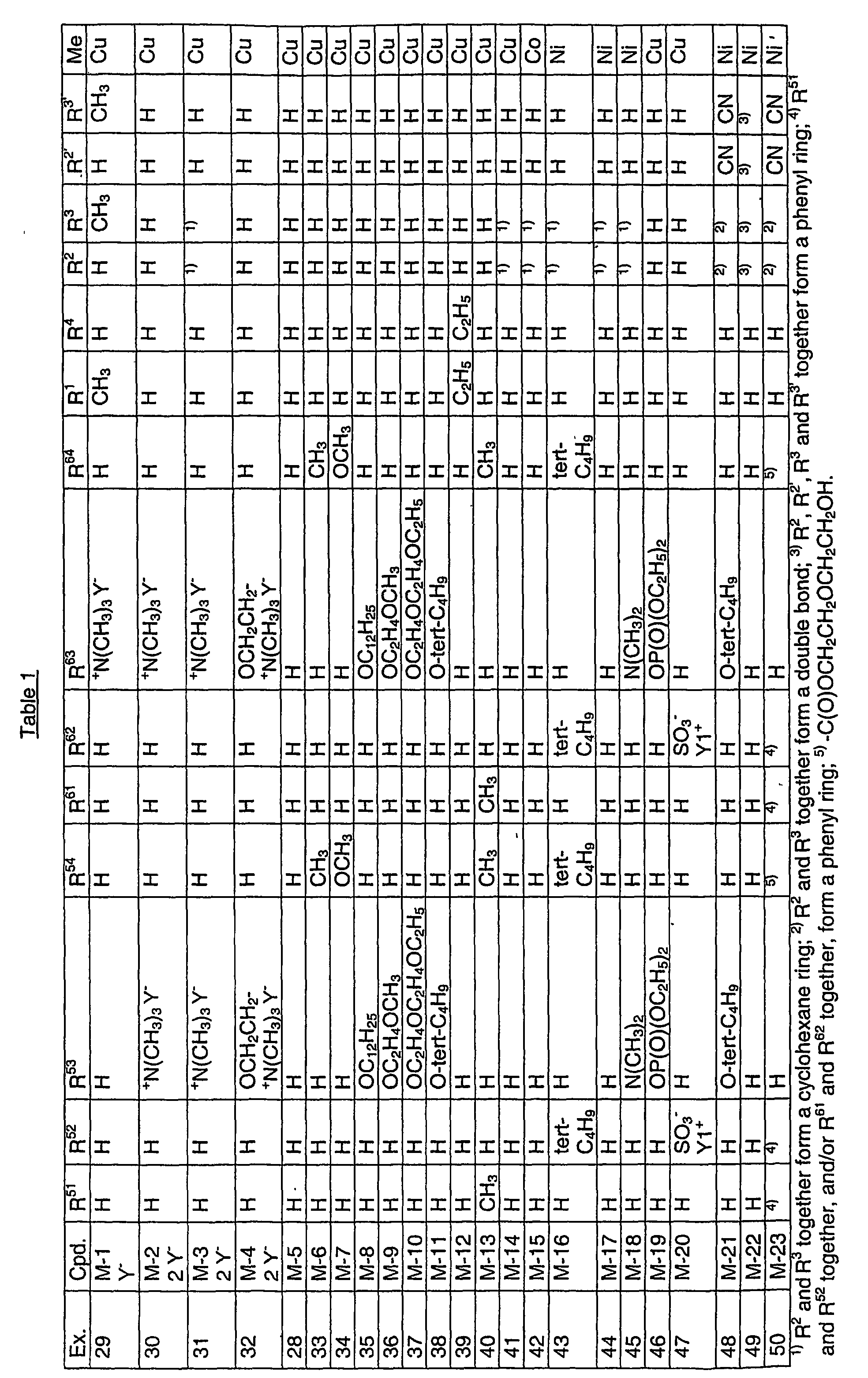

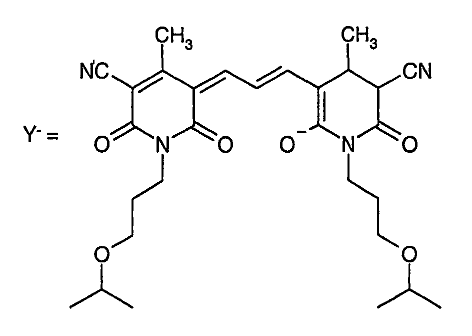

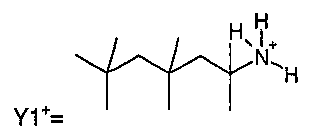

(idealised representation of Primene 81R® (Rohm & Haas Company, mixture of C₁₂₋₁₄amine isomers)

The metal complexes of formula (I) described hereinbefore can be prepared in accordance with, or in analogy to, methods described in EP-A-200 843, EP-A-162 811, EP-A-362 139 and EP-A-436 470.

In accordance with the invention, oxonol dyes are understood to be compounds of the following general formulae 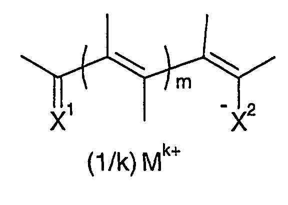 and 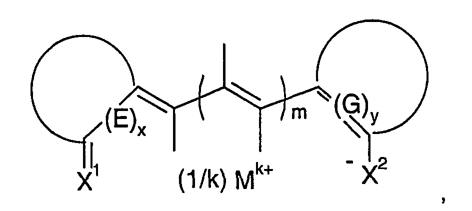 wherein X¹ is =O, =NR⁹ or =C(CN)₂, R⁹ being a substituent; X² is -O, -NR⁹ or -C(CN)₂, R⁹ being a substituent; E and G are in each case a group of atoms necessary for the formation of a chain having conjugated double bonds, x and y are 0 or 1, M^{k+} is an organic or inorganic cation, k is an integer from 1 to 10, and m is 0, 1, 2, 3 or 4, which means that, in addition to true oxonol dyes (X¹, X² = O), derivatives of oxonol dyes (X¹ and/or X² ≠ O) are also included.

More specifically, the oxonol dye is a compound of formula 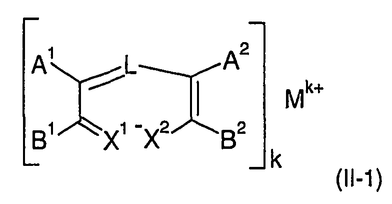 or 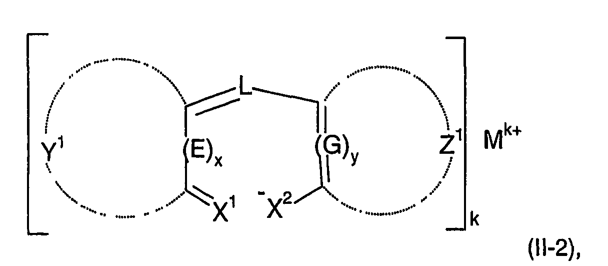 wherein A¹, A², B¹ and B² are in each case a substituent; Y¹ and Z¹ are in each case a group of atoms necessary for the formation of a carbocyclic or heterocyclic ring; E and G are in each case a group of atoms necessary for the formation of a chain having conjugated double bonds; X¹ is =O, =NR⁹ or =C(CN)₂, R⁹ being a substituent; X² is -O, -NR⁹ or -C(CN)₂, R⁹ being a substituent; L is a methine group, which may be substituted, or a group by means of which a polymethine group is completed, it being possible for 3, 5 or 7 methine groups to be connected in order to form a chain having conjugated double bonds, which chain may be substituted; M^{k+} is an organic or inorganic cation, it also being possible for the metal complex of formula (I-1) or (I-2) to be the cation provided it carries one or more positive charge(s); x and y are 0 or 1, and k is an integer from 1 to 10, with preference being given to oxonol dyes of formula (II-2) over those of formula (II-1).

Examples of substituents denoted by the radicals A¹, A², B¹ and B² are:
a straight-chain or branched C₁₋₂₄alkyl radical, preferably C₁₋₈alkyl radical, which may be unsubstituted or substituted, such as, for example, methyl, ethyl, n-propyl, isopropyl, n-butyl, sec-butyl, isobutyl, tert-butyl, cyclobutyl, n-pentyl, 2-pentyl, 3-pentyl, 2,2-dimethylpropyl, hexyl, heptyl, 2,4,4-trimethylpentyl, 2-ethylhexyl or octyl, ethoxycarbonylethyl, cyanoethyl, diethylaminoethyl, chloroethyl, acetoxyethyl and trifluoromethyl,
a straight-chain or branched C₂₋₂₄alkenyl radical, preferably C₂₋₈alkenyl radical, which may be unsubstituted or substituted, such as, for example, vinyl, allyl, 2-propen-2-yl, 2-buten-1-yl, 3-buten-1-yl, 1,3-butadien-2-yl, 2-penten-1-yl, 3-penten-2-yl, 2-methyl-1-buten-3-yl, 2-methyl-3-buten-2-yl, 3-methyl-2-buten-1-yl, 1,4-pentadien-3-yl, or any isomer of hexenyl, octenyl, nonenyl, decenyl, dodecenyl, tetradecenyl, hexadecenyl, octadecenyl, icosenyl, henicosenyl, docosenyl, tetracosenyl, hexadienyl, octadienyl, nonadienyl, decadienyl, dodecadienyl, tetradecadienyl, hexadecadienyl, octadecadienyl or icosadienyl,
a straight-chain or branched C₁₋₂₄alkoxy radical, that is to say O-C₁₋₂₄alkyl, such as, for example, methoxy, ethoxy, n-propoxy, isopropoxy, n-butoxy, sec-butoxy, isobutoxy, tert-butoxy, n-pentyloxy, 2-pentyloxy, 3-pentyloxy, 2,2-dimethylpropoxy, n-hexyloxy, n-heptyloxy, n-octyloxy, 1,1,3,3-tetramethylbutoxy or 2-ethylhexyloxy,
a straight-chain or branched C₁₋₂₄alkylthio radical, that is to say S-C₁₋₂₄alkyl radical,
examples of a C₁₋₂₄alkylthio being the examples indicated for a C₁₋₂₄alkoxy radical wherein the oxygen atom of the ether bond is replaced by a sulfur atom,
a C₆₋₂₄aryloxy radical, that is to say O-C₆₋₂₄aryl, such as, for example, phenoxy or 4-methoxyphenyl,
a C₆₋₂₄arylthio radical, that is to say S-C₆₋₂₄aryl, such as, for example, phenylthio or 4-methoxyphenylthio,
a straight-chain or branched C₂₋₂₄alkynyl radical, preferably C₂₋₈alkynyl radical, which may be unsubstituted or substituted, such as, for example, ethynyl, 1-propyn-3-yl, 1-butyn-4-yl, 1-pentyn-5-yl, 2-methyl-3-butyn-2-yl, 1,4-pentadiyn-3-yl, 1,3-pentadiyn-5-yl, 1-hexyn-6-yl, cis-3-methyl-2-penten-4-yn-1-yl, trans-3-methyl-2-penten-4-yn-1-yl, 1,3-hexadiyn-5-yl, 1-octyn-8-yl, 1-nonyn-9-yl, 1-decyn-10-yl or 1-tetracosyn-24-yl,
a C₂₋₁₈acyl radical, preferably C₂₋₈acyl radical, which is unsubstituted or substituted, such as, for example, acetyl, propionyl, butanoyl or chloroacetyl,
a C₁₋₂₄alkylsulfonyl radical, preferably C₁₋₈alkylsulfonyl radical, or C₆₋₂₄arylsulfonyl radical, preferably C₆₋₈arylsulfonyl radical, which may be substituted, such as, for example, p-toluenesulfonyl,
a C₃₋₂₄cycloalkyl radical, such as, for example, cyclopropyl, cyclopropyl-methyl, cyclobutyl, cyclopentyl, cyclohexyl, cyclohexyl-methyl, trimethylcyclohexyl, thujyl, norbornyl, bornyl, norcaryl, caryl, menthyl, norpinyl, pinyl, 1-adamantyl, 2-adamantyl, 5α-gonyl or 5ξ-pregnyl,
a C₆₋₂₄aryl radical, preferably C₆₋₁₀aryl radical, such as, for example, phenyl, 4-methylphenyl, 4-methoxyphenyl, naphthyl, biphenylyl, 2-fluorenyl, phenanthryl, anthryl or terphenylyl,
a C₇₋₂₄aralkyl radical, preferably C₇₋₁₂aralkyl radical, which may be substituted, such as, for example, benzyl, 2-benzyl-2-propyl, β-phenethyl, 9-fluorenyl, α,α-dimethylbenzyl, ω-phenylbutyl, ω-phenyl-octyl, ω-phenyl-dodecyl or 3-methyl-5-(1',1',3',3'-tetramethyl-butyl)-benzyl,
a straight-chain or branched C₁₋₂₄alkoxycarbonyl radical, that is to say C(O)O-C₁₋₂₄alkyl, preferably C(O)O-C₁₋₈alkyl, such as, for example, methoxy-, ethoxy-, n-propoxy-, isopropoxy-, n-butoxy-, sec-butoxy-, isobutoxy- or tert-butoxy-carbonyl,
a C₆₋₂₄aryloxycarbonyl radical, that is to say C(O)O-C₇₋₂₄aryl, preferably C(O)O-C₇₋₁₂aryl, such as, for example, phenoxycarbonyl, 4-methylphenoxycarbonyl or 4-methoxyphenoxycarbonyl,
a C₂₋₁₈acyloxy radical, preferably C₂₋₈acyloxy radical, which may be unsubstituted or substituted, such as, for example, acetoxy, ethylcarbonyloxy, cyclohexylcarbonyloxy, benzoyloxy or chloroacetoxy,
a C₁₋₁₈carbamoyl radical, preferably C₁₋₈carbamoyl radical, which may be unsubstituted or substituted, such as, for example, carbamoyl, methylcarbamoyl, ethylcarbamoyl, n-butylcarbamoyl, tert-butylcarbamoyl, dimethylcarbamoyloxy, morpholinocarbamoyl or pyrrolidinocarbamoyl,
a C₂₋₁₈carbamoyloxy radical, preferably C₂₋₈carbamoyloxy radical, which may be unsubstituted or substituted, such as, for example, methylcarbamoyloxy or diethylcarbamoyloxy,
a sulfamoyl group having from 0 to 18, preferably from 0 to 8, carbon atoms, which may be unsubstituted or substituted, such as, for example, sulfamoyl, methylsulfamoyl or phenylsulfamoyl,
a heterocyclic ring having from 3 to 12 carbon atoms, for example 2-thienyl, 2-furyl, 1-pyrazolyl, 2-pyridyl, 2-thiazolyl, 2-oxazolyl, 2-imidazolyl, isothiazolyl, triazolyl and any other ring system consisting of thiophene, furan, pyrazole, thiazole, oxazole, imidazole, isothiazole, thiadiazole, triazole, pyridine or benzene rings unsubstituted or substituted by from 1 to 6 ethyl, methyl, ethylene and/or methylene substituents,
a halogen atom, such as fluorine, chlorine or bromine,
a hydroxy group, a nitro group, a cyano group or a carboxy group, or an amino group -NR¹⁰⁶R¹⁰⁷ wherein R¹⁰⁶ and R¹⁰⁷ are each independently of the other a hydrogen atom, a C₁₋₂₄alkyl radical, C₁₋₂₄alkylcarbonyl radical, C₁₋₂₄alkoxycarbonyl radical, C₆₋₂₄aryl radical, C₇₋₂₄aralkyl radical, C₆₋₂₄arylcarbonyl radical, a C₆₋₂₄aryloxycarbonyl radical, C₆₋₂₄arylthiocarbonyl radical, such as, for example, amino, methylamino, ethylamino, dimethylamino, diethylamino, phenylamino, methoxycarbonylamino, acetylamino, ethylcarbonylamino, cyclohexylcarbonylamino, benzoylamino or chloroacetylamino, or R¹⁰⁶ and R¹⁰⁷ together form a five- to seven-membered heterocyclic ring, such as morpholino, piperidino or pyrrolidino.

When a radical may be unsubstituted or substituted, examples of substituents are those substituents mentioned above which may be denoted by the radicals A¹, A², B¹ and B². X¹ is =O, =NR⁹ or =C(CN)₂, preferably =O, and X² is -O, -NR⁹ or -C(CN)₂, preferably -O, examples of a substituent R⁹ being the examples given above for A¹, A², B¹ and B².

The group =L- can in general be represented by the following formula: 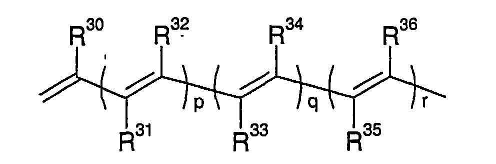 wherein R³⁰, R³¹, R³², R³³, R³⁴, R³⁵ and R³⁶ are each independently of the others a hydrogen atom, a halogen atom, such as fluorine, chlorine or bromine, an unsubstituted or substituted C₁₋₈alkyl radical, for example a C₁₋₈perfluoroalkyl radical such as trifluoromethyl, an unsubstituted or substituted C₆₋₁₀aryl radical, such as phenyl, an unsubstituted or substituted C₇₋₁₀aralkyl radical, such as benzyl or p-methoxybenzyl, or a heterocyclic ring having from 2 to 10 carbon atoms, an unsubstituted or substituted C₁₋₄alkoxy radical, such as a methoxy group, a cycloalkyloxy group, such as a cyclohexyloxy group, an amino group -NR¹⁰⁶R¹⁰⁷, R¹⁰⁶ and R¹⁰⁷ being as defined hereinbefore, an alkylcarbonyloxy radical, such as an acetoxy group, an alkylthio radical, such as a methylthio group, an arylthio radical, such as a phenylthio group, a cyano group or a nitro group, or
two substituents R³⁰, R³¹, R³², R³³, R³⁴, R³⁵ and R³⁶, which are located in 1,3-positions relative to one another, together form an unsubstituted or substituted carbocyclic ring having 5 or 6 carbon atoms, such as cyclohexenyl or cyclopentenyl, which may be unsubstituted or substituted by one or more C₁₋₄alkyl and/or C₁₋₄alkoxy radicals,
p, q and r are 0 or 1.

L is preferably selected from the following group: 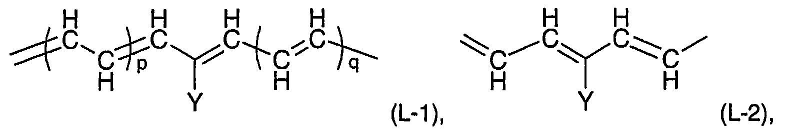 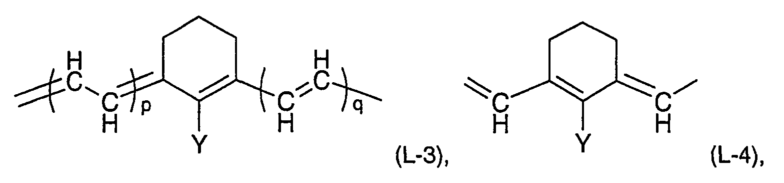 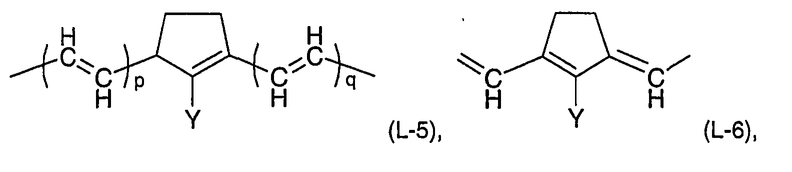 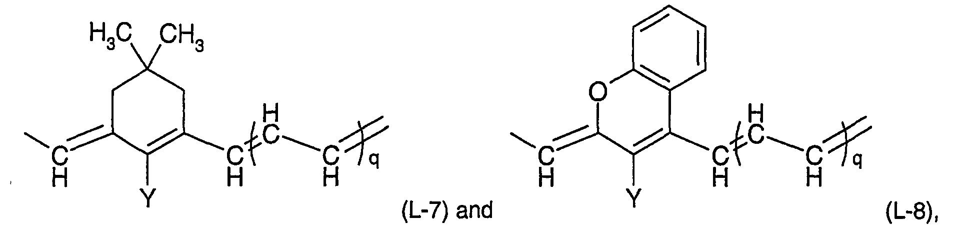 wherein p and q are each independently of the other 0 or 1, Y is a hydrogen atom, an unsubstituted or substituted C₁₋₄alkyl radical, such as a methyl or trifluoromethyl group, an unsubstituted or substituted C₇₋₁₂aralkyl radical, such as a benzyl or p-methoxybenzyl group, an unsubstituted or substituted C₆₋₁₂aryl radical, such as a phenyl, m-chlorophenyl or naphthyl group, an unsubstituted or substituted C₁₋₄alkoxy radical, such as a methoxy group, a C₅₋₇cycloalkyloxy group, such as a cyclohexyloxy group, a disubstituted amino group -NR¹⁰⁶R¹⁰⁷, R¹⁰⁶ and R¹⁰⁷ being as defined hereinbefore except for a hydrogen atom, such as a dimethyl, diphenyl or methylphenyl group, morpholino, imidazolino or ethoxycarbonylpiperidino group, an alkylcarbonyloxy radical, such as an acetoxy group, an alkylthio radical, such as a methylthio group, an arylthio radical, such as a phenylthio group, a cyano group, a nitro group, or a halogen atom, such as a fluorine, chlorine or bromine atom. Special preference is given to Y being a hydrogen atom, a chlorine atom or a p-methylphenyl group and L being a group L-2 or L-4.

Examples of a carbocyclic or heterocyclic ring are as follows: 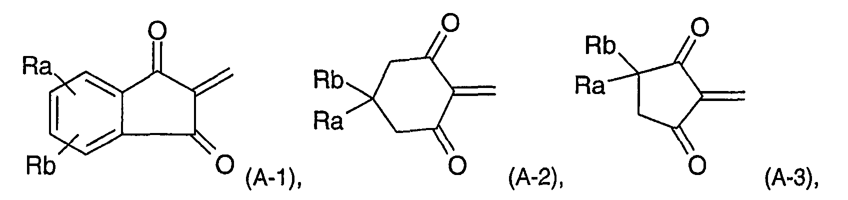 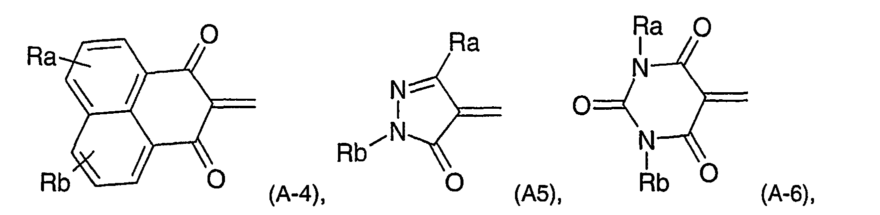 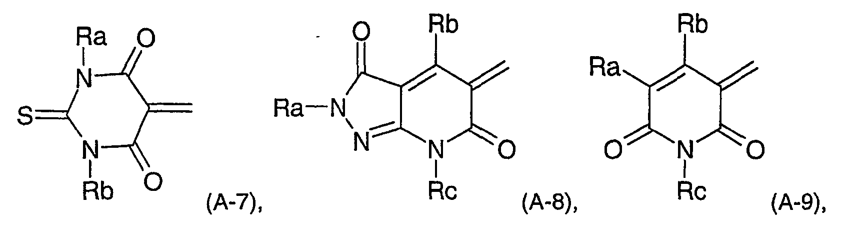 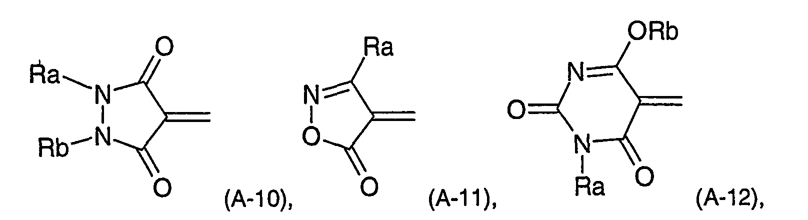 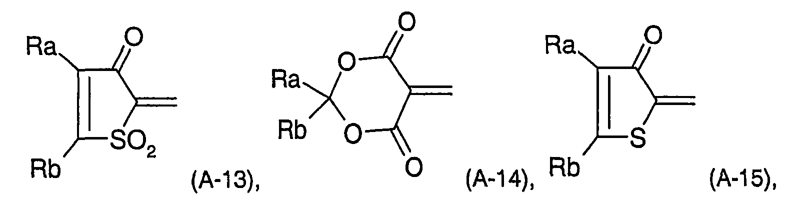 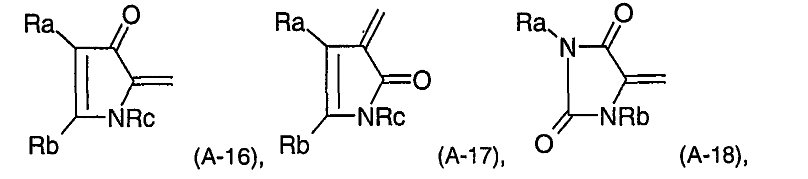 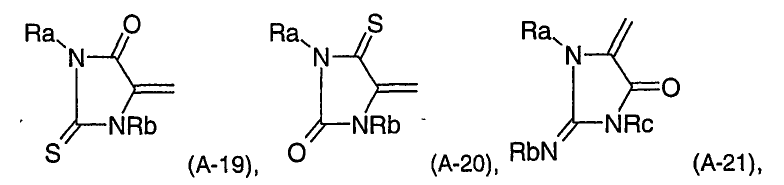 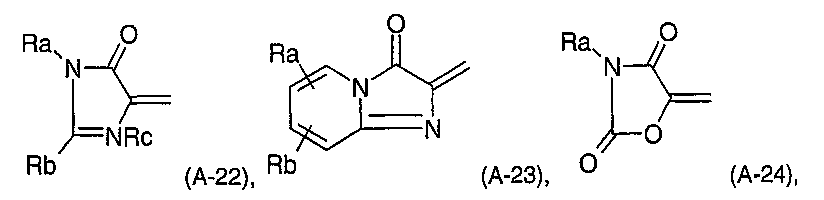 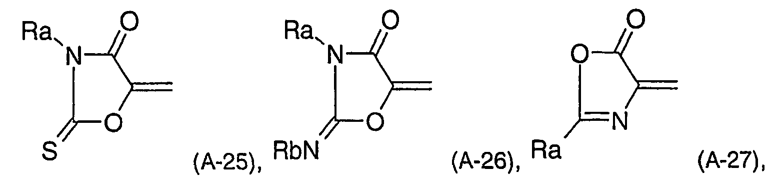 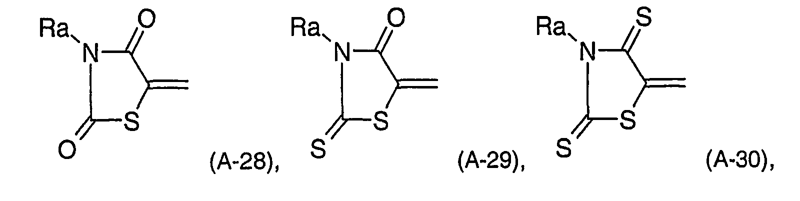 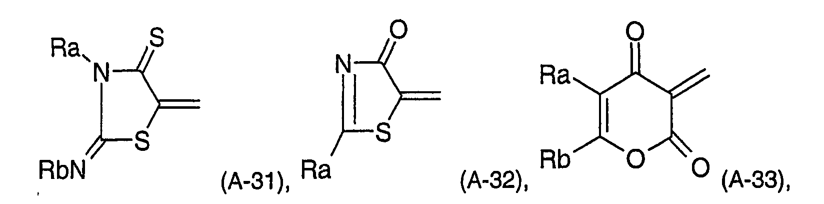 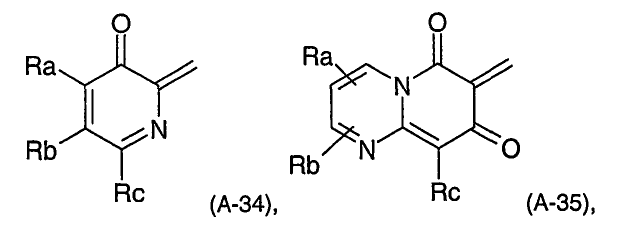 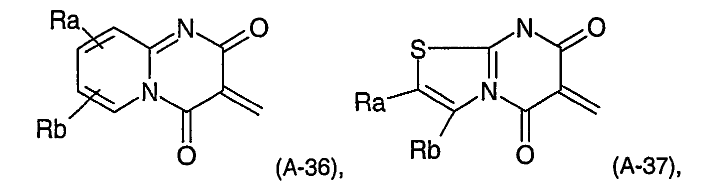 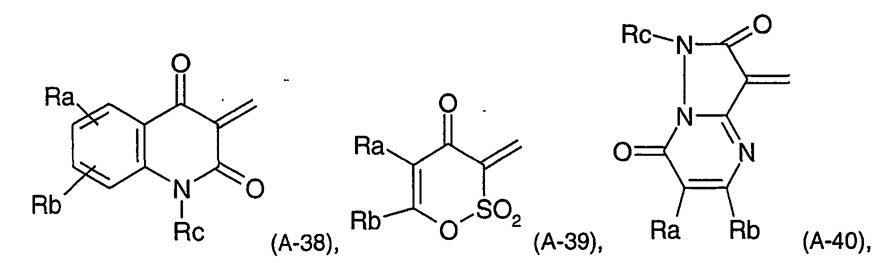 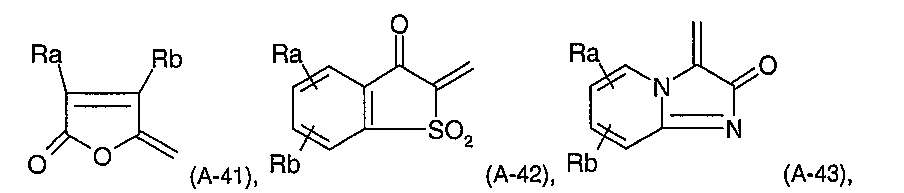 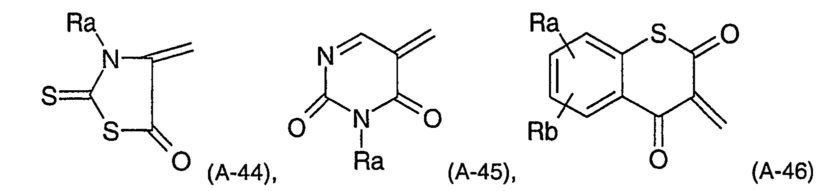 and 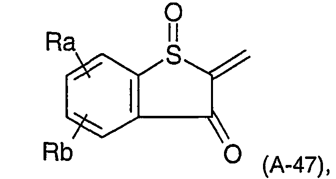 wherein Ra, Rb and Rc may, each independently of the others, be as defined hereinbefore for A¹, A², B¹ and B².

The rings comprising Y¹, (E)^{x} and X¹, and Z¹, (G)^{y} and X² in formula II-2 may be the same or different. For example, when synthesis starts from two differently substituted groups (A-9) and (A-9'), three compounds can, in principle, be formed, namely compounds having two groups (A-9) or two groups (A-9') and compounds having both an (A-9) and an (A-9') group. Mixtures of that kind may also be used as oxonol dyes in accordance with the invention. The expression "at least one oxonol dye" may include any number of oxonol dyes but generally means from 1 to 5, preferably 1, 2 or 3, oxonol dye(s).

Of the groups (A-1) to (A-47) mentioned hereinbefore, preference is given to the groups (A 5), (A-6), (A-7), (A-11) and (A-14), and special preference to (A-9).

M^{k+} is an organic or inorganic cation. Examples of cations that are represented by M^{k+} are hydrogen cations, metal cations, such as a sodium, potassium, lithium, calcium, iron and copper ion, a metal complex cation, an ammonium cation, including cationic dyes and a pyridinium cation, an oxonium, sulfonium, phosphonium, selenium and iodonium ion. In accordance with the invention, the cation is generally selected from ammonium cations, cationic dyes and metal complexes of formulae (I-1), (I-2), (I-3), (I-4), (I-5) and (I-6) that are substituted by a cationic group.

In principle, any cationic dye may be used. For DVD, cationic dyes having an absorption maximum in the range from 550 to 620 nm are preferred and, for DVR, cationic dyes having an absorption maximum at less than 450 nm are preferred. Examples of such cationic dyes are methine dyes, especially cyanine dyes, such as zero-, mono-, di-, tri- and penta-methine cyanine dyes and also higher vinylogous cyanine dyes (for example, see Ullmanns Enzyklopädie der Technischen Chemie, 4th Edition (1978), Volume 16, p. 650-656; 5th Edition, Volume A 16, 509-517), triaryl- and diaryl-methane dyes, such as diphenyl- and triphenyl-methane dyes and xanthene dyes (for example, see Ullmanns Enzyklopädie der Technischen Chemie, 4th Edition (1978), Volume 23, p. 387-388, 389-405 and 408-415; 5th Edition, Volume A 27, p. 186-188, 189-204 and 209-218) and azine dyes, such as phenazine, oxazine and thiazine dyes (for example, see Ullmanns Enzyklopädie der Technischen Chemie, 5th Edition (1985), Volume A3, p. 216-223, 224-229 and 229-235).

In accordance with the invention, preference is given to the polymethine dyes of formula 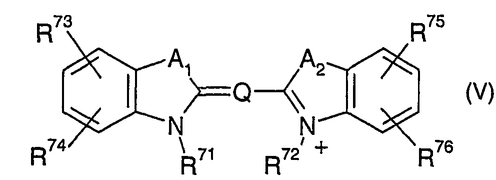 described in WO98/28737, wherein A₁ and A₂ are each independently of the other C(CH₃)₂, O, S, Se or unsubstituted or C₁-C₅alkyl- or benzyl-substituted CH=CH;
Q is CR⁸⁵, CR⁸⁵-CR⁸⁶=CR⁸⁷ or CR⁸⁵-CR⁸⁶=CR⁸⁷-CR⁸⁸=CR⁸⁹;
R⁷¹ and R⁷² are each independently of the other C₁₋₁₂alkyl or C₂₋₁₂alkenyl each unsubstituted or substituted one or more times by halogen, hydroxy, C₁₋₁₂alkoxy or by cyano, or C₆₋₁₂aryl or C₇₋₁₂aralkyl each unsubstituted or substituted by a radical R⁷⁷ or by two radicals R⁷⁷ and R⁷⁸; R⁷³, R⁷⁴, R⁷⁵ and R⁷⁶ are each independently of the others hydrogen, halogen, nitro, cyano, hydroxy, amino, NHR⁷⁹, NR⁷⁹R⁸⁰, CONH₂, CONHR⁷⁹, CONR⁷⁹R⁸⁰, SO₂C₁-C₁₂alkyl, SO₂NH₂, SO₂NHR⁷⁹, SO₂NR⁷⁹R⁸⁰, COOH, COOR⁸¹, NHCOR⁸², NR⁸¹COR⁸², NHCOOR⁸², NR⁸¹COOR⁸², or unsubstituted or mono- or poly-halo-, -hydroxy- or -cyano-substituted C₁₋₁₂alkyl, C₁₋₁₂alkylthio or C₁₋₁₂alkoxy; or
R⁷³ and R⁷⁴ together, and/or R⁷⁵ and R⁷⁶ together, in pairs, are 1,4-buta-1,3-dienylene unsubstituted or substituted by a radical R⁸³ or by two radicals R⁸³ and R⁸⁴ so that a naphthyl is formed together with the common phenyl;
R⁸⁵, R⁸⁶, R⁸⁷, R⁸⁸ and R⁸⁹ are each independently of the others hydrogen, halogen, C₁₋₁₂alkoxy, unsubstituted or mono- or poly-halo-, -hydroxy- or -cyano-substituted C₁₋₁₂alkyl, C₆-C₁₂aryl, C₇-C₁₂aralkyl or NR⁷⁹R⁸⁰; or
R⁸⁵ and R⁸⁷ together, R⁸⁶ and R⁸⁸ together, or R⁸⁷ and R⁸⁹ together, in pairs, are ethylene, ethylidene, propylene, propylidene, o-phenylene, α,2-benzylidene or 1,8-naphthylidene each unsubstituted or substituted by a radical R⁸³ or by two radicals R⁸³ and R⁸⁴;
R⁷⁷ and R⁷⁸ are each independently of the other hydrogen, halogen, nitro, cyano, hydroxy, amino, NHR⁷⁹, NR⁷⁹R⁸⁰, CONH₂, CONHR⁷⁹, CONR⁷⁹R⁸⁰, SO₂C₁₋₁₂alkyl, SO₂NH₂, SO₂NHR⁷⁹, SO₂NR⁷⁹R⁸⁰, COOH, COOR⁸¹, NHCOR⁸², NR⁸¹COR⁸², NHCOOR⁸², NR⁸¹COOR⁸², or
C₁₋₁₂alkyl, C₁₋₁₂alkylthio or C₁₋₁₂alkoxy each unsubstituted or substituted one or more times by halogen, hydroxy or by cyano;
R⁷⁹ and R⁸⁰ are each independently of the other C₁₋₁₂alkyl or C₂₋₁₂alkenyl each unsubstituted or substituted one or more times by halogen, hydroxy or by C₁₋₁₂alkoxy, or C₆-C₁₂aryl or C₇-C₁₂aralkyl each unsubstituted or substituted by a radical R⁸³ or by two radicals R⁸³ and R⁸⁴; or
R⁷⁹ and R⁸⁰ are, together with the common N, pyrrolidine, piperidine, piperazine or morpholine each unsubstituted or substituted one to four times by C₁₋₄alkyl, or carbazole, phenoxazine or phenothiazine each unsubstituted or substituted by a radical R⁸³ or by two radicals R⁸³ and R⁸⁴;
R⁸¹ and R⁸² are each independently of the other C₁₋₁₂alkyl or C₂₋₁₂alkenyl each unsubstituted or substituted one or more times by halogen, hydroxy or by C₁₋₁₂alkoxy, or C₆-C₁₂aryl or C₇-C₁₂aralkyl each unsubstituted or substituted by a radical R⁸³ or by two radicals R⁸³ and R⁸⁴;
R⁸³ and R⁸⁴ are each independently of the other halogen, nitro, cyano, hydroxy, NR⁹⁰R⁹¹, CONH₂, CONHR⁹⁰, CONR⁹⁰R⁹¹, SO₂C₁₋₁₂alkyl, SO₂NR⁹⁰R⁹¹, COOH, COOR⁹², NHCOR⁹³, NHCOOR⁹³, NR⁹²COR⁹³, NR⁹²COOR⁹³, or C₁₋₁₂alkyl or C₁₋₁₂alkoxy each unsubstituted or substituted one or more times by halogen;
R⁹⁰ and R⁹¹ are each independently of the other hydrogen, C₆₋₁₂aryl, C₇₋₁₂aralkyl; or C₁₋₁₂alkyl or C₂₋₁₂alkenyl each unsubstituted or substituted one or more times by halogen, hydroxy or by C₁₋₁₂alkoxy; or I
R⁹⁰ and R⁹¹ are, together with the common N, pyrrolidine, piperidine, piperazine or morpholine each unsubstituted or substituted one to four times by C₁₋₄alkyl; or carbazole, phenoxazine or phenothiazine; and
R⁹² and R⁹³ are each independently of the other C₆₋₁₂aryl, C₇₋₁₂aralkyl, or C₁₋₁₂alkyl or C₂₋₁₂alkenyl each unsubstituted or substituted one or more times by halogen, hydroxy or by C₁₋₁₂alkoxy. Preference is given to the compounds CY-1 - CY-24 described in Examples A1 to A24 of WO98/28737.

Examples of preferred compositions wherein the cation is a cyanine dye are the compositions D-50 and D-51 described in Examples 25 and 26: 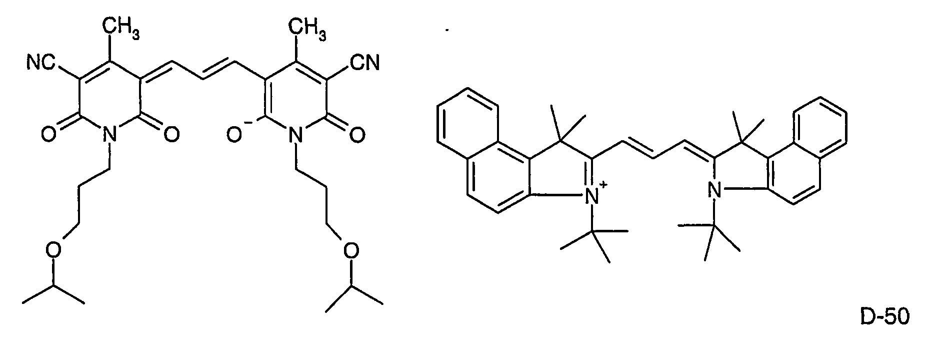 and

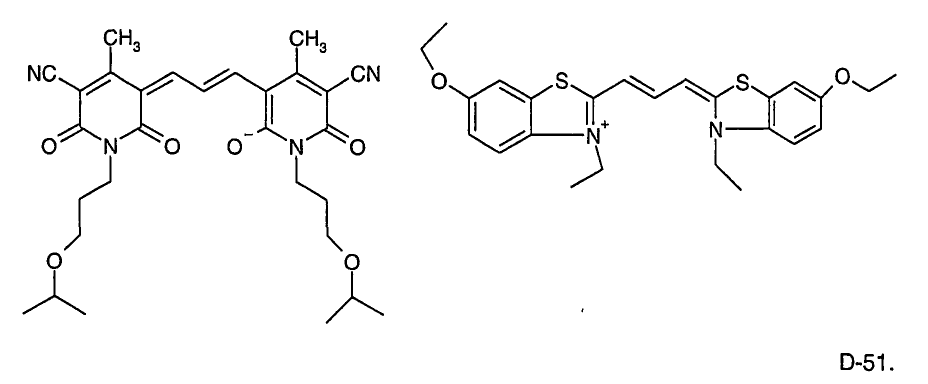

In principle, those metal complexes of formula (I-1) or (I-2) that are substituted by one or more cationic groups, especially ammonium groups, are suitable as the cation M^{k+}.

M^{k+} may also be an ammonium cation of formula ⁺NR¹¹R¹²R¹³R¹⁴, wherein R¹¹, R¹², R¹³ and R¹⁴ are a hydrogen atom, a straight-chain or branched C₁₋₃₆alkyl radical, preferably C₁₋₁₆alkyl radical, which may be unsubstituted or substituted, such as, for example, methyl, ethyl, n-propyl, isopropyl, n-butyl, sec-butyl, isobutyl, tert-butyl, cyclobutyl, n-pentyl, 2-pentyl, 3-pentyl, 2,2-dimethylpropyl, hexyl, heptyl, 2,4,4-trimethylpentyl, 2-ethylhexyl or octyl, ethoxycarbonylethyl, cyanoethyl, diethylaminoethyl, chloroethyl, acetoxyethyl and trifluoromethyl,
a straight-chain or branched C₂₋₃₆alkenyl radical, preferably C₂₋₁₆alkenyl radical, which may be unsubstituted or substituted, such as, for example, vinyl, allyl, 2-propen-2-yl, 2-buten-1-yl, 3-buten-1-yl, 1,3-butadien-2-yl, 2-penten-1-yl, 3-penten-2-yl, 2-methyl-1-buten-3-yl, 2-methyl-3-buten-2-yl, 3-methyl-2-buten-1-yl, 1,4-pentadien-3-yl, or any isomer of hexenyl, octenyl, nonenyl, decenyl, dodecenyl, tetradecenyl, hexadecenyl, octadecenyl, icosenyl, henicosenyl, docosenyl, tetracosenyl, hexadienyl, octadienyl, nonadienyl, decadienyl, dodecadienyl, tetradecadienyl, hexadecadienyl, octadecadienyl or icosadienyl,
a C₂₋₃₆acyl radical, preferably C₂₋₁₆acyl radical, which may be unsubstituted or substituted, such as, for example, acetyl, propionyl, butanoyl or chloroacetyl,
a C₁₋₂₄alkylsulfonyl radical, preferably C₁₋₁₆alkylsulfonyl radical, or C₆₋₂₄arylsulfonyl radical, preferably C₆₋₈arylsulfonyl radical, each of which may be substituted, such as, for example, p-toluenesulfonyl,
a C₃₋₂₄cycloalkyl radical, which may be substituted, such as, for example, cyclopropyl, cyclopropyl-methyl, cyclobutyl, cyclopentyl, cyclohexyl, cyclohexyl-methyl, trimethylcyclohexyl, thujyl, norbornyl, bornyl, norcaryl, caryl, menthyl, norpinyl, pinyl, 1-adamantyl, 2-adamantyl, 5α-gonyl or 5ξ-pregnyl,
a C₆₋₂₄aryl radical, preferably C₆₋₁₀aryl radical, which may be substituted, such as, for example, phenyl, 4-methylphenyl, 4-methoxyphenyl, naphthyl, biphenylyl, 2-fluorenyl, phenanthryl, anthryl or terphenylyl,
a C₇₋₂₄aralkyl radical, preferably C₇₋₁₂aralkyl radical, which may be substituted, such as, for example, benzyl, 2-benzyl-2-propyl, β-phenethyl, 9-fluorenyl, α,α-dimethylbenzyl, ω-phenyl-butyl, ω-phenyl-octyl, ω-phenyl-dodecyl or 3-methyl-5-(1',1',3',3'-tetramethyl-butyl)-benzyl,
a straight-chain or branched C₁₋₂₄alkoxycarbonyl radical, that is to say C(O)O-C₁₋₂₄alkyl, preferably C(O)O-C₁₋₈alkyl, such as, for example, methoxy-, ethoxy-, n-propoxy-, isopropoxy-, n-butoxy-, sec-butoxy-, isobutoxy- or tert-butoxy-carbonyl, or
a heterocyclic ring having from 3 to 12 carbon atoms, for example 2-thienyl, 2-furyl, 1-pyrazolyl, 2-pyridyl, 2-thiazolyl, 2-oxazolyl, 2-imidazolyl, isothiazolyl, triazolyl or any other ring system consisting of thiophene, furan, pyrazole, thiazole, oxazole, imidazole, isothiazole, thiadiazole, triazole, pyridine or benzene rings unsubstituted or substituted by from 1 to 6 ethyl, methyl, ethylene and/or methylene substituents.

Primary, secondary, tertiary and also quaternary ammonium cations are suitable.

The tetravalent nitrogen may also be a member of a 5- or 6-membered ring. Those systems may also contain additional hetero atoms, such as, for example, S, N and O. Examples of such systems are ammonium cations that are derived from 1,5-diazabicyclo[4.3.0]non-5-ene (DBN) and 1,8-diazabicyclo[5.4.0]undec-7-ene (DBU).

Also suitable are polyammonium salts having from 1 to 10, especially from 2 to 4, ammonium cations, in which case the substituents described above for the "mono" compounds may be present at the nitrogen and the tetravalent nitrogen may also be a member of a 5- or 6-membered ring (for example, see formulae VI-3 to VI-8 given hereinbelow).

By way of example, the compounds B1 to B180 mentioned in US-B1-6 225 024 are examples of quaternary ammonium cations.

Preference is given to the following ammonium cations: 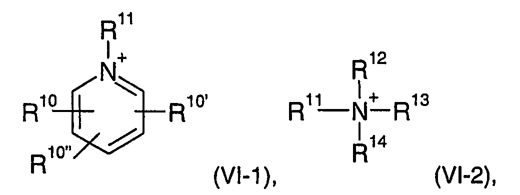 wherein R¹⁰, R^{10'} and R^{10"} are each independently of the others a hydrogen atom, a C₃₋₂₄cycloalkyl radical which is unsubstituted or substituted, for example by from one to three C₁₋₄alkyl radicals, such as cyclohexyl or 3,3,5-trimethylcyclohexyl or rosin amine D, or a straight-chain or branched C₁₋₂₄alkyl radical, R¹¹, R¹², R¹³ and R¹⁴ are a hydrogen atom, a straight-chain or branched C₁₋₃₆alkyl radical, preferably C₁₋₁₆alkyl radical, which may be unsubstituted or substituted, the total number of carbon atoms in the radicals R¹¹, R¹², R¹³ and R¹⁴ being in the range from 4 to 36, preferably from 8 to 22, with special preference being given, because of their steric shielding, to ammonium cations that are derived from 2,6-di-tert-butylpyridinium or primary aliphatic amines having highly branched alkyl chains wherein the amine nitrogen is bonded to a tertiary carbon atom, such as PRIMENE 81-R® (Rohm & Haas Company; mixture of amine isomers having from 12 to 14 carbon atoms) or PRIMENE JM-T® (Rohm & Haas Company; mixture of amine isomers having from 16 to 22 carbon atoms) or ethyldiisopropylamine (Hunig's base), or are a straight-chain or branched hydroxy-C₁₋₃₆alkyl radical, especially hydroxy-C₁₋₈alkyl radical, C₆₋₂₄aryl radical, especially C₆₋₁₀aryl radical, or C₇₋₂₄aralkyl radical, especially C₇₋₁₂aralkyl radical, or two of the radicals R¹¹, R¹², R¹³ and R¹⁴, together with the nitrogen atom to which they are bonded, form a five- or six-membered heterocyclic ring, such as pyrrolidino, piperidino or morpholino; or 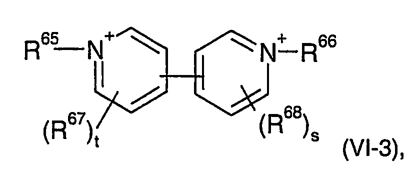 preferably 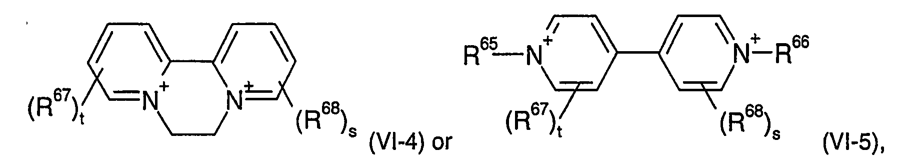 wherein R⁶⁷ and R⁶⁸ are each independently of the other a substituent, R⁶⁵ and R⁶⁶ are each independently of the other a substituted or unsubstituted alkyl radical, a substituted or unsubstituted alkenyl radical, a substituted or unsubstituted alkynyl radical, a substituted or unsubstituted aralkyl radical, a substituted or unsubstituted aryl radical or a substituted or unsubstituted heterocyclic radical, it being possible for the pairs R⁶⁷ and R⁶⁸, R⁶⁷ and R⁶⁵, R⁶⁸ and R⁶⁶, and R⁶⁵ and R⁶⁶ to be connected to form a ring, and s and t are each independently of the other 0 or an integer from 1 to 4, provided that when s and t have a value of 2 or more the groups R⁶⁷ and R⁶⁸ may be the same or different (US-B1-6 225 024); or of formula 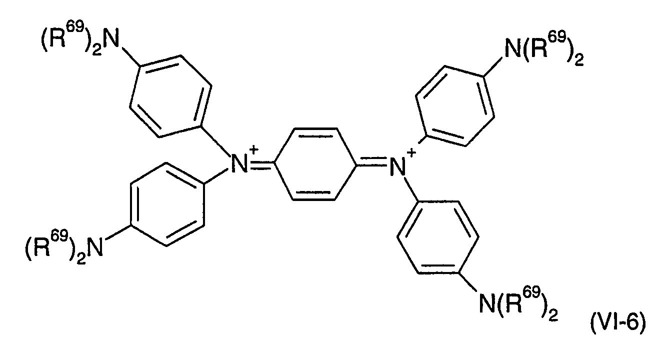 wherein R⁶⁹ is a straight-chain or branched C₁₋₈alkyl radical, especially methyl, ethyl, propyl, butyl or tert-butyl, which may be unsubstituted or substituted, for example by a cyano group, a halogen atom or by a C₁₋₄alkoxy radical; 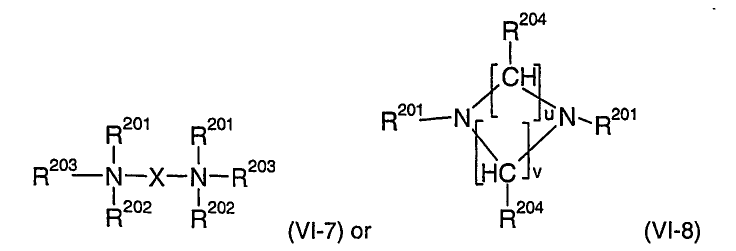 wherein R²⁰¹, R²⁰² and R²⁰³ are each independently of the others a hydrogen atom, a straight-chain or branched C₁₋₃₆alkyl radical, preferably C₁₋₁₆alkyl radical, which may be unsubstituted or substituted, a hydroxy-C₁₋₃₆alkyl radical, especially hydroxy-C₁₋₈alkyl radical, which is unsubstituted or substituted by one or more C₁₋₄alkyl and/or C₁₋₄alkoxy radicals, a C₃₋₂₄cycloalkyl radical, especially C₅₋₇cycloalkyl radical, a C₆₋₂₄aryl radical, especially C₆₋₁₀aryl radical, or a C₇₋₂₄aralkyl radical, especially C₇₋₁₂aralkyl radical, or two of the radicals R²⁰¹, R²⁰² and R²⁰³, together with the nitrogen atom to which they are bonded, form a five- or six-membered heterocyclic ring, R²⁰⁴ is a hydrogen atom, a C₁₋₄alkyl or C₁₋₄alkoxy radical, u and v are integers from 1 to 3, the sum of u and v being 3, 4 or 5, and I
X is a divalent connecting group, for example a C₁₋₈alkylene radical which is unsubstituted or substituted by one or more C₁₋₄alkyl and/or C₁₋₄alkoxy radicals, or a group 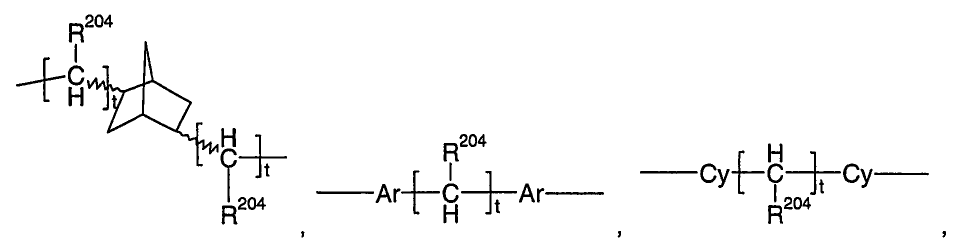 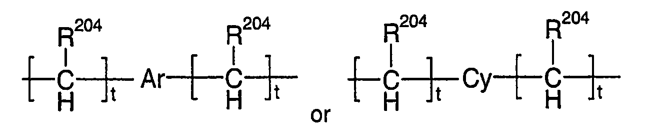 wherein R²⁰⁴ is as defined hereinbefore, Ar is a C₆₋₁₀aryl radical which is unsubstituted or substituted by one or more C₁₋₄alkyl and/or C₁₋₄alkoxy radicals, Cy is a C₅₋₇cycloalkyl radical which is unsubstituted or substituted by one or more C₁₋₄alkyl and/or C₁₋₄alkoxy radicals, and t is an integer from 0 to 4.

Diammonium compounds of formula VI-7 are derived especially from the following amines: 1,2-diaminoethane, 1,2-diamino-1-methylethane, 1,2-diamino-1,2-dimethylethane, 1,2-diamino-1,1-dimethylethane, 1,2-diaminopropane, 1,3-diaminopropane, 1,3-diamino-2-hydroxypropane, N-methyl-1,2-diaminoethane, 1,4-diazacyclohexane, 1,2-diamino-1,1-dimethylethane, 2,3-diaminobutane, 1,4-diaminobutane, N-hydroxyethyl-1,2-diaminoethane, 1-ethyl-1,3-diaminopropane, 2,2-dimethyl-1,3-diaminopropane, 1,5-diaminopentane, 2-methyl-1,5-diaminopentane, 2,3-diamino-2,3-dimethylbutane, N-2-aminoethylmorpholine, 1,6-diaminohexane, 1,6-diamino-2,2,4-trimethylhexane, N,N-dihydroxyethyl-1,2-diaminoethane, N,N-dimethyl-1,2-diaminoethane, 4,9-dioxa-1,12-diaminododecane, 1,2-diaminocyclohexane, 1,3-diamino-4-methylcyclohexane, 1,2-diaminocyclohexane, 1-amino-2-aminomethyl-2-methyl-4,4-dimethylcyclohexane, 1,3-diaminomethylcyclohexane, N-2-aminoethylpiperazine, 1,1-di(4-aminocyclohexyl)methane, 1,1-di(4-aminophenyl)methane, N,N'-diisopropyl-p-phenylenediamine, N,N'-di-sec-butyl-p-phenylenediamine, N,N'-bis(1,4-dimethyl-pentyl)-p-phenylenediamine, N,N'-bis(1-ethyl-3-methyl-pentyl)-p-phenylenediamine, N,N'-bis(1-methyl-heptyl)-p-phenylenediamine, N,N'-dicyclohexyl-p-phenylenediamine, N,N'-diphenyl-p-phenylenediamine, N,N'-di(2-naphthyl)-p-phenylenediamine, N-isopropyl-N'-phenyl-p-phenylenediamine, N-(1,3-dimethyl-butyl)-N'-phenyl-p-phenylenediamine, N-(1-methyl-heptyl)-N'-phenyl-p-phenylenediamine, N-cyclohexyl-N'-phenyl-p-phenylenediamine and N,N'-dimethyl-N,N'-di-sec-butyl-p-phenylenediamine.

Special preference is given to the following compounds: 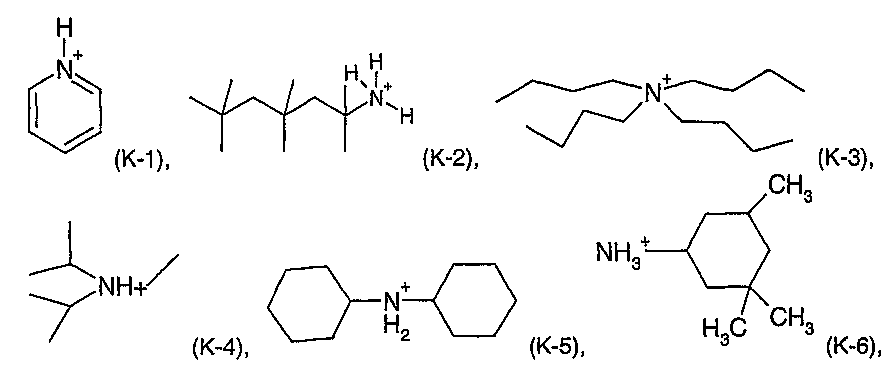 and 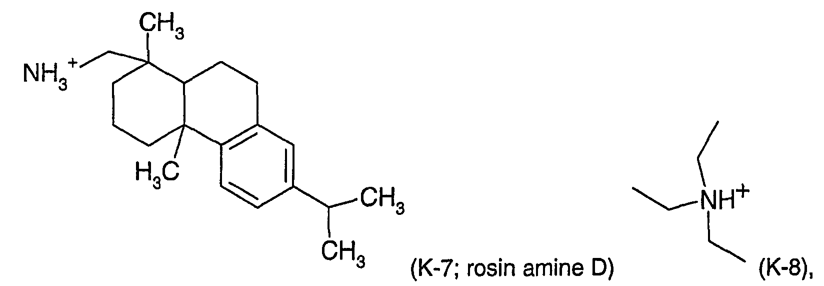 and

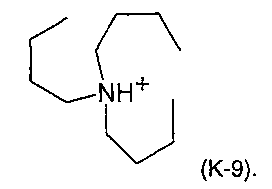

Suitable oxonol dyes are the oxonol dyes of formulae 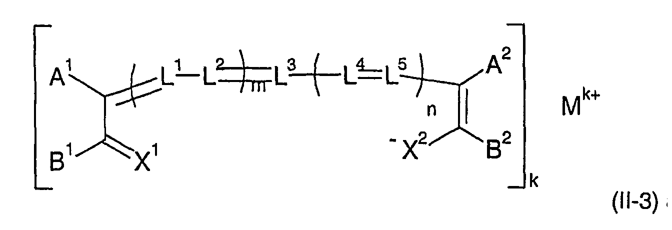 and 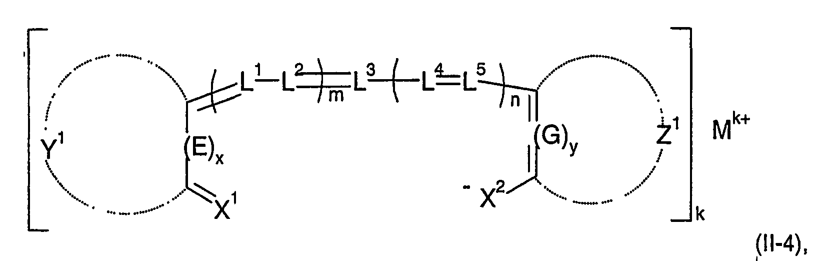 which are described in EP-A-0 833 314,
and wherein A¹, A², B¹, B²; E, G, Y¹, Z¹; X¹, X², M^{k+}, m, n, x, y and k are as defined hereinbefore and L¹, L², L³, L⁴ and L⁵ are a methine group, which may have a substituent.

It should be noted that, in contrast to the oxonol dyes described in EP-A-833 314, wherein M^{k+} is an onium ion containing a positively charged onium ion to which no hydrogen atom is bonded (quaternary ammonium ion) (cf. Comparison Example 5 of EP-A-833 314, where it is shown that the use of tertiary ammonium cations does not result in adequate modulation factors or light-fastness properties), in accordance with the invention there may in general be used as M^{k+} an organic or inorganic cation, that is to say, for example a primary, secondary or tertiary ammonium cation may also be used. Preference is given to oxonol dyes of formula (II-4) over those of formula (II-3).

Preference is further given to oxonol dyes of the following formulae: 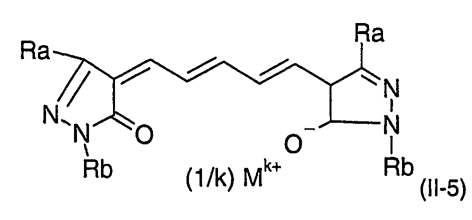 and 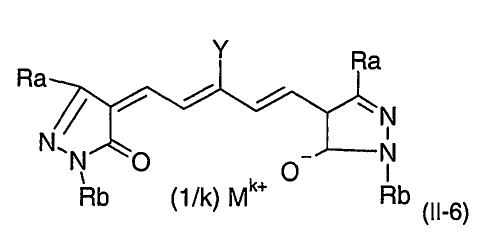 wherein Ra is CO₂C₁₋₄alkyl, cyano, CF₃, C(O)NHC₁₋₄alkyl, C(O)NHphenyl, phenyl, OH, C₁₋₄alkyl, C₁₋₄alkoxy, NHC(O)C₁₋₄alkyl, NHC(O)phenyl, C(O)NHC₁₋₄alkyl, C(O)NHphenyl, NHC(O)OC₁₋₄alkyl, NHC(O)Ophenyl or NH₂, 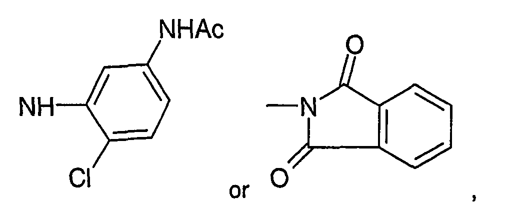 or is
Rb is H, C₁₋₄alkyl, phenyl, hydroxyalkyl, C(O)NHC₁₋₄alkyl, C(O)NHphenyl, o-methylphenyl, benzyl or 2,4,6-trichlorophenyl, and
Y is H, C₁₋₄alkyl, phenyl, benzyl, C(O)NH₂ or halogen, such as chlorine or bromine, 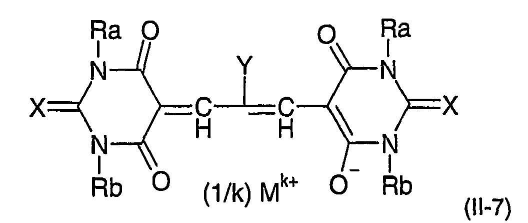 wherein Ra is H, phenyl or C₁₋₄alkyl,
Rb is H, C₁₋₄alkyl, phenyl, hydroxy-C₁₋₄alkyl, o-methylphenyl or benzyl and
Y is H, C₁₋₄alkyl, phenyl, benzyl, C(O)NH₂ or halogen, such as chlorine or bromine,
X, k and M^{k+} being as defined hereinbefore.

Also suitable are the oxonol dyes of formula 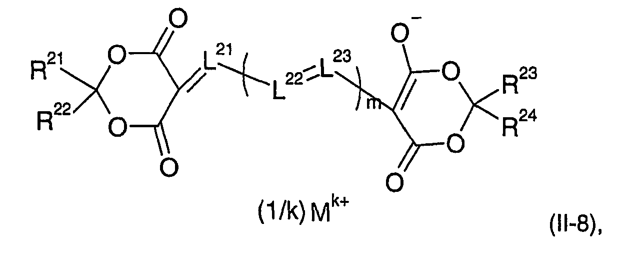 described in US-B1-6 225 024, wherein R²¹, R²², R²³ and R²⁴ are each independently of the others a hydrogen atom, a substituted or unsubstituted alkyl radical, a substituted or unsubstituted aryl radical, a substituted or unsubstituted aralkyl radical or a substituted or unsubstituted heterocyclic radical, L²¹, L²² and L²³ are each independently of the others a methine group which may have a substituent, m is an integer 0, 1, 2 or 3, M^{k+} is an organic or inorganic cation, and k is an integer from 1 to 10, preferably from 1 to 4, provided that when m is 2 or 3 the groups L²² and L²³ may be the same or different.

Special preference is given to the compounds of formula 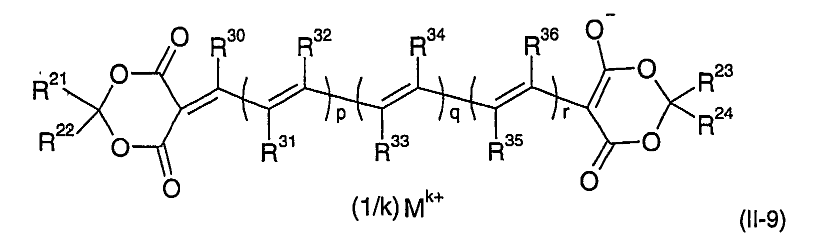 wherein R²¹, R²², R²³ and R²⁴ are each independently of the others a hydrogen atom, a C₁₋₈alkyl radical, a C₁₋₈perfluoroalkyl radical, such as trifluoromethyl, a C₁₋₈alkenyl radical, a C₁₋₄alkoxy-C₁₋₄alkyl radical, a hydroxy-C₁₋₄alkyl radical, a R¹⁰⁴R¹⁰⁵N-C₁₋₄alkyl radical, R¹⁰⁴ and R¹⁰⁵ being as defined hereinbefore, a C₆₋₁₀aryl radical, such as phenyl, a C₇₋₁₀aralkyl radical, such as benzyl, or a heterocyclic ring having from 2 to 10 carbon atoms, or
R²¹ and R²² together, and/or R²³ and R²⁴ together, form an unsubstituted or substituted carbocyclic ring, preferably having from 3 to 10 carbon atoms, such as cyclopropyl, cyclobutyl, cyclopentyl, cyclohexyl, 2-methylcyclohexyl, cycloheptyl or cyclooctyl, or an unsubstituted or substituted heterocyclic ring, preferably having from 2 to 10 carbon atoms, such as piperidyl, chromanyl or morpholyl, which rings may be unsubstituted or substituted by one or more C₁₋₄alkyl and/or C₁₋₄alkoxy radicals,
R³⁰, R³¹, R³², R³³, R³⁴, R³⁵ and R³⁶ are each independently of the others a hydrogen atom, a halogen atom, such as chlorine or bromine, a C₁₋₈alkyl radical, a C₁₋₈perfluoroalkyl radical, such as trifluoromethyl, a C₆₋₁₀aryl radical, such as phenyl, a C₇₋₁₀aralkyl radical, such as benzyl, or a heterocyclic ring having from 2 to 10 carbon atoms, or
two substituents R³⁰, R³¹, R³², R³³, R³⁴, R³⁵ and R³⁶, which are located in 1,3-positions relative to one another, together form an unsubstituted or substituted carbocyclic ring having 5 or 6 carbon atoms, such as cyclohexenyl or cyclopentenyl, which may be unsubstituted or substituted by one or more C₁₋₄alkyl and/or C₁₋₄alkoxy radicals,
p, q and r are 0 or 1 and M^{k+} is an organic or inorganic cation and k is an integer from 1 to 10, preferably from 1 to 4.

It should be noted that, according to US-B1-6 225 024, the oxonol dyes described in EP-A-833 314, in contrast to the oxonol dyes described in US-B1-6 225 024, when used in DVD recording media, do not produce adequate recording and reading properties because of low reflectivity and a low degree of modulation and do not meet the requirements in terms of light-fastness because errors occur in the case of prolonged irradiation, with reduced reading performance.

Oxonol dyes of the following general formula 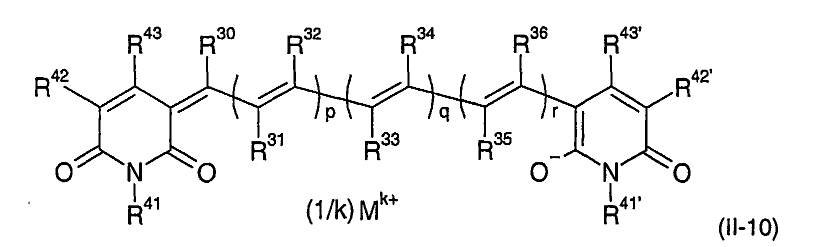 wherein R³⁰, R³¹, R³², R³³, R³⁴, R³⁵ and R³⁶, p, q and r, M^{k+} and k are as defined above and R⁴¹ and R^{41'} are each independently of the other a hydrogen atom, an unsubstituted or substituted C₁₋₁₂alkyl radical, C₅₋₇cycloalkyl, C₆₋₁₂aryl, C₇₋₁₂aralkyl radical or heterocyclic radical,
R⁴² and R^{42'} are each independently of the other a hydrogen atom, a cyano group, a group C(O)OR⁴⁶, C(O)NR⁴⁶R⁴⁷ or C(O)R⁴⁷, an unsubstituted or substituted C₁₋₁₂alkyl radical, C₅₋₇cycloalkyl, C₆₋₁₂aryl, C₇₋₁₂aralkyl radical or heterocyclic radical, R⁴⁶ and R⁴⁷ being an unsubstituted or substituted C₁₋₁₂alkyl radical, C₅₋₇cycloalkyl, C₆₋₁₂aryl, C₇₋₁₂aralkyl radical or heterocyclic radical, or R⁴⁶ and R⁴⁷, together with the nitrogen atom to which they are bonded, forming a five- or six-membered ring, and
R⁴³ and R^{43'} are each independently of the other a hydrogen atom, a carboxylic acid group or an alkyl radical; are preferred.

Special preference is given to oxonol dyes of the following general formula 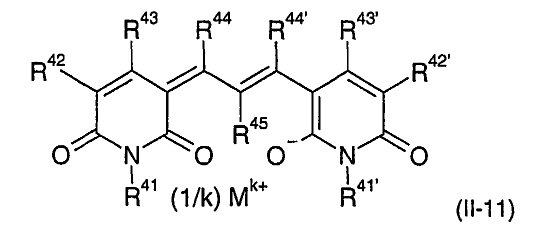 wherein M^{k+} is an ammonium cation, such as K-1, K-2, K-3, K-4, M-1, M-2, M-3 or M-4, k is an integer from 1 to 4, especially 1 or 2,
R⁴¹ and R^{41'} are each independently of the other a hydrogen atom, a C₁₋₄alkyl radical, such as methyl or ethyl, or a perfluoro-C₁₋₄alkyl radical, such as trifluoromethyl, a hydroxy-C₁₋₄alkyl radical, or a C₁₋₈alkyl radical interrupted one or more times by -O- such as
CH₂CH₂CH₂-O-CH(CH₃)₂, a C₆₋₁₀aryl radical, such as phenyl, or a C₇₋₁₂aralkyl radical, such as benzyl,
R⁴² and R^{42'} are each independently of the other a hydrogen atom, a cyano or carboxamide group,
R⁴³ and R^{43'} are each independently of the other a hydrogen atom, a carboxylic acid group or a salt thereof or a C₁₋₄alkyl radical,
R⁴⁴ and R^{44'} are each independently of the other a hydrogen atom, a C₁₋₄alkyl radical, a C₆₋₁₂aryl or C₇₋₁₂aralkyl radical, or
R⁴⁴ and R^{44'} together form a five-membered or six-membered ring, such as a cyclohexenyl or cyclopentenyl ring, and
R⁴⁵ is a hydrogen atom, a halogen atom, especially a chlorine atom, an unsubstituted or C₁₋₄alkyl- or C₁₋₄alkoxy-substituted C₆₋₁₂aryl radical, such as phenyl or p-methylphenyl, or C₇₋₁₂aralkyl radical, such as benzyl. I

Moreover, oxonol dyes of the following general formula 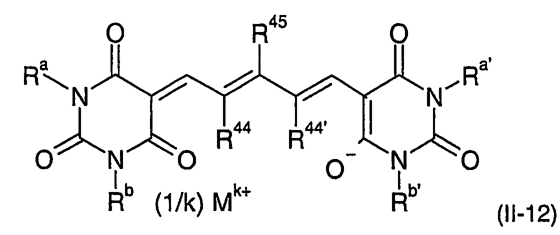 are preferred, wherein R^{a}, R^{b}, R^{a'} and R^{b'} are each independently of the other a hydrogen atom, a C₁₋₈alkyl radical, in particular a C₁₋₄alkyl radical, a hydroxy-C₁₋₈alkyl radical, a C₁₋₈alkenyl radical, such as -CH₂-CH=CH₂, an unsubstituted or C₁₋₄alkyl- or C₁₋₄alkoxy-substituted C₆₋₁₂aryl, such as phenyl, or C₇₋₁₂aralkyl radical, such as benzyl,
R⁴⁴ and R^{44'} are each independently of the other a hydrogen atom, a C₁₋₄alkyl radical, a C₆₋₁₂aryl or C₇₋₁₂aralkyl radical, or
R⁴⁴ and R^{44'} together form a five-membered or six-membered ring, such as a cyclohexenyl or cyclopentenyl ring, and
R⁴⁵ is a hydrogen atom, a halogen atom, especially a chlorine atom, an unsubstituted or C₁₋₄alkyl- or C₁₋₄alkoxy-substituted C₆₋₁₂aryl radical, such as phenyl or p-methylphenyl, or C₇₋₁₂aralkyl radical, such as benzyl.
X, k and M^{k+} being as defined hereinbefore.

Special preference is given to the following compounds and compositions:

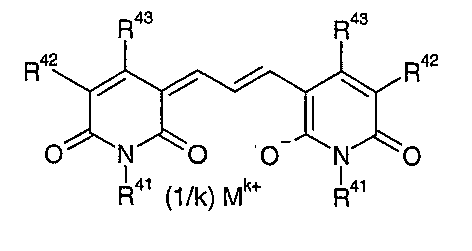

| Compound | R⁴¹ | R⁴² | R⁴³ | (1/k) M^{K+} | Example |
|---|---|---|---|---|---|
| D-1 | CH₂CH₂ CH₂-O- CH(CH₃)₂ | CN | CH₃ | K-1 | 1 |
| D-2 | CH₂CH₂ CH₂-O- CH(CH₃)₂ | CN | CH₃ | K-2 | 2 |
| D-3 | H | CN | CH₃ | K-1 | 3 |
| D-4 | CH₃ | CN | CH₃ | K-1 | 4 |
| D-5 | CH₃ | CN | CH₃ | K-2 | 5 |
| D-6 | C₂H₅ | CN | CH₃ | K-1 | 6 |
| D-7 | C₂H₅ | CN | CH₃ | K-2 | 7 |
| D-8 | CH₂CH₂ CH₂-O- CH(CH₃)₂ | CN | CH₃ | M-1 | 8 |
| D-9 | CH₂CH₂ CH₂-O- CH(CH₃)₂ | CN | CH₃ | M-2 | 9 |
| D-10 | CH₂CH₂ CH₂-O- CH(CH₃)₂ | CN | CH₃ | M-3 | 10 |
| D-11 | CH₂CH₂ CH₂-O- CH(CH₃)₂ | CN | CH₃ | M-4 | 11 |
| D-12 | phenyl | CN | CH₃ | K-2 | 12 |
| D-13 | C₂H₅ | C(O)NH₂ | CH₃ | K-2 | 13 |
| D-14 | CH₂CH₂CH₂-O- CH(CH₃)₂ | CN | CH₃ | K-3 | 14 |
| D-15 | CH₂CH₂CH₂-O- CH(CH₃)₂ | CN | CH₃ | K-2 | 15 |
| D-16 | CH₂CH₂CH₂-O- CH(CH₃)₂ | CN | CH₃ | K-1 | 16 |
| D-17 | CH₂CH₂CH₂-O- CH(CH₃)₂ | CN | CH₃ | K-4 | 17 |
| D-48 | H | CN | CH₃ | K-3 | 48 |
| D-49 | C₂H₅ | CN | CH₃ | K-3 | 49 |
| D-52 | C₂H₅ | H | CH₃ | K-2 | 52 |
| D-53 | H | H | COO⁻ | K-2 | 53 |
| D-54 | C₂H₅ | C(O)NH₂ | CH₃ | K-2 | 54 |

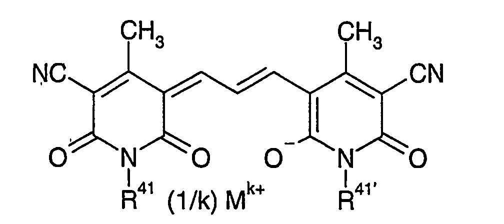

| Compound | R⁴¹ | R^{41'} | (1/k) M^{K+} | Example |
|---|---|---|---|---|
| D-20 | CH₃ | C₂H₅ | K-2 | 18 |
| D-7 | C₂H₅ | C₂H₅ | K-2 | 18 |
| D-5 | CH₃ | CH₃ | K-2 | 18 |
| D-21 | phenyl | C₂H₅ | K-2 | 19 |
| D-7 | C₂H₅ | C₂H₅ | K-2 | 19 |
| D-12 | phenyl | phenyl | K-2 | 19 |
| D-22 | phenyl | CH₂CH₂CH₂-O- CH(CH₃)₂ | K-2 | 20 |
| D-15 | CH₂CH₂CH₂-O- CH(CH₃)₂ | CH₂CH₂CH₂-O- CH(CH₃)₂ | K-2 | 20 |
| D-12 | phenyl | phenyl | K-2 | 20 |
| D-23 | C₂H₅ | CH₂CH₂CH₂-O- CH(CH₃)₂ | K-2 | 21 |
| D-15 | CH₂CH₂CH₂-O- CH(CH₃)₂ | CH₂CH₂CH₂-O- CH(CH₃)₂ | K-2 | 21 |
| D-7 | C₂H₅ | C₂H₅ | K-2 | 21 |

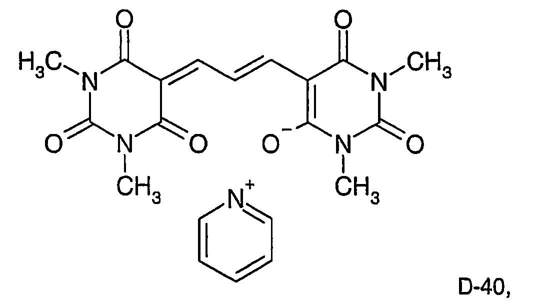

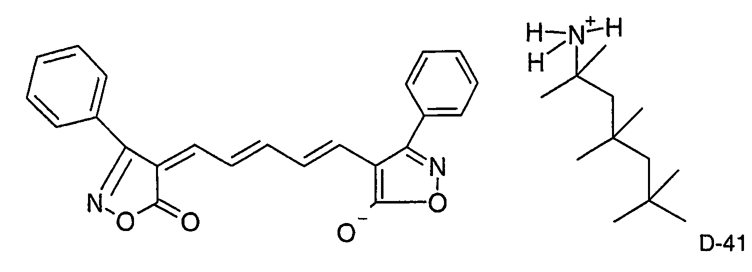

and

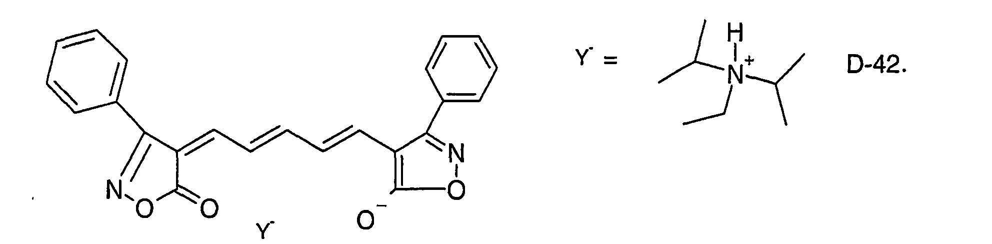

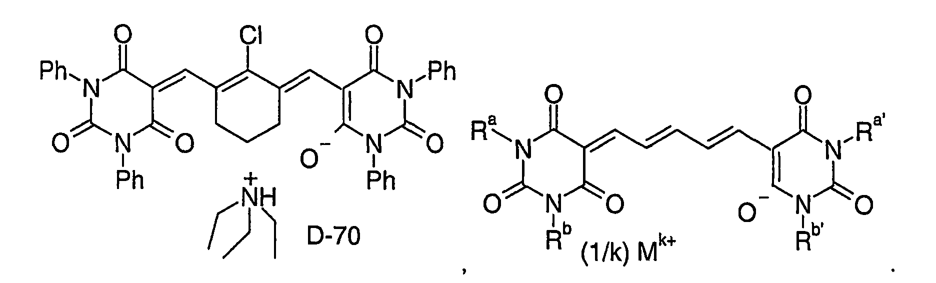

| Compound | R^{a} | R^{a'} | R^{b} | R^{b'} | (1/k) M^{K+} | λₘₐₓ | ε |
|---|---|---|---|---|---|---|---|
| D-54 | Ph | Ph | Ph | Ph | K-8 | 597.2 | 175936 |
| D-55 | CH₃ | CH₃ | CH₃ | CH₃ | K-8 | 594.4 | 62550 |
| D-56 | CH₃ | CH₃ | CH₃ | CH₃ | K-3 | 594.7 | 148970 |
| D-57 | tBu | tBu | C₂H₅ | C₂H₅ | K-9 | - | - |
| D-58 | CH₃ | CH₃ | CH₃ | CH₃ | K-9 | - | - |
| D-59 | tBu | tBu | C₂H₅ | C₂H₅ | K-8 | 597.2 | 95732 |
| D-60 | H | H | Ph | Ph | K-8 | 602.9 | 148327 |
| D-61 | ¹⁾ | ¹⁾ | tBu | tBu | K-8 | - | - |
| D-62 | ¹⁾ | ¹⁾ | ¹⁾ | ¹⁾ | K-8 | - | - |
| D-63 | Ph | Ph | Ph | Ph | K-9 | 597.1 | - |
| D-64 | ¹⁾ | ¹⁾ | H | H | K-8 | 593.4 | - |
| D-65 | Ph | Ph | H | H | K-9 | 594.4 | 133022 |
| D-66 | Ph | Ph | H | H | K-2 | 594.2 | 142542 |
| D-67 | ¹⁾ | ¹⁾ | ¹⁾ | ¹⁾ | K-9 | - | - |
| D-68 | Ph | n-Bu | n-Bu | Ph | K-8 | - | - |
| D-69 | Ph | n-Bu | n-Bu | Ph | K-9 | - | - |

| | | | | | | | |
|---|---|---|---|---|---|---|---|
| ¹⁾ -CH₂-CH=CH₂. | | | | | | | |

The oxonol dyes described above can be prepared in accordance with, or in analogy to, methods described in DE-A-2 012 050, DE-A-2 835 074, US-A-3 681 345, US-A-4 968 593, US-A-6 225 024 and EP-A-0 833 314.

The recording layer may also comprise, instead of a single compound of formula (II), a mixture of such compounds with, for example, 2, 3, 4 or 5 oxonol dyes according to the invention. The use of mixtures, for example mixtures of isomers or homologues but also mixture's of differing structures, can often result in an increase in solubility and/or a reduction in the tendency to aggregate. Where appropriate, mixtures of ion-pair compounds may have differing anions, differing cations or both differing anions and differing cations.

The oxonol dyes used in accordance with the invention have, in combination with the metal complexes of formula (I), a narrow absorption band whose maximum is located at from 540 to 640 nm or in the range lower than 450 nm. The use of metal complexes of formula (I) results, surprisingly, in a comparatively weak tendency of the oxonol dyes to aggregate in the solid sate so that the absorption curve remains advantageously narrow even in the solid state.

The compositions used in accordance with the invention, in the form of a solid film, as used in optical storage media, have, on the longer-wavelength flank of the absorption band, a high refractive index which reaches a peak value of from 2.0 to 3.0 in the range from 600 to 700 nm and more than 1.9 in the range from 390 to 430 nm, so that a medium having high reflectivity as well as high sensitivity and good playback characteristics in the desired spectral range can be achieved.

The substrate, which functions as support for the layers applied thereto, is advantageously semi-transparent (T ≥ 10 %) or, preferably, transparent (T ≥ 90 %). The support generally has a thickness of from 0.01 to 10 mm, preferably from 0.1 to 5 mm.

The recording layer is located preferably between the transparent substrate and the reflecting layer. The thickness of the recording layer is from 10 to 1000 nm, preferably from 30 to 300 nm, especially from 60 to 120 nm. The absorption of the recording layer is generally from 0.1 to 1.0 at the absorption maximum. The layer thickness is very especially so selected in dependence upon the respective refractive indices in the non-written state and in the written state at the reading wavelength that, in the non-written state, constructive interference is obtained but, in the written state, destructive interference is obtained, or *vice versa.*

The reflecting layer, the thickness of which can be from 10 to 150 nm, preferably has high reflectivity (R≥45 %, especially R≥60 %), coupled with low transparency (T≤10 %). In further embodiments, for example in media having a plurality of recording layers, the reflector layer may likewise be semi-transparent, that is to say may have comparatively high transparency (for example T≥50 %) and low reflectivity (for example R≤45 %).

The uppermost layer, for example the reflective layer or the recording layer, depending upon the layer structure, is advantageously additionally provided with a protective layer having a thickness of generally from 0.1 to 1000 µm, preferably from 0.1 to 50 µm and especially from 0.5 to 15 µm. Such a protective layer can, if desired, serve also as adhesion promoter for a second substrate layer applied thereto, which is preferably from 0.1 to 5 mm thick and consists of the same material as the support substrate.

The reflectivity of the entire recording medium is preferably at least 15 %, especially at least 40 % (for example 45 % for DVD-R).

The main features of the recording layer according to the invention are the very high initial reflectivity in the said wavelength range of the laser diodes, which reflectivity can be modified with especially high sensitivity; the high refractive index; the narrow absorption band in the solid state; the good uniformity of the script width at different pulse durations; the good light-stability; and the good solubility in non-halogenated solvents, especially alcohols. The use of the compositions according to the invention results in advantageously homogeneous, amorphous and low-scatter recording layers having a high refractive index, and the absorption edge is surprisingly especially steep even in the solid phase. Further advantages are high light-stability in daylight and under laser radiation of low power density with, at the same time, high sensitivity under laser radiation of high power density, uniform script width, high contrast, and also good thermal stability and storage stability.

At a relatively high recording speed, the results obtained are surprisingly better than with previously known recording media. The marks are more precisely defined relative to the surrounding medium and thermally induced deformations do not occur. The error rate (BLER or Pl Sim 8) and the statistical variations in mark length (jitter) are also low both at normal and at relatively high recording speed, so that error-free recording and playback can be achieved over a large speed range. The advantages are obtained in the entire range from 600 to 700 nm (preferably from 630 to 690 nm), but are especially pronounced at 640-680 nm, more especially at from 650 to 670 nm, very especially at 658 ± 5 nm.

Suitable substrates are, for example, glass, minerals, ceramics and thermosetting or thermoplastic plastics. Preferred supports are glass and homo- or co-polymeric plastics. Suitable plastics are, for example, thermoplastic polycarbonates, polyamides, polyesters, polyacrylates and polymethacrylates, polyurethanes, polyolefins, polyvinyl chloride, polyvinylidene fluoride, polyimides, thermosetting polyesters and epoxy resins. The substrate can be in pure form or may also comprise customary additives, for example UV absorbers or dyes, as proposed, for example, in JP 04/167239 as light-stabilisers for the recording layer. In the latter case it may be advantageous for the dye added to the support substrate to have an absorption maximum hypsochromically shifted relative to the dye of the recording layer by at least 10 nm, preferably by at least 20 nm.

The substrate is advantageously transparent over at least a portion of the range from 600 to 700 nm so that it is permeable to at least 90 % of the incident light of the writing or readout wavelength. The substrate has preferably on the coating side a spiral guide groove having a groove depth of from 50 to 500 nm, a groove width of from 0.2 to 0.8 µm and a track spacing between two turns of from 0.4 to 1.6 µm, especially having a groove depth of from 100 to 200 nm, a groove width of 0.3 µm and a spacing between two turns of from 0.6 to 0.8 µm.

The compositions according to the invention are therefore suitable especially advantageously for use in DVD media having the currently customary pit width of 0.4 µm and track spacing of 0.74 µm.

For a further increase in stability it is also possible, if desired, to add known stabilisers in customary amounts, such as, for example, a nickel dithiolate described in JP 04/025 493 as light-stabiliser.

The recording layer comprises a compound of formula (II) or a mixture of such compounds advantageously in an amount sufficient to have a substantial influence on the refractive index. Such an amount is generally at least 30 % by weight, preferably at least 60 % by weight, especially at least 80 % by weight.

Suitable concentrations of metal complex compound(s) of formula (I) are generally from 1 to 1000 % by weight, preferably from 30 to 60 % by weight, based on the oxonol compound(s) of formula (II).

The recording media may comprise customary additives, for example film-formers, further customary constituents, such as, for example, other chromophores (for example those having an absorption maximum at from 300 to 1000 nm), UV absorbers and/or other stabilisers, quenchers, such as, for example, fluorescence quenchers, melting-point depressants and decomposition accelerators.

When the recording layer comprises further chromophores, such chromophores may in principle be any dyes that can be decomposed or modified by the laser radiation during the recording, or they may be inert towards the laser radiation. When the further chromophores are decomposed or modified by the laser radiation, this can take place directly by absorption of the laser radiation or can be induced indirectly by the decomposition of the compounds of formula (I) or (II) according to the invention.

When further chromophores having optical properties that conform as far as possible to those of the oxonol dyes are used, this should preferably be the case in the range of the longest-wavelength absorption flank. Preferably the wavelengths of the inversion points of the further chromophores and of the oxonol dyes are a maximum of 20 nm, especially a maximum of 10 nm, apart. In that case the further chromophores and the oxonol dyes should exhibit similar behaviour in respect of the laser radiation so that it is possible to use as further chromophores known recording agents the action of which is synergistically enhanced by the compounds of formula (I) or (II).

When further chromophores or coloured stabilisers having optical properties that are as different as possible from those of compounds of formula (I) or (II) are used, they advantageously have an absorption maximum that is hypsochromically or bathochromically shifted relative to the dye of formula (I) or (II). In that case the absorption maxima are preferably at least 50 nm, especially at least 100 nm, apart. Examples thereof are UV absorbers that are hypsochromic to the dye of formula (I) or (II), or coloured stabilisers that are bathochromic to the dye of formula (I) or (II) and have absorption maxima lying, for example, in the NIR or IR range. Other dyes can also be added for the purpose of colour-coded identification, colour-masking ("diamond dyes") or enhancing the aesthetic appearance of the recording layer. In those cases, the further chromophores or coloured stabilisers should exhibit behaviour that is preferably as inert as possible in respect of light and laser radiation.

When chromophores or coloured stabilisers are used for other purposes, the amount thereof should preferably be so low that their contribution to the total absorption of the recording layer in the range from 600 to 700 nm is at most 20 %, preferably at most 10 %. In such a case, the amount of additional dye or stabiliser is advantageously at most 50 % by weight, preferably at most 10 % by weight, based on the recording layer.

Further chromophores that can be used in the recording layer in addition to the oxonol compounds are, for example, cyanines and cyanine metal complex salts (US-A-5 958 650), styryl compounds (US-A-6 103 331), azo dyes and azo metal complexes (JP-A-11/028865), phthalocyanines (EP-A-232 427, EP-A-337 209, EP-A-373 643, EP-A-463 550, EP-A-492 508, EP-A-509 423, EP-A-511 590, EP-A-513 370, EP-A-514 799, EP-A-518 213, EP-A-519 419, EP-A-519 423, EP-A-575 816, EP-A-600 427, EP-A-676 751, EP-A-712 904, WO-98/14520, WO-00/09522, CH-693/01), porphyrins and azaporphyrins (EP-A-822 546, US-A-5 998 093), dipyrromethene dyes and metal chelate compounds thereof (EP-A-822 544, EP-A-903 733), xanthene dyes and metal complex salts thereof (US-A-5 851 621) or quadratic acid compounds (EP-A-568 877), also oxazines, dioxazines, diazastyryls, formazans, anthraquinones or phenothiazines.

Besides the metal complexes of formula I, further stabilisers or fluorescence quenchers may be used, for example metal complexes of nitrogen- or sulfur-containing enolates, phenolates, bisphenolates, thiolates, bisthiolates or of azo, azomethine or formazan dyes, e.g. ®Irgalan Bordeaux EL (Ciba Spezialitätenchemie AG) or similar compounds, hindered phenols and derivatives thereof (where appropriate also as anions X⁻), e.g. ®Cibafast AO (Ciba Spezialitätenchemie AG), hydroxyphenyl-triazoles, -triazines or other UV absorbers, e.g. ®Cibafast W or ®Cibafast P (Ciba Spezialitätenchemie AG) or hindered amines (TEMPO or HALS, also in the form of nitroxides or NOR-HALS, where appropriate also as anions X⁻).

Many such structures are known, some of them also in connection with optical recording media, for example from US-A-5 219 707, JP-A-06/199045, JP-A-07/76169 or JP-A-07/262604.

The recording medium according to the invention, in addition to comprising the compounds of formula (I) or (II), may additionally comprise salts, for example ammonium chloride, pentadecylammonium chloride, sodium chloride, sodium sulfate, sodium methyl sulfonate or sodium methyl sulfate, the ions of which may originate, for example, from the components used. The additional salts, if present, may be present preferably in amounts of up to 20 % by weight, based on the total weight of the recording layer.

Reflecting materials suitable for the reflective layer include especially metals, which provide good reflection of the laser radiation used for recording and playback, for example the metals of Main Groups III, IV and V and of the Sub-Groups of the Periodic Table of the Elements. Al, In, Sn, Pb, Sb, Bi, Cu, Ag, Au, Zn, Cd, Hg, Sc, Y, La, Ti, Zr, Hf, V, Nb, Ta, Cr, Mo, W, Fe, Co, Ni, Ru, Rh, Pd, Os, Ir, Pt, Ce, Pr, Nd, Pm, Sm, Eu, Gd, Tb, Dy, Ho, Er, Tm, Yb and Lu, and alloys thereof are especially suitable. Special preference is given to a reflective layer of aluminium, silver, copper, gold or an alloy thereof, on account of their high reflectivity and ease of production.

Materials suitable for the protective layer include chiefly plastics, which are applied in a thin layer to the support or to the uppermost layer either directly or with the aid of adhesive layers. It is advantageous to select mechanically and thermally stable plastics having good surface properties, which may be modified further, for example written. The plastics may be thermosetting plastics or thermoplastic plastics. Preference is given to radiation-curable (for example by means of UV radiation) protective layers, which are particularly simple and economical to produce. A wide variety of radiation-curable materials are known. Examples of radiation-curable monomers and oligomers are acrylates and methacrylates of diols, triols and tetrols, polyimides of aromatic tetracarboxylic acids and aromatic diamines having C₁-C₄alkyl groups in at least two ortho-positions to the amino groups, and oligomers with dialkylmaleimidyl groups, e.g. dimethylmaleimidyl groups.

The recording media according to the invention may have additional layers, for example interference layers. It is also possible to construct recording media having a plurality of (for example two) recording layers. The structure and the use of such materials are known to the person skilled in the art. Preference is given to interference layers that are arranged between the recording layer and the reflecting layer and/or between the recording layer and the substrate and consist of a dielectric material, for example as described in EP-A-353 393 of TiO₂, Si₃N₄, ZnS or silicone resins.

The recording media according to the invention can be produced by processes known per se, it being possible for various methods of coating to be employed depending upon the materials used and their function.

Suitable coating methods are, for example, immersion, pouring, brush-coating, blade-application and spin-coating, as well as vapour-deposition methods carried out under a high vacuum. When, for example, pouring methods are used, solutions in organic solvents are generally employed. Suitable coating methods and solvents are described, for example, in EP-A-401 791.

The recording layer is applied preferably by spin-coating with a dye solution, solvents that have proved satisfactory being especially alcohols, such as, for example, 2-methoxyethanol, n-propanol, isopropanol, isobutanol, n-butanol, amyl alcohol or 3-methyl-1-butanol and mixtures thereof. Ethers (dibutyl ether), ketones (2,6-dimethyl-4-heptanone, 5-methyl-2-hexanone) or saturated or unsaturated hydrocarbons (toluene, xylene) can also be used, for example in the form of mixtures (e.g. dibutyl ether / 2,6-dimethyl-4-heptanone) or mixed components.

The invention therefore relates also to a method of producing an optical recording medium, wherein a solution of a compound of formula (I) in a non-halogenated organic solvent is applied to a substrate having depressions. The application is preferably carried out by spin-coating.

The application of the metallic reflective layer is preferably effected by sputtering, vapour-deposition *in vacuo* or by chemical vapour deposition (CVD). The sputtering technique is especially preferred for the application of the metallic reflective layer on account of the high degree of adhesion to the support. Such techniques are known and are described in specialist literature (e.g. J.L. Vossen and W. Kern, "Thin Film Processes", Academic Press, 1978).

The structure of the recording medium according to the invention is governed primarily by the readout method; known function principles include the measurement of the change in transmission or, preferably, reflection, but it is also known to measure the fluorescence instead of the transmission or reflection.

When the recording medium operates on the basis of a change in reflection, the recording medium may be structured, for example, as follows: transparent support / recording layer (optionally multilayered) / reflective layer and, if expedient, protective layer (not necessarily transparent); or support (not necessarily transparent) / reflective layer / recording layer and, if expedient, transparent protective layer. In the first case, the light is incident from the support side, whereas in the latter case the radiation is incident from the recording layer side or, where applicable, from the protective layer side. In both cases the light detector is located on the same side as the light source. The first-mentioned structure of the recording medium is generally preferred for DVD-R, the latter-mentioned structure (inverse structure) is desirable especially for recording systems in the blue-violet range (DVR; EP-A-822 546 and EP-A-1 103 962).

When the recording medium operates on the principle of a change in light transmission, the following structure, for example, comes into consideration: transparent support / recording layer (optionally multilayered) and, if expedient, transparent protective layer. The light for recording and for readout can be incident either from the support side or from the recording layer side or, where applicable, from the protective layer side, the light detector in this case always being located on the opposite side.

Suitable lasers are those having a wavelength of 600-700 nm, for example commercially available lasers having a wavelength of 602, 612, 633, 635, 647, 650, 670 or 680 nm, especially semi-conductor lasers, such as GaAsAl, InGaAIP or GaAs laser diodes having a wavelength especially of about 635, 650 or 658 nm, with a wavelength of from 380 to 420 nm, especially 405 ± 5 nm, for the blue-violet range. The recording is generally effected point for point, by modulating the laser in accordance with the mark lengths and focussing its radiation onto the recording layer.

The method according to the invention allows the storage of information with great reliability and stability, distinguished by very good mechanical and thermal stability and by high light-stability and by sharp boundary zones of the pits. Special advantages include the high contrast, the low jitter and the surprisingly high signal/noise ratio, so that problem-free readout is achieved.

The readout of information is carried out according to methods known *per se* by registering the change in absorption or reflection using laser radiation, for example as described in "CD-Player und R-DAT Recorder" (Claus Biaesch-Wiepke, Vogel Buchverlag, Würzburg 1992).

The information-containing medium according to the invention is especially an optical information material of the WORM type. It can be used, for example, as a playable DVD (digital versatile disk), as storage material for a computer or as an identification and security card or for the production of diffractive optical elements, for example holograms.

The invention accordingly relates also to a method for the optical recording, storage and playback of information, wherein a recording medium according to the invention is used. The recording and the playback advantageously take place in a wavelength range of from 600 to 700 nm, or less than 450 nm.

The compositions according to the invention are, moreover, suitable for the production of printing inks having excellent application properties for various uses such as intaglio/flexographic printing, sheet offset printing and sheet-metal printing, and for the production of colour filters that have an advantageously narrow absorption curve. The invention accordingly relates also to a printing ink or colour filter (optical filter) comprising a composition according to the invention, wherein oxonols are particularly preferred, wherein M^{k+} is a hydrogen cation. The invention relates especially to an optical filter comprising a support layer and a filter layer, wherein the filter layer comprises a composition according to the invention. The optical filters can themselves be used for example in electro-optical systems such as TV screens, liquid crystal displays, charge coupled devices, plasma displays or electroluminescent displays and the like.

The filter layer contains from 1 to 75 % by weight, preferably from 5 to 50 % by weight, most preferably from 25 to 40 % by weight, of the composition according to the invention, based on the total weight of the filter layer, dispersed in a high-molecular-weight organic material. The support layer is preferably substantially colourless (T ≥ 95 % in the entire visible range from 400 to 700 nm). Further details relating to the production of colour filters and the high-molecular-weight materials used in the production of colour filters are described, for example, in High-Technology Applications of Organic Colorants, Peter Gregory, Plenum Press, New York and London 1991, p. 15 to 25, WO01/04215 and WO02/10288 Optical filters having an absorption maximum in the range from 560 to 620 nm are, for example, suitable as very-narrow-band optical filters for plasma displays (see, for example, EP-A-1 124 144).

The printing inks of the invention contain the compositions of the invention judiciously in a concentration of from 0.01 to 40% by weight, preferably from 1 to 25% by weight, with particular preference from 5 to 10% by weight, based on the overall weight of the printing ink, and may be used, for example, for gravure printing, flexographic printing, screen printing, offset printing, or continuous or dropwise inkjet printing on paper, board, metal, wood, leather, plastic or textiles, or else in special applications in accordance with formulations which are general knowledge, for example in publishing, packaging or freight, in logistics, in advertising, in security printing or else in the office sector for ballpoint pens, felt-tip pens, fibre-tip pens, inking pads, ink ribbons or inkjet printer cartridges.

The Examples that follow illustrate the invention. Unless otherwise indicated, figures in percent and in parts are percent by weight and parts by weight, respectively.
Unless otherwise indicated, λₘₐₓ and ε were measured in DMF (dimethylformamide).

In the Examples hereinbelow, the ammonium salt of Primene 81 R@ (Rohm & Haas Company, mixture of C₁₂₋₁₄amine isomers) is shown in idealised form:

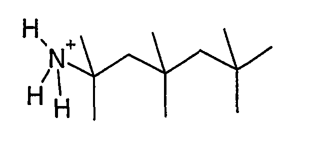

### Example 1:

100 parts of N-(3-isopropoxy-propyl)-3-cyano-4-methyl-6-hydroxy-2-pyridone are stirred with 33 parts of 1,1,3,3-tetramethoxy-propane in 120 parts of pyridine for 2 hours at 110°C under inert gas. After cooling to room temperature, the reaction product is precipitated out, and the solid material is separated off by means of suction filtration and washed, in succession, with 25 parts of pyridine and 200 parts of water. The target compound of the formula indicated below is dried at 90°C *in vacuo* (120 mbar) (yield: 63 %). 53 parts of the crude product are stirred in 300 parts of methanol for 10 minutes at 70°C. After cooling, the residue is separated off by means of suction filtration, washed with 100 parts of methanol and dried at 90°C *in vacuo* (yield: 66 %). 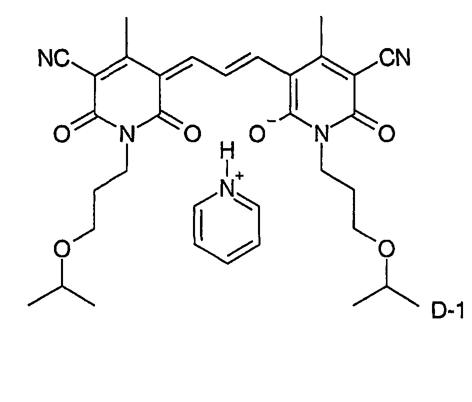 λₘₐₓ = 603 nm (ε: 148 469) in DMF

### Example 2:

57 parts of the product obtained in Example 1 are stirred in 300 parts of methanol at room temperature, and 11 parts of Primene 81 R® (Rohm & Haas Company, mixture of C₁₂₋₁₄amine isomers) are added. The solution is treated with active carbon and the filtrate is concentrated. The residue is dried at 90°C. A blue product of the formula indicated below is obtained (yield: 56 %). 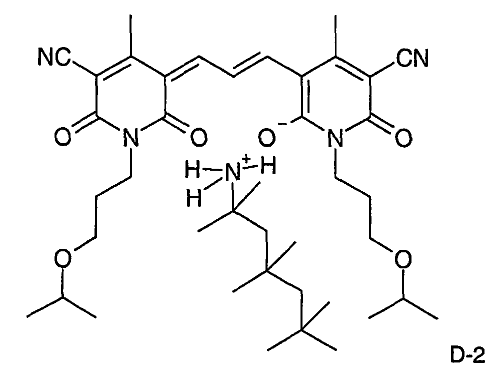 λₘₐₓ = 603.5nm (ε:199 536) in DMF

The compounds D-3 to D-17 indicated below can be obtained in analogy to the methods described in Examples 1 and 2:

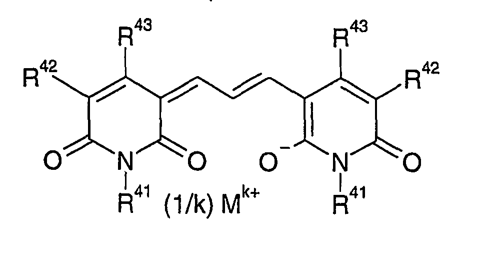

| Example | Compound | R⁴¹ | R⁴² | R⁴³ | (1/K) M^{K+} | λₘₐₓ | ε |
|---|---|---|---|---|---|---|---|
| 3 | D-3 | H | CN | CH₃ | K-1 | 603.5 | 198 600 |
| 4 | D-4 | CH₃ | CN | CH₃ | K-1 | 601.5 | 116500 |
| 5 | D-5 | CH₃ | CN | CH₃ | K-2 | 601.8 | 200 300 |
| 6 | D-6 | C₂H₅ | CN | CH₃ | K-1 | 602.6 | 187 500 |
| 7 | D-7 | C₂H₅ | CN | CH₃ | K-2 | 603 | 194 300 |
| 8 | D-8 | ¹⁾ | CN | CH₃ | M-1 | | |
| 9 | D-9 | ¹⁾ | CN | CH₃ | M-2 | | |
| 10 | D-10 | ¹⁾ | CN | CH₃ | M-3 | | |
| 11 | D-11 | ¹⁾ | CN | CH₃ | M-4 | | |
| 12 | D-12²⁾ | phenyl | CN | CH₃ | K-2 | 605.2 | 138 200 |
| 13 | D-13 | C₂H₅ | C(O)NH₂ | CH₃ | K-2 | 589 | |
| 14 | D-14²⁾ | ¹⁾ | CN | CH₃ | K-3 | 602.9 | 176000 |
| 15 | D-15 | ¹⁾ | CN | CH₃ | K-2 | 603.5 | 199 500 |
| 16 | D-16 | ¹⁾ | CN | CH₃ | K-1 | | |
| 17 | D-17 | ¹⁾ | CN | CH₃ | K-4 | | |
| 48 | D-48²⁾ | H | CN | CH₃ | K-3 | 603.3 | 214 200 |
| 49 | D-49²⁾ | C₂H₅ | CN | CH₃ | K-3 | 602.7 | 217 600 |
| 52 | D-52³⁾ | C₂H₅ | H | CH₃ | K-2 | | |
| 53 | D-53³⁾ | H | H | COO⁻ | K-2 | | |
| 54 | D-54³⁾ | C₂H₅ | C(O)NH₂ | CH₃ | K-2 | | |

| | | | | | | | |
|---|---|---|---|---|---|---|---|
| ¹⁾ CH₂CH₂CH₂-O-CH(CH₃)₂. | | | | | | | |
| ²⁾ These compounds are obtained in accordance with, or in analogy to, the method described in Example 12. | | | | | | | |
| ³⁾ These compounds are obtained in accordance with, or in analogy to, the method described in Example 53. | | | | | | | |

### Example 12

22.62 g (0.1 mol) of N-phenyl-3-cyano-4-methyl-6-hydroxy-2-pyridone together with 8.21 g (0.05 mol) of tetramethoxypropane, 9.27 g (0.05 mol) of Primene 81 R® in 200 ml of n-butanol are boiled under reflux for 18 hours. The suspension is filtered whilst hot and then cooled. The blue product that precipitated out is filtered off under suction, washed with ethanol and dried at 80°C *in vacuo* (120 mbar).

The compounds D-20 to D-31 indicated below are obtained in analogy to the methods described in Examples 1, 2 and 12, with a mixture of two different starting materials in a ratio of 50:50 being used instead of a single N-(3-isopropoxy-propyl)-3-cyano-4-methyl-6-hydroxy-2-pyridone starting material:

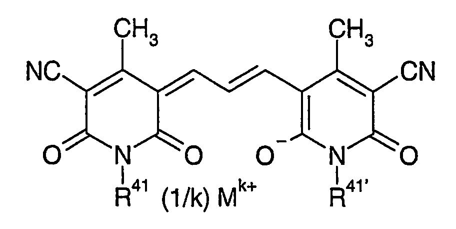

| Example | Compound | R⁴¹ | R^{41'} | (1/k) M^{K+} |
|---|---|---|---|---|
| 18 | D-20 | CH₃ | C₂H₅ | K-2¹⁾ |
| 18 | D-7 | C₂H₅ | C₂H₅ | K-2¹⁾ |
| 18 | D-5 | CH₃ | CH₃ | K-2¹⁾ |
| 19 | D-21 | phenyl | C₂H₅ | K-2²⁾ |
| 19 | D-7 | C₂H₅ | C₂H₅ | K-2²⁾ |
| 19 | D-12 | phenyl | phenyl | K-2²⁾ |
| 20 | D-22 | phenyl | CH₂CH₂CH₂-O- CH(CH₃)₂ | K-2³⁾ |
| 20 | D-15 | CH₂CH₂CH₂-O- CH(CH₃)₂ | CH₂CH₂CH₂-O- CH(CH₃)₂ | K-2³⁾ |
| 20 | D-12 | phenyl | phenyl | K-2³⁾ |
| 21 | D-23 | C₂H₅ | CH₂CH₂CH₂-O- CH(CH₃)₂ | K-2⁴⁾ |
| 21 | D-15 | CH₂CH₂CH₂-O- CH(CH₃)₂ | CH₂CH₂CH₂-O- CH(CH₃)₂ | K-2⁴⁾ |
| 21 | D-7 | C₂H₅ | C₂H₅ | K-2⁴⁾ |

| | | | | |
|---|---|---|---|---|
| ¹⁾ The mixture of D20: D7: D5 obtained in Example 18 exhibits a λₘₐₓ of 601.9 nm. | | | | |
| ²⁾ The mixture of D21: D7: D12 obtained in Example 19 exhibits a λₘₐₓ of 603.3 nm. | | | | |
| ³⁾ The mixture of D22: D15: D12 obtained in Example 20 exhibits a λₘₐₓ of 603.9 nm. | | | | |
| ⁴⁾ The mixture of D23: D15: D7 obtained in Example 21 exhibits a λₘₐₓ of 602.8 nm. | | | | |

### Example 22:

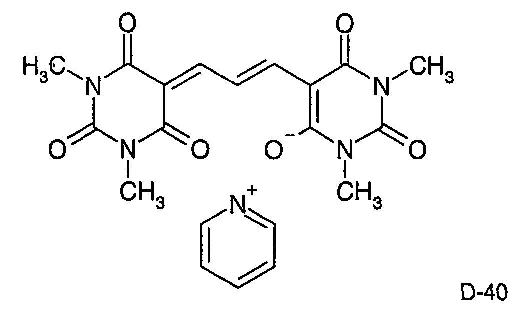

(λₘₐₓ = 492.6 nm; ε = 151 500)

### Example 23:

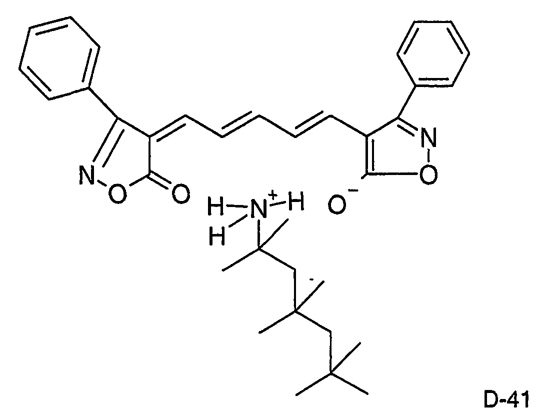

(λₘₐₓ= 610 nm (acetonitrile))

### Example 24:

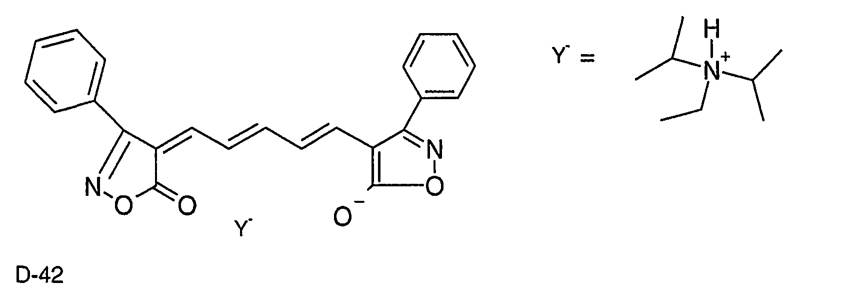

(λₘₐₓ = 610 nm (acetonitrile))

### Example 25:

246 mg of the pyridinium salt of the oxonol dye (≅ D-16) indicated below are dissolved in 40 ml of acetone at room temperature. 256 mg of the perchlorate salt of the cyanine dye indicated below are dissolved in 25 ml of acetone and added dropwise to the solution of the oxonol dye. The solution is stirred for half an hour at room temperature, filtered and concentrated by evaporation. The residue is taken up in 18 ml of methylene chloride, washed three times with 15 ml of water and concentrated by evaporation. 466.1 mg of the ion pair indicated below are obtained. 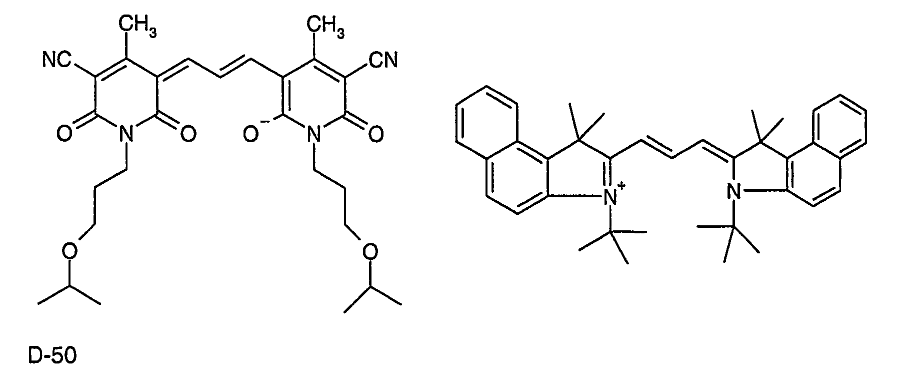 D-50 (λₘₐₓ = 596 nm; ε = 236 200 (ethanol))

### Example 26:

61.5 mg of the pyridinium salt of the oxonol dye indicated below (≅ D-16) are dissolved in 25 ml of ethanol at 30-40°C. 58 mg of the iodide salt of the cyanine dye indicated below are dissolved in 20 ml of ethanol and added dropwise to the solution of the oxonol dye. The solution is stirred for half an hour at room temperature, filtered and concentrated by evaporation. The residue is taken up in 4 ml of deionised water, treated with ultrasound for half an hour, filtered and dried. 102.1 mg of the ion pair indicated below are obtained.

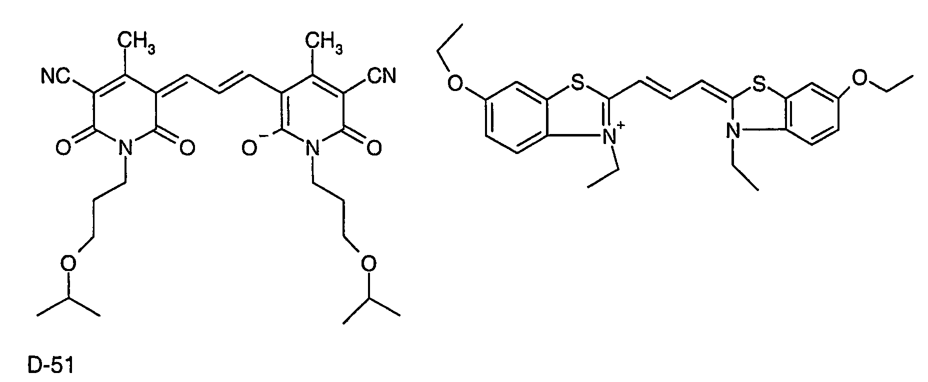

### Example 27:

100 mg of D-50 obtained in Example 25 are dissolved in 25 ml of methanol at room temperature. 30.6 mg of M-5 are dissolved in 80 ml of methanol at from 45 to 50°C and added to the solution of D-50. The solution is stirred for half an hour at room temperature, filtered and concentrated by evaporation. The residue is taken up in 4 ml of deionised water, treated with ultrasound for half an hour, filtered and dried. 130.1 mg of a mixture of D-50 and M-5 are obtained.

### Example 28

A solution of 3 parts of ethylenediamine in 20 parts of ethanol is added to a solution of 12 parts of salicylaldehyde in 100 parts of ethanol and the resulting mixture is heated until a solution is obtained. 9 parts of copper acetate in water are added, a grey precipitate being obtained. The mixture is cooled and filtered, a greenish solid of the following formula being obtained:

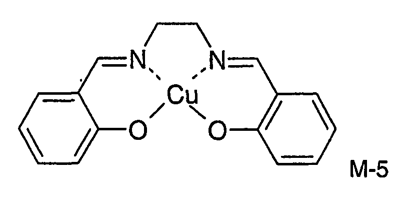

### Example 53

15.4 g (0.1 mol) of citrazinic acid together with 8.16 g (0.05 mol) of tetramethoxypropane and 15 ml of hydrochloric acid (conc.) are suspended in 100 ml of 2-ethoxyethanol and boiled under reflux for 17 hours. After cooling, the precipitate is filtered off under suction, washed with methanol and dried at 80°C *in vacuo* (120 mbar). 7.37 g of blue product are obtained, which is converted to D-53 using Primene 81R®.

The complexes indicated in Table 2 below can be obtained in analogy to the method described in Example 28.

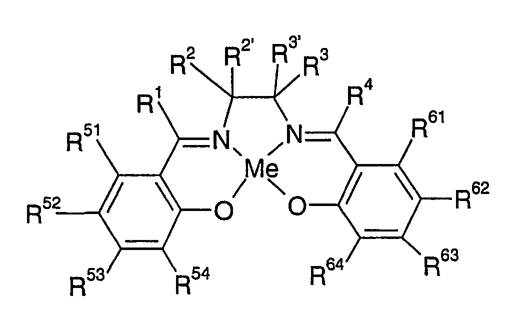

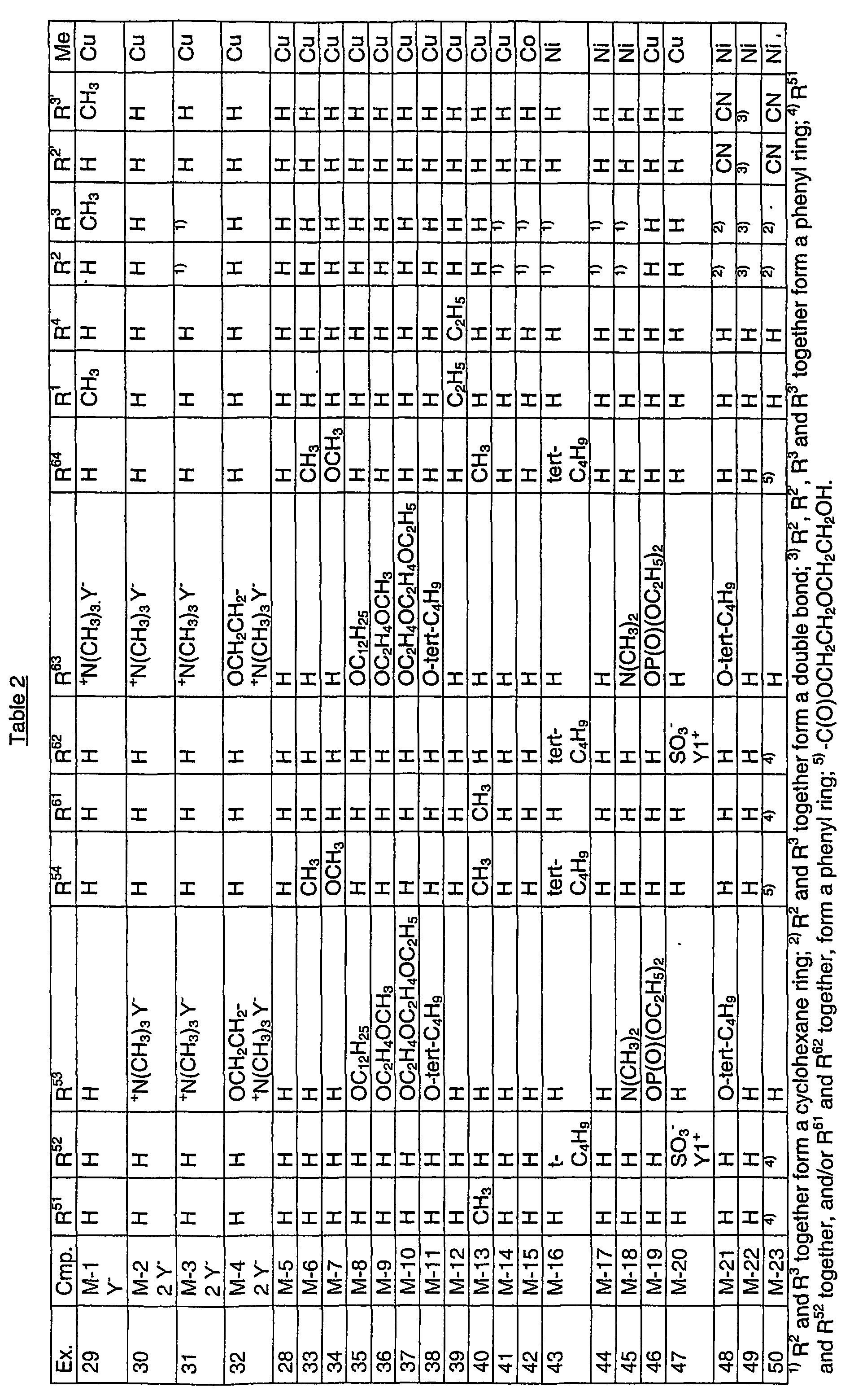

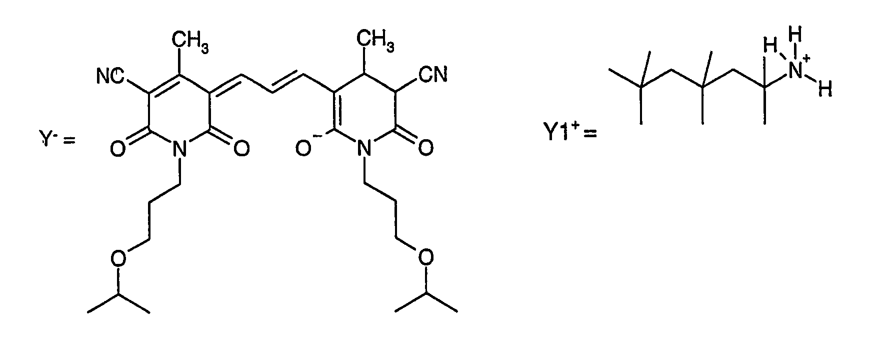

### Example 54

2.80 g N,N-diphenylbarbituric acid and 1.43 g mono-hydrochloride salt of N-[5-(phenylamino)-2,4-pentadienylidene]aniline are dissolved in 40 ml acetone and cooled in an ice-bath to 5°C. Then 3 ml triethylamine are added and the mixture is stirred for 3 h. The violet solution is concentrated by evaporation, the residue is washed with diethyl ether and water and dried at 45°C. 3.14 g of the ion pair D-54 indicated below are obtained.

The compounds D-55 to D-70 indicated below can be obtained in analogy to the method described in Examples 54: 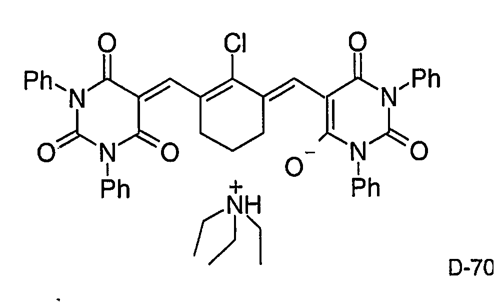 (λₘₐₓ = 552 nm)

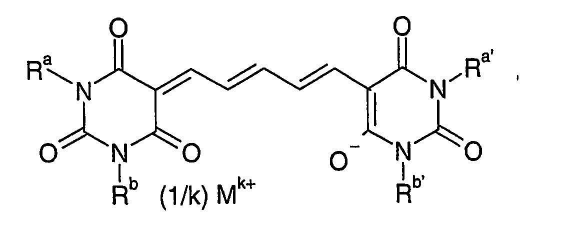

| Example | Compound | R^{a} | R^{a'} | R^{b} | R^{b'} | (1/k) M^{K+} | λₘₐₓ | ε |
|---|---|---|---|---|---|---|---|---|
| 54 | D-54 | Ph | Ph | Ph | Ph | K-8 | 597.2 | 175936 |
| 55 | D-55 | CH₃ | CH₃ | CH₃ | CH₃ | K-8 | 594.4 | 62550 |
| 56 | D-56 | CH₃ | CH₃ | CH₃ | CH₃ | K-3 | 594.7 | 148970 |
| 57 | D-57 | tBu | tBu | C₂H₅ | C₂H₅ | K-9 | - | - |
| 58 | D-58 | CH₃ | CH₃ | CH₃ | CH₃ | K-9 | - | - |
| 59 | D-59 | tBu | tBu | C₂H₅ | C₂H₅ | K-8 | 597.2 | 95732 |
| 60 | D-60 | H | H | Ph | Ph | K-8 | 602.9 | 148327 |
| 61 | D-61 | ¹⁾ | ¹⁾ | tBu | tBu | K-8 | - | - |
| 62 | D-62 | ¹⁾ | ¹⁾ | ¹⁾ | ¹⁾ | K-8 | - | - |
| 63 | D-63 | Ph | Ph | Ph | Ph | K-9 | 597.1 | - |
| 64 | D-64 | ¹⁾ | ¹⁾ | H | H | K-8 | 593.4 | - |
| 65 | D-65 | Ph | Ph | H | H | K-9 | 594.4 | 133022 |
| 66 | D-66 | Ph | Ph | H | H | K-2 | 594.2 | 142542 |
| 67 | D-67 | ¹⁾ | ¹⁾ | ¹⁾ | ¹⁾ | K-9 | - | - |
| 68 | D-68 | Ph | n-Bu | n-Bu | Ph | K-8 | - | - |
| 69 | D-69 | Ph | n-Bu | n-Bu | Ph | K-9 | - | - |

| | | | | | | | | |
|---|---|---|---|---|---|---|---|---|
| ¹⁾ -CH₂-CH=CH₂. | | | | | | | | |

### Application Example 1

1.5 % by weight of an equimolar mixture of M-5 and D-2 according to Example 2 are dissolved in 1-propanol and the solution was filtered through a Teflon filter having a pore size of 0.2 µm and applied, by the spin-coating method, at 1000 rev/min to the surface of a 0.6 mm-thick, grooved polycarbonate disc (groove depth 170 nm, groove width 350 nm, track spacing 0.74 µm) of diameter 120 mm. Excess solution is spun off by increasing the rotational speed. On evaporation of the solvent, the dye remained behind in the form of a uniform, amorphous solid layer. After drying in a circulating-air oven at 70°C (10 minutes), the solid layer exhibits an absorption of 0.50 at 623 nm. In a vacuum coating apparatus (Twister™, Balzers Unaxis), a 70 nm-thick layer of silver is then applied, by atomisation, to the recording layer. Then a 6 µm-thick protective layer of a UV-curable photopolymer (650-020, DSM) was applied thereto by means of spin-coating. The recording support exhibited a reflectivity of 48 % at 658 nm.

Using a commercial test apparatus (DVDT-R™, Expert Magnetics), marks are written into the active layer at a speed of 3.5 m/sec and a laser power of 9.5 mW using a laser diode of wavelength 658 nm. The dynamic parameters are then determined using the same test apparatus, with good measurement values being obtained: DTC jitter = 9.0 %; R14H = 47 %; I14/14H = 0.6.

### Application Example 2

0.2 % by weight of compound D-7 according to Example 7 are dissolved in a plasticiser, in one instance together with, and in one instance without, an equimolar addition of compound M-5 of Example 28, and then incorporated at 160°C into a PVC film. The absorption spectrum of the two films is measured using a commercial UVNIS spectrophotometer (Carey). The half-value width measured at 580 nm was 65 nm in the case of the filter comprising the aggregated form (without the addition) and, in the case of the disaggregated form, is 24.5 nm at 613 nm.

### Application Example 3

83.3 g of zircon ceramic beads, 2.8 g of an equimolar mixture of M-5 and D-2, 0.28 g of Solsperse® 5000, 4.10 g of Disperbyk® 161 (dispersant/BYK Chemie: 30% solution of a high molecular mass block copolymer having groups with pigment affinity, in 1:6 n-butyl acetate/1-methoxy-2-propyl acetate) and 14.62 g of propylene glycol monomethyl ether acetate (MPA, CAS Reg. Nº 108-65-6) in a 100 ml glass vessel are stirred at 23°C with a Dispermat at 1000 rpm for 10 minutes and at 3000 rpm for 180 minutes. Following the addition of 4.01 g of acrylic polymer binder (35% solution in MPA) at room temperature, stirring is continued at 3000 rpm for 30 minutes. After the beads have been separated off, the dispersion is diluted with an equal amount of MPA. A glass substrate (Corning Type 1737-F) is coated with this dispersion in a paint spin-coating apparatus and is spun at 1000 rpm for 30 s. The drying of the coat is carried out at 100°C for 2 minutes and at 200°C for 5 minutes on a hotplate. The coating thickness of the resultant bright violet/blue film is 0.4 µm.

### Application Example 4

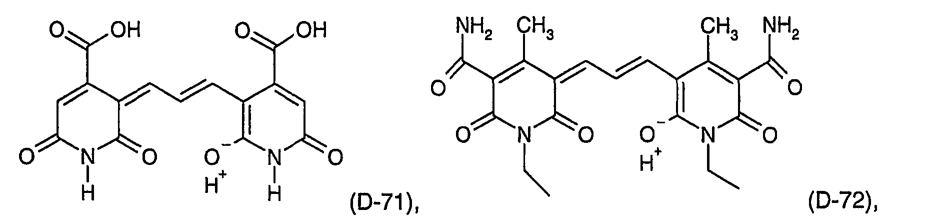

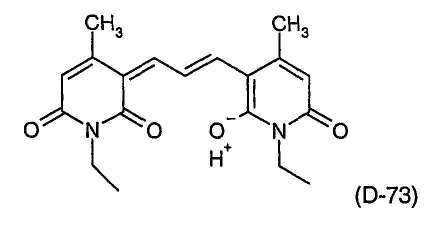

0.01 mol of the oxonol D-71 are dissolved in 50 ml trifluoroacetic acid (TFA). 0.01 mol M-5 are also dissolved in TFA. Both solutions are mixed under vigorous stirring. The obtained dark violet precipitate is filtered off, washed with water until neutral, dried and sieved.

In a 100 ml glass vessel containing 83.3 g of zircon ceramic beads, 2.8 g of the above product (D-71/M-5), 0.28 g of Solsperse® 5000, 4.10 g of Disperbyk® 161 (dispersant/BYK Chemie: 30% solution of a high molecular mass block copolymer having groups with pigment affinity, in 1:6 n-butyl acetate/1-methoxy-2-propyl acetate) and 14.62 g of propylene glycol monomethyl ether acetate (MPA, CAS Reg. Nº 108-65-6) are stirred at 23°C with a Dispermat at 1000 rpm for 10 minutes and at 3000 rpm for 180 minutes. Following the addition of 4.01 g of acrylic polymer binder (35% solution in MPA) at room temperature, stirring is continued at 3000 rpm for 30 minutes. After the beads have been separated off, the dispersion is diluted with an equal amount of MPA. A glass substrate (Corning Type 1737-F) is coated with this dispersion in a paint spin-coating apparatus and is spun at 1000 rpm for 30 s. The drying of the coat is carried out at 100°C for 2 minutes and at 200°C for 5 minutes on a hotplate. The coating thickness achieved is 0.4 µm. A bright violet/blue film is obtained.

If instead of 2.8 g of the product (D-71/M-5) 0.8 - 2.0 g epsilon CuPc (Atlantic Blue) and 0.8 -2.0 g of the product (D-71/M-5) are used, a bright blue film is obtained. With more oxonol the color becomes more violet.

Similar results are obtained, if instead of the oxonol D-71 the oxonol D-72 or D-73 is used.

## Claims

1. A composition comprising at least one oxonol dye and at least one metal complex of the following formula 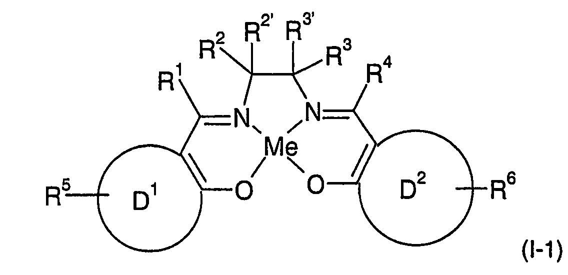 or 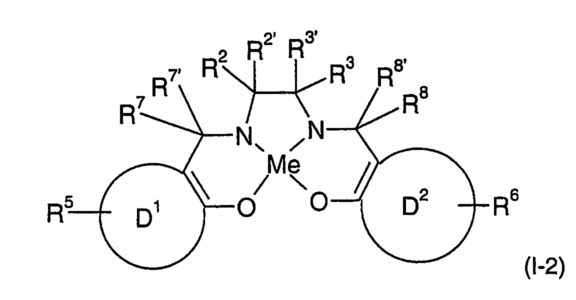 wherein
Me is a transition metal of Sub-Group 7, 8, 9, 10, 11 or 12, preferably 9, 10 or 11,
D¹ and D² are each independently of the other a carbocyclic or heterocyclic ring or ring system, which may be unsubstituted or substituted by one or more groups R⁵ and R⁶, R⁵ and R⁶ being a halogen atom, such as fluorine, chlorine or bromine, an amino group, an alkylamino group, a dialkylamino group, a nitro group, a cyano group, a hydroxy group, an unsubstituted or substituted alkyl radical, an unsubstituted or substituted hydroxyalkyl radical, an unsubstituted or substituted alkoxy radical, an alkyl radical which is interrupted one or more times by -O- or by -S- and which may be unsubstituted or substituted, an acyl radical, a phenyl group, an ester group, such as a phosphonic acid, phosphoric acid or carboxylic acid ester group, a carboxamide group, a sulfamide group, an ammonium group, a carboxylic acid, sulfonic acid, phosphonic acid or phosphoric acid group or a salt thereof,
R¹ and R⁴ are each independently of the other a hydrogen atom or an unsubstituted or substituted alkyl radical, aryl radical or aralkyl radical,
R², R^{2'}, R³ and R^{3'} are each independently of the others a hydrogen atom, a cyano group, an unsubstituted or substituted alkyl radical, alkoxy radical, aryl radical or aralkyl radical, an ester group, a carboxamide group, a sulfamide group, a trialkylammonium group, a carboxylic acid, sulfonic acid, phosphonic acid or phosphoric acid group or a salt thereof, or
R² and R³ together, or R^{2'} and R^{3'} together, form a double bond, a cycloalkyl ring or a heterocyclic ring, or
R², R^{2'}, R³ and R^{3'} together form an aromatic carbocyclic or heterocyclic ring,
R² and R³ together, and/or R^{2'} and R^{3'} together, form, each pair independently of the other, a carbonyl group or a thiocarbonyl group,
R⁷, R^{7'}, R⁸ and R^{8'} are each independently of the others a hydrogen atom or an unsubstituted or substituted alkyl radical, aryl radical or aralkyl radical, or
R⁷ and R^{7'} together, and/or R⁸ and R^{8'} together, form, each pair independently of the other, a carbonyl group or a thiocarbonyl group.

2. A composition according to claim 1, wherein the oxonol dye is a dye of formula 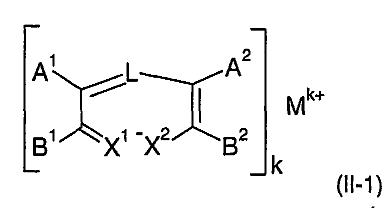 or 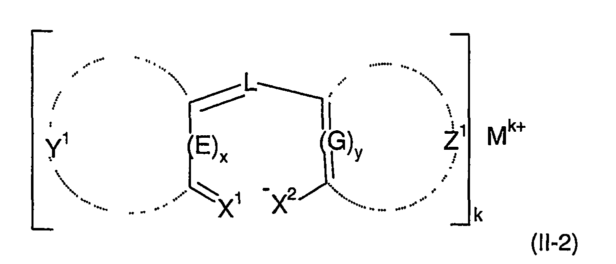 wherein A¹, A², B¹ and B² are in each case a substituent; Y¹ and Z¹ are in each case a group of atoms necessary for the formation of a carbocyclic or heterocyclic ring; E and G are in each case a group of atoms necessary for the formation of a chain having conjugated double bonds; X¹ is =O, =NR⁹ or =C(CN)₂, R⁹ being a substituent; X² is -O, -NR⁹ or -C(CN)₂, R⁹ being a substituent; L is a methine group, which may be substituted, or a group by means of which a polymethine group is completed, it being possible for 3, 5 or 7 methine groups to be connected in order to form a chain having conjugated double bonds, which chain may be substituted; M^{k+} is an organic or inorganic cation, it being possible for the metal complex of formula (I-1) or (1-2) to be the cation provided it carries one or more positive charge(s); x and y are 0 or 1, and k is an integer from 1 to 10.

3. A composition according to either claim 1 or claim 2, wherein M^{k+} is an ammonium cation or a cationic dye.

4. A composition according to claim 3, wherein the cationic dye has an absorption maximum in the range from 550 to 620 nm and/or less than 450 nm.

5. A composition according to any one of claims 1 to 3, wherein the oxonol dye has the following general formula 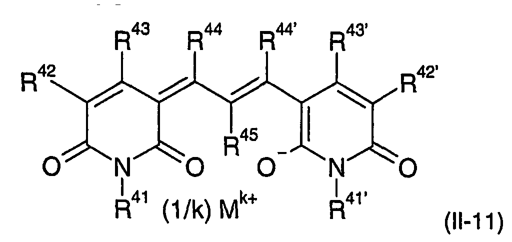 or 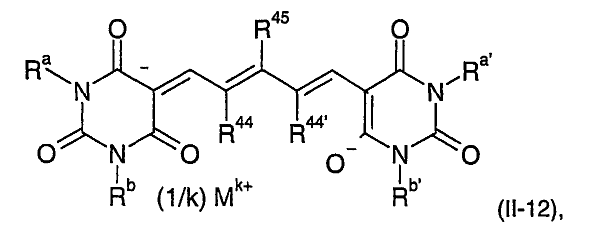 wherein M^{k+} is an ammonium cation, k is an integer from 1 to 4, especially 1 or 2,
R^{a}, R^{b}, R^{a'} and R^{b'} are each independently of the other a hydrogen atom, a C₁₋₈alkyl radical, in particular a C₁₋₄alkyl radical, a hydroxy-C₁₋₈alkyl radical, a C₁₋₈alkenyl radical, such as -CH₂-CH=CH₂, an unsubstituted or C₁₋₄alkyl- or C₁₋₄alkoxy-substituted C₆₋₁₂aryl, such as phenyl, or C₇₋₁₂aralkyl radical, such as benzyl,
R⁴¹ and R^{41'} are each independently of the other a hydrogen atom, a C₁₋₄alkyl radical, such as methyl or ethyl, or a perfluoro-C₁₋₄alkyl radical, such as trifluoromethyl, a hydroxy-C₁₋₄alkyl radical, or a C₁₋₈alkyl radical interrupted one or more times by -O-, such as CH₂CH₂CH₂-O-CH(CH₃)₂, a C₆₋₁₀aryl radical, such as phenyl, or a C₇₋₁₂aralkyl radical, such as benzyl,
R⁴² and R^{42'} are each independently of the other a hydrogen atom, a cyano or carboxamide group,
R⁴³ and R^{43'} are each independently of the other a hydrogen atom, a carboxylic acid group or a salt thereof or a C₁₋₄alkyl radical,
R⁴⁴ and R^{44'} are each independently of the other a hydrogen atom, a C₁₋₄alkyl radical, a C₆₋₁₂aryl or C₇₋₁₂aralkyl radical, or
R⁴⁴ and R^{44'} together form a five-membered or six-membered ring, such as a cyclohexenyl or cyclopentenyl ring, and
R⁴⁵ is a hydrogen atom, a halogen atom, especially a chlorine atom, an unsubstituted or C₁₋₄alkyl- or C₁₋₄alkoxy-substituted C₆₋₁₂aryl radical, such as phenyl or p-methylphenyl, or C₇₋₁₂aralkyl radical, such as benzyl.

6. A composition according to claim 5, wherein M^{k+} is selected from the following cations: 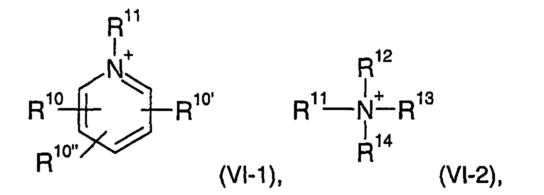 wherein R¹⁰, R^{10'} and R^{10"} are each independently of the others a hydrogen atom, a C₃₋₂₄cycloalkyl radical which is unsubstituted or substituted, for example by from one to three C₁₋₄alkyl radicals, such as cyclohexyl or 3,3,5-trimethylcyclohexyl or rosin amine D, or a straight-chain or branched C₁₋₂₄alkyl radical, R¹¹, R¹², R¹³ and R¹⁴ are a hydrogen atom, a straight-chain or branched C₁₋₃₆alkyl radical, preferably C₁₋₁₆alkyl radical, which may be unsubstituted or substituted, a straight-chain or branched hydroxy-C₁₋₃₆alkyl radical, especially hydroxy-C₁₋₈alkyl radical, C₆₋₂₄aryl radical, especially C₆₋₁₀aryl radical, or C₇₋₂₄aralkyl radical, especially C₇₋₁₂aralkyl radical, or two of the radicals R¹¹, R¹², R¹³ and R¹⁴, together with the nitrogen atom to which they are bonded, form a five- or six-membered heterocyclic ring, such as pyrrolidino, piperidino or morpholino; or 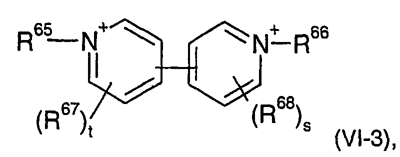 preferably 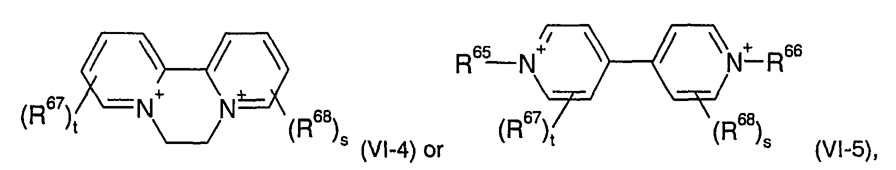 wherein R⁶⁷ and R⁶⁸ are each independently of the other a substituent, R⁶⁵ and R⁶⁶ are each independently of the other a substituted or unsubstituted alkyl radical, a substituted or unsubstituted alkenyl radical, a substituted or unsubstituted alkynyl radical, a substituted or unsubstituted aralkyl radical, a substituted or unsubstituted aryl radical or a substituted or unsubstituted heterocyclic radical, it being possible for the pairs R⁶⁷ and R⁶⁸, R⁶⁷ and R⁶⁵, R⁶⁸ and R⁶⁶, and R⁶⁵ and R⁶⁶ to be connected to form a ring, and s and t are each independently of the other 0 or an integer from 1 to 4, provided that when s and t have a value of 2 or more the groups R⁶⁷ and R⁶⁸ may be the same or different; or of formula 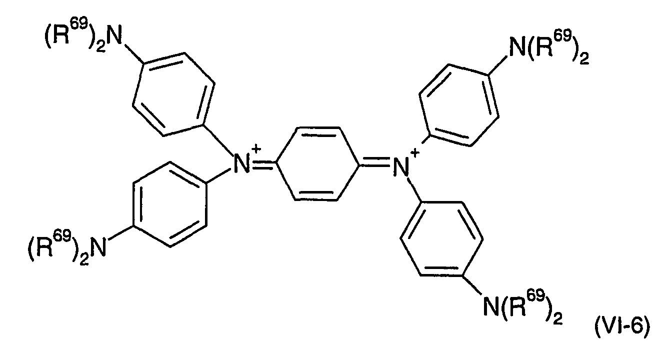 wherein R⁶⁹ is a straight-chain or branched C₁₋₈alkyl radical, especially methyl, ethyl, propyl, butyl or tert-butyl, which may be unsubstituted or substituted, for example by a cyano group, a halogen atom or by a C₁₋₄alkoxy radical; 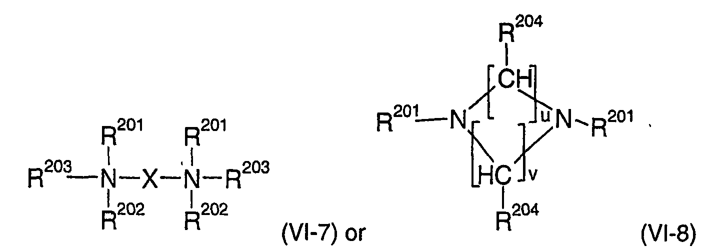 wherein R²⁰¹, R²⁰² and R²⁰³ are each independently of the others a hydrogen atom, a straight-chain or branched C₁₋₃₆alkyl radical, preferably C₁₋₁₆alkyl radical, which may be unsubstituted or substituted, a hydroxy-C₁₋₃₆alkyl radical, especially hydroxy-C₁₋₈alkyl radical, which is unsubstituted or substituted by one or more C₁₋₄alkyl and/or C₁₋₄alkoxy radicals, a C₃₋₂₄cycloalkyl radical, especially C₅₋₇cycloalkyl radical, a C₆₋₂₄aryl radical, especially C₆₋₁₀aryl radical, or a C₇₋₂₄aralkyl radical, especially C₇₋₁₂aralkyl radical, or two of the radicals R²⁰¹, R²⁰² and R²⁰³, together with the nitrogen atom to which they are bonded, form a five- or six-membered heterocyclic ring, R²⁰⁴ is a hydrogen atom, a C₁₋₄alkyl or C₁₋₄alkoxy radical, u and v are integers from 1 to 3, the sum of u and v being 3, 4 or 5, and
X is a divalent connecting group, such as a C₁₋₈alkylene radical which is unsubstituted or substituted by one or more C₁₋₄alkyl and/or C₁₋₄alkoxy radicals, or a group 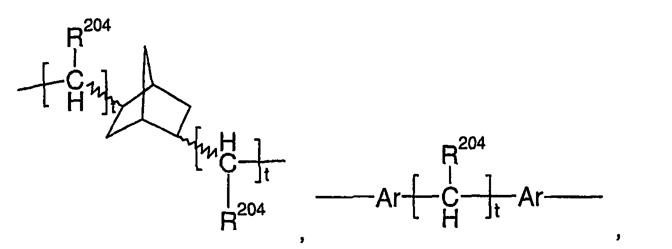 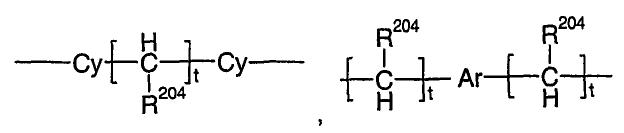 or 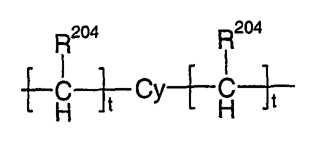 wherein R²⁰⁴ is as defined hereinbefore, Ar is a C₆₋₁₀aryl radical which is unsubstituted or substituted by one or more C₁₋₄alkyl and/or C₁₋₄alkoxy radicals, Cy is a C₅₋₇cycloalkyl radical which is unsubstituted or substituted by one or more C₁₋₄alkyl and/or C₁₋₄alkoxy radicals, and t is an integer from 0 to 4;
or a metal complex of formula 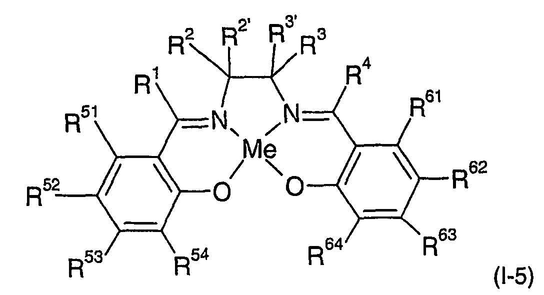 or 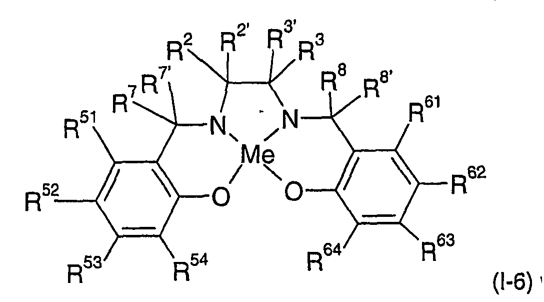 wherein
Me is Cu, Ni or Co,
R⁵¹, R⁵², R⁵³, R⁵⁴, R⁶¹, R⁶², R⁶³ and R⁶⁴ are a hydrogen atom, a chlorine atom, a bromine atom, a hydroxy group, a C₁₋₈alkyl radical which may be unsubstituted or substituted by a di- or tri-alkylammonium group, a C₁₋₁₆alkoxy radical which may be unsubstituted or substituted by a di- or tri-alkylammonium group, a C₁₋₈alkyl radical which is interrupted one or more times by -O- or by -S- and which may be unsubstituted or substituted by a di- or tri-alkylammonium group; an ester group, such as a phosphonic acid, phosphoric acid and carboxylic acid ester group, a carboxamide group, a sulfamide group or a di- or tri-alkylammonium group,
R¹ and R⁴ are each independently of the other a hydrogen atom or a C₁₋₈alkyl radical, R², R^{2'}, R³ and R^{3'} are a hydrogen atom, a cyano group or a C₁₋₈alkyl radical or pairs of the radicals R² and R^{2'}, R³ and R^{3'} together form a cyclohexane ring, at least one of the radicals R⁵¹, R⁵², R⁵³, R⁵⁴, R⁶¹, R⁶², R⁶³ and R⁶⁴ being a di- or tri-alkylammonium group or being substituted by a di- or tri-alkylammonium group,
R⁷, R^{7'}, R⁸ and R^{8'} are each independently of the others a hydrogen atom or an unsubstituted or substituted C₁₋₈alkyl radical, a phenyl group or a benzyl group, or
R⁷ and R^{7'} together, and/or R⁸ and R^{8'} together, form, each pair independently of the other, a carbonyl group or a thiocarbonyl group.

7. An optical recording medium comprising a substrate and at least one recording layer, wherein the recording layer comprises a composition according to any one of claims 1 to 6.

8. Use of a composition according to any one of claims 1 to 6 in the production of optical recording media, colour filters (optical filters) and printing inks.

9. A method of producing an optical recording medium, wherein a solution of a composition according to any one of claims 1 to 6 in a non-halogenated solvent is applied to a substrate having depressions.

10. An oxonol dye of formula (II-1) or (II-2) according to claim 2, wherein M^{k+} is a cationic dye.

11. A method according to claim 9, wherein the organic solvent is an alcohol.

12. Use of an oxonol dye according to claim 10 in optical information storage.

13. Use of a metal complex of formula (I-1), wherein Me, D¹ and D², R⁵ and R⁶, R¹ and R⁴ are as defined in claim 1, R² and R³ form a double bond, and R^{2'} and R^{3'} are cyano groups, in optical information storage.

14. An optical filter comprising a support layer and a filter layer, wherein the filter layer comprises a composition of the invention according to any one of claims 1 to 6.

15. A printing ink comprising a composition of the invention according to any one of claims 1 to 6.

## Patentansprüche

1. Zusammensetzung, umfassend zumindest einen Oxonolfarbstoff und mindestens einen Metallkomplex der folgenden Formel 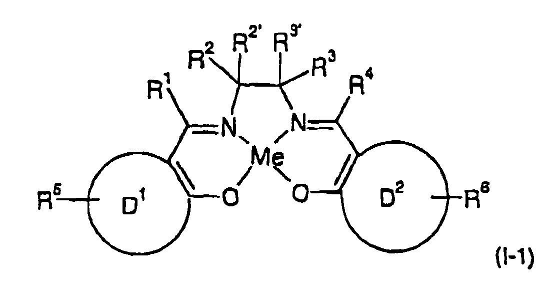 oder 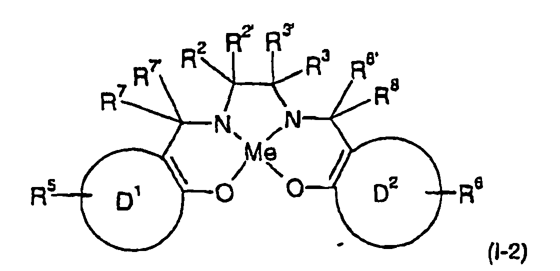 worin
Me ein Übergangsmetall der Untergruppe 7, 8, 9, 10, 11 oder 12, bevorzugt 9, 10 oder 11 ist, D¹ und D² jeweils unabhängig voneinander ein carbocyclischer oder heterocyclischer Ring oder ein Ringsystem sind, das unsubstituiert oder durch eine oder mehrere Gruppen R⁵ und R⁶ substituiert sein kann, wobei R⁵ und R⁶ ein Halogenatom, wie Fluor, Chlor oder Brom, eine Aminogruppe, eine Alkylaminogruppe, eine Dialkylaminogruppe, eine Nitrogruppe, eine Cyanogruppe, eine Hydroxygruppe, ein unsubstituierter oder substituierter Alkylrest, ein unsubstituierter oder substituierter Hydroxyalkylrest, ein unsubstituierter oder substituierter Alkoxyrest, ein Alkylrest, der ein- oder mehrmals durch -O- oder -S- unterbrochen ist, und unsubstituiert oder substituiert sein kann, ein Acylrest, eine Phenylgruppe, eine Estergruppe, wie eine Phosphonsäure-, Phosphorsäure- oder Carbonsäureestergruppe, eine Carboxamidgruppe, eine Sulfamidgruppe, eine Ammoniumgruppe, eine Carbonsäure-, Sulfonsäure-, Phosphonsäure- oder Phosphorsäuregruppe oder ein Salz hiervon sind,
R¹ und R⁴ jeweils unabhängig voneinander ein Wasserstoffatom oder ein unsubstituierter oder substituierter Alkylrest, Arylrest oder Aralkylrest sind,
R², R^{2'}, R³ und R^{3'} jeweils unabhängig voneinander ein Wasserstoffatom, eine Cyanogruppe, ein unsubstituierter oder substituierter Alkylrest, Alkoxyrest, Arylrest oder Aralkylrest, eine Estergruppe, eine Carboxamidgruppe, eine Sulfamidgruppe, eine Trialkylammoniumgruppe, eine Carbonsäure-, Sulfonsäure-, Phosphonsäure- oder Phosphorsäuregruppe oder ein Salz hiervon sind, oder
R² und R³ zusammen oder R^{2'} und R^{3'} zusammen eine Doppelbindung, einen Cycloalkylring oder einen heterocyclischen Ring bilden, oder
R², R^{2'}, R³ und R^{3'} zusammen einen aromatischen carbocyclischen oder heterocyclischen Ring bilden,
R² und R³ zusammen und/oder R^{2'} und R^{3'} zusammen, jedes Paar unabhängig voneinander, eine Carbonylgruppe oder eine Thiocarbonylgruppe bilden,
R⁷, R^{7'}, R⁸ und R^{8'} jeweils unabhängig voneinander ein Wasserstoffatom oder ein unsubstituierter oder substituierter Alkylrest, Arylrest oder Aralkylrest sind, oder
R⁷ und R^{7'} zusammen und/oder R⁸ und R^{8'} zusammen, jedes Paar unabhängig voneinander, eine Carbonylgruppe oder eine Thiocarbonylgruppe bilden.

2. Zusammensetzung nach Anspruch 1, wobei der Oxonolfarbstoff ein Farbstoff der Formel 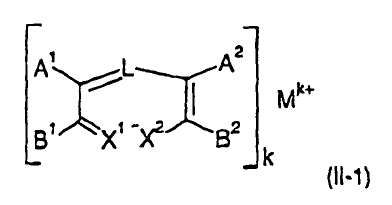 oder 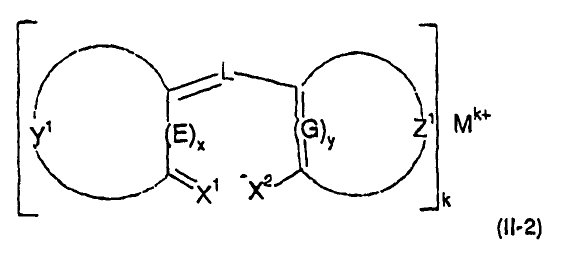 ist, worin
A¹, A², B¹ und B² in jedem Fall ein Substituent sind; Y¹ und Z¹ in jedem Fall eine Gruppe von Atomen sind, die für die Bildung eines carbocyclischen oder heterocyclischen Ringes erforderlich sind; E und G in jedem Fall eine Gruppe aus Atomen sind, die für die Bildung einer Kette mit konjugierten Doppelbindungen erforderlich sind; X¹ =O, =NR⁹ oder =C(CN)₂ ist, wobei R⁹ ein Substituent ist; X² -O, -NR⁹ oder -C(CN)₂ ist, wobei R⁹ ein Substituent ist; L eine Methingruppe ist, die substituiert sein kann, oder eine Gruppe, durch die eine Polymethingruppe vervollständigt wird, wobei 3, 5 oder 7 Methingruppen unter Bildung einer Kette mit konjugierten Doppelbindungen verbunden sein können, wobei die Kette substituiert sein kann; M ein organisches oder anorganisches Kation ist, wobei es möglich ist, daß der Metallkomplex der Formel (I-1) oder (I-2) das Kation sein kann, vorausgesetzt, es trägt ein oder mehrere positive Ladung(en); x und y 0 oder 1 sind und k eine ganze Zahl von 1 bis 10 ist.

3. Zusammensetzung nach Anspruch 1 oder Anspruch 2, worin M^{k+} ein Ammoniumkation oder ein kationischer Farbstoff ist.

4. Zusammensetzung nach Anspruch 3, wobei der kationische Farbstoff ein Absorptionsmaximum im Bereich von 550 bis 620 nm und/oder weniger als 450 nm aufweist.

5. Zusammensetzung nach einem der Ansprüche 1 bis 3, wobei der Oxonolfarbstoff die folgende allgemeine Formel aufweist 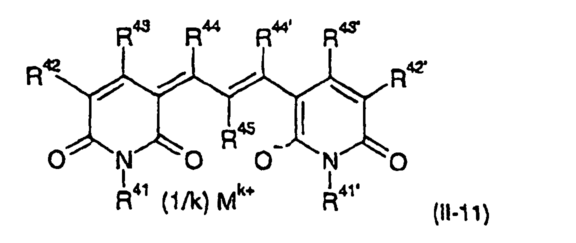 oder 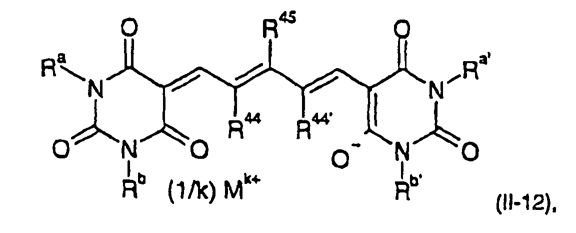 worin M^{k+} ein Ammoniumkation ist, k eine ganze Zahl von 1 bis 4, insbesondere 1 oder 2 ist, R^{a}, R^{b}, R^{a'} und R^{b'} jeweils unabhängig voneinander ein Wasserstoffatom, ein C₁₋₈-Alkylrest, insbesondere ein C₁₋₄-Alkylrest, ein Hydroxy-C₁₋₈-Alkylrest, ein C₁₋₈-Alkenylrest, wie -CH₂-CH=CH₂, ein unsubstituiertes oder C₁₋₄-Alkyl- oder C₁₋₄-Alkoxy-substituiertes C₆₋₁₂-Aryl, wie Phenyl, oder ein C₇₋₁₂-Aralkylrest, wie Benzyl, sind;
R⁴¹ und R^{41'} jeweils unabhängig voneinander ein Wasserstoffatom, ein C₁₋₄-Alkylrest, wie Methyl oder Ethyl, oder ein Perfluor-C₁₋₄-alkylrest, wie Trifluormethyl, ein Hydroxy-C₁₋₄-alkylrest oder ein C₁₋₈-Alkylrest, der ein oder mehrmals durch -O- unterbrochen ist, wie CH₂CH₂CH₂-O-CH(CH₃)₂, ein C₆₋₁₀-Arylrest, wie Phenyl, oder ein C₇₋₁₂-Aralkylrest wie Benzyl sind;
R⁴² und R^{42'} jeweils unabhängig voneinander ein Wasserstoffatom, eine Cyano- oder eine Carboxamidgruppe sind;
R⁴³ und R^{43'} jeweils unabhängig voneinander ein Wasserstoffatom, eine Carbonsäuregruppe oder ein Salz hiervon oder ein C₁₋₄-Alkylrest sind;
R⁴⁴ und R^{44'} jeweils unabhängig voneinander ein Wasserstoffatom, ein C₁₋₄-Alkylrest, ein C₆₋₁₂-Aryl- oder ein C₇₋₁₂-Aralkylrest sind oder
R⁴⁴ und R^{44'} zusammen einen fünf-gliedrigen oder sechs-gliedrigen Ring bilden, wie einen Cyclohexenyl- oder Cyclopentenylring, und
R⁴⁵ ein Wasserstoffatom, ein Halogenatom, insbesondere ein Chloratom, ein unsubstituierter oder C₁₋₄-Alkyl- oder C₁₋₄-Alkoxy-substituierter C₆₋₁₂-Arylrest, wie Phenyl oder p-Methylphenyl, oder ein C₇₋₁₂-Aralkylrest wie Benzyl ist.

6. Zusammensetzung nach Anspruch 5, wobei M^{k+} aus den folgenden Kationen 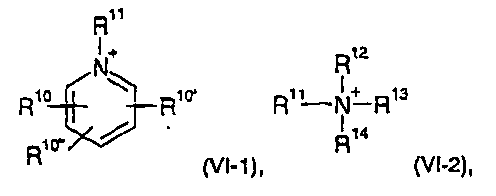 worin
R¹⁰, R^{10'} und R^{10"} jeweils unabhängig voneinander ein Wasserstoffatom, ein C₃₋₂₄-Cycloalkylrest, der unsubstituiert oder zum Beispiel durch einen bis drei C₁₋₄-Alkylreste substituiert ist, wie Cyclohexyl oder 3,3,5-Trimethylcyclohexyl oder Kolophoniumamin D, oder ein geradkettiger oder verzweigter C₁₋₂₄-Alkylrest sind,
R¹¹, R¹², R¹³ und R¹⁴ ein Wasserstoffatom, ein geradkettiger oder verzweigter C₁₋₃₆-Alkylrest, bevorzugt ein C₁₋₁₆-Alkylrest, der unsubstituiert oder substituiert sein kann, ein geradkettiger oder verzweigter Hydroxy-C₁₋₃₆-alkylrest, insbesondere Hydroxy-C₁₋₈-alkylrest, ein C₆₋₂₄-Arylrest, insbesondere C₆₋₁₀-Arylrest, oder ein C₇₋₂₄-Aralkylrest, insbesondere C₇₋₁₂-Aralkylrest sind, oder zwei der Reste R¹¹, R¹², R¹³ und R¹⁴ zusammen mit dem Stickstoffatom, an das sie gebunden sind, einen fünf- oder sechs-gliedrigen heterocyclischen Ring bilden, wie Pyrroildino, Piperidino oder Morpholino; oder 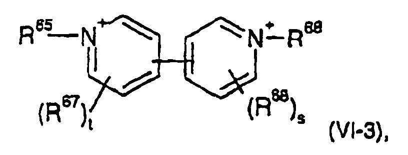 bevorzugt 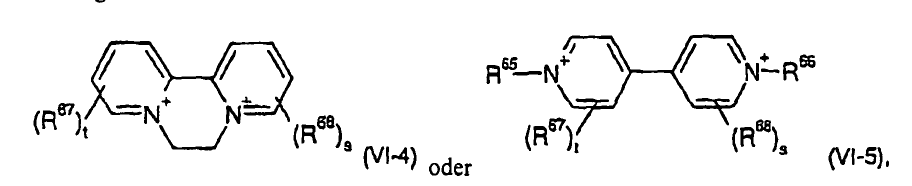 worin R⁶⁷ und R⁶⁸ jeweils unabhängig voneinander ein Substituent sind,
R⁶⁵ und R⁶⁶ unabhängig voneinander ein substituierter oder unsubstituierter Alkylrest, ein substituierter oder unsubstituierter Alkenylrest, ein substituierter oder unsubstituierter Alkinylrest, ein substituierter oder unsubstituierter Aralkylrest, ein substituierter oder unsubstituierter Arylrest oder ein substituierter oder unsubstituierter heterocyclischer Rest sind, wobei es möglich ist, daß die Paare R⁶⁷ und R⁶⁸, R⁶⁷ und R⁶⁵, R⁶⁸ und R⁶⁶ und R⁶⁵ und R⁶⁶ unter Bildung eines Rings verbunden sein können, und
s und t jeweils unabhängig voneinander 0 oder eine ganze Zahl von 1 bis 4 sind, vorausgesetzt, daß, wenn s und t einen Wert von 2 oder mehr haben, die Gruppen R⁶⁷ und R⁶⁸ gleich oder verscheiden sein können, oder der Formel 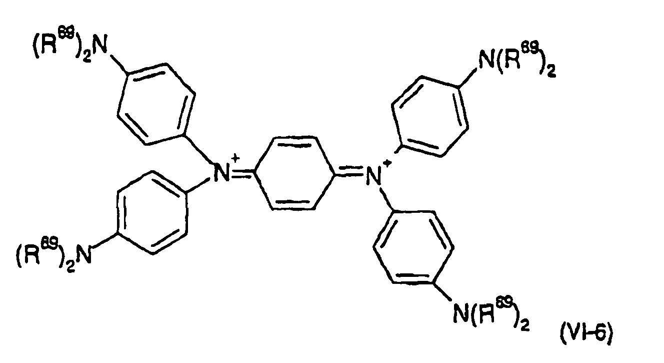 worin R⁶⁹ ein geradkettiger oder verzweigter C₁₋₈-Alkylrest, insbesondere Methyl, Ethyl, Propyl, Butyl oder tert-Butyl ist, der unsubstituiert oder zum Beispiel durch eine Cyanogruppe, ein Halogenatom oder durch einen C₁₋₄-Alkoxyrest substituiert sein kann; 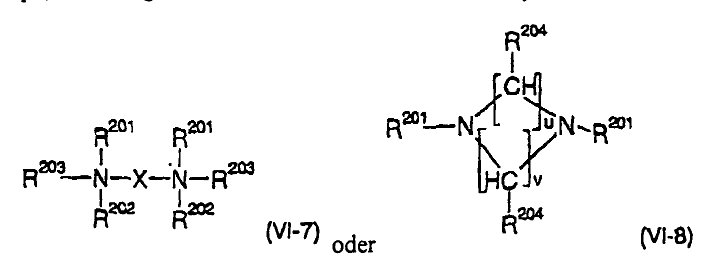 worin
R²⁰¹, R²⁰² und R²⁰³ jeweils unabhängig voneinander ein Wasserstoffatom, ein geradkettiger oder verzweigter C₁₋₃₆-Alkylrest, bevorzugt C₁₋₁₆-Alkylrest, der unsubstituiert oder substituiert ist, ein Hydroxy-C₁₋₃₆-alkylrest, insbesondere Hydroxy-C₁₋₈-alkylrest, der unsubstituiert oder durch einen oder mehrere C₁₋₄-Alkyl- und/oder C₁₋₄-Alkoxyreste substituiert ist, ein C₃₋₂₄-Cycloalkylrest, insbesondere C₅₋₇-Cycloalkylrest, ein C₆₋₂₄-Arylrest, insbesondere C₆₋₁₀-Arylrest oder ein C₇₋₂₄-Aralkylrest, insbesondere C₇₋₁₂-Aralkylrest, sind, oder zwei der Reste R²⁰¹, R²⁰² und R²⁰³ zusammen mit dem Stickstoffatom, an das sie gebunden sind, einen fünf- oder sechs-gliedrigen heterocyclischen Ring bilden,
R²⁰⁴ ein Wasserstoffatom, ein C₁₋₄-Alkyl- oder C₁₋₄-Alkoxyrest ist,
u und v ganze Zahlen von 1 bis 3 sind, wobei die Summe aus u und v 3, 4 oder 5 ist, und
X eine zweiwertige Verknüpfungsgruppe, wie ein C₁₋₈-Alkylenrest, der unsubstituiert oder durch einen oder mehrere C₁₋₄-Alkyl- und/oder C₁₋₄-Alkoxyreste substituiert ist, oder eine Gruppe 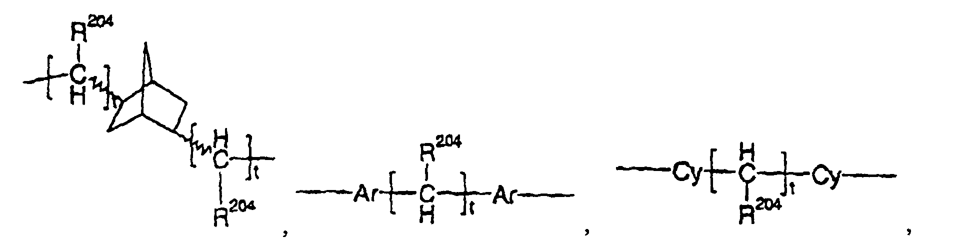 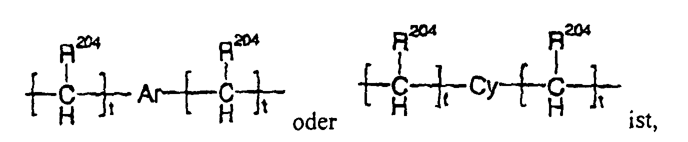 worin R²⁰⁴ wie hierin oben definiert ist,
Ar ein C₆₋₁₀-Arylrest ist, der unsubstituiert oder durch einen oder mehrere C₁₋₄-Alkyl- und/oder C₁₋₄-Alkoxyreste substituiert ist,
Cy ein C₅₋₇-Cycloalkylrest ist, der unsubstituiert oder durch einen oder mehrere C₁₋₄-Alkyl- und/oder C₁₋₄-Alkoxyreste substituiert ist, und
t eine ganze Zahl von 0 bis 4 ist;
oder einem Metallkomplex der Formel 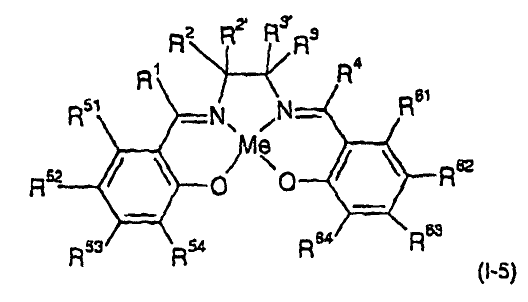 oder 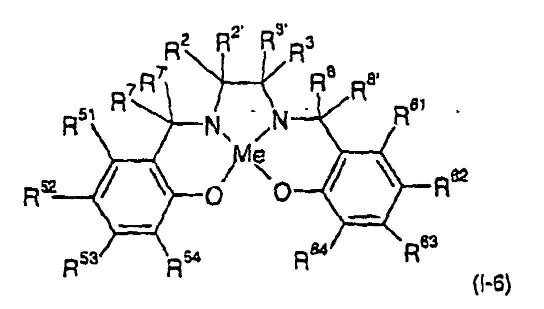 worin
Me Cu, Ni oder Co ist,
R⁵¹, R⁵², R⁵³, R⁵⁴, R⁶¹, R⁶², R⁶³ und R⁶⁴ ein Wasserstoffatom, ein Chloratom, ein Bromatom, eine Hydroxygruppe, ein C₁₋₈-Alkylrest, der unsubstituiert oder durch eine Di- oder Tri-alkylammoniumgruppe substituiert sein kann, ein C₁₋₁₆-Alkoxyrest, der unsubstituiert oder durch eine Di- oder Tri-alkylammoniumgruppe substituiert sein kann, ein C₁₋₈-Alkylrest, der ein oder mehrmals durch -O- oder durch -S- unterbrochen sein kann, und der unsubstituiert oder durch eine Di- oder Tri-alkylammoniumgruppe substituiert sein kann; eine Estergruppe, wie eine Phosphonsäure-, Phosphorsäure- und Carbonsäureestergruppe, eine Carboxamidgruppe, eine Sulfamidgruppe oder eine Di- oder Tri-alkylammoniumgruppe sind,
R¹ und R⁴ jeweils unabhängig voneinander ein Wasserstoffatom oder ein C₁₋₈-Alkylrest sind, R², R^{2'}, R³ und R^{3'} ein Wasserstoffatom, eine Cyanogruppe oder ein C₁₋₈-Alkylrest sind, oder Paare der Reste R² und R^{2'}, R³ und R^{3'} zusammen einen Cyclohexanring bilden, wobei mindestens einer der Reste R⁵¹, R⁵², R⁵³, R⁵⁴, R⁶¹, R⁶², R⁶³ und R⁶⁴ eine Di- oder Tri-alkylammoniumgruppe bilden oder durch eine Di- oder Tri-alkylammoniumgruppe substituiert ist;
R⁷, R^{7'}, R⁸ und R^{8'} jeweils unabhängig voneinander ein Wasserstoffatom oder ein unsubstituierter oder substituierter C₁₋₈-Alkylrest, eine Phenylgruppe oder eine Benzylgruppe sind, oder
R⁷ und R^{7'} zusammen und/oder R⁸ und R^{8'} zusammen, jedes Paar unabhängig voneinander eine Carbonylgruppe oder eine Thiocarbonylgruppe bilden, ausgewählt ist.

7. Optisches Aufzeichnungsmedium, umfassend ein Substrat und mindestens eine Aufzeichnungsschicht, wobei die Aufzeichnungsschicht eine Zusammensetzung nach einem der Anspruche 1 bis 6 umfaßt.

8. Verwendung einer Zusammensetzung nach einem der Ansprüche 1 bis 6 bei der Herstellung optischer Aufzeichnungsmedien, Farbfilter (optischen Filtern) und Druckertmten.

9. Verfahren zur Herstellung eines optischen Aufzeichnungsmediums, wobei eine Lösung aus einer Zusammensetzung nach einem der Ansprüche 1 bis 6 in einem nicht-halogenierten Lösungsmittel auf ein Substrat mit Vertiefungen aufgetragen wird.

10. Oxonolfarbstoff der Formel (II-1) oder (II-2) nach Anspruch 2, wobei M^{k+} ein kationischer Farbstoff ist.

11. Verfahren nach Anspruch 9, wobei das organische Lösungsmittel ein Alkohol ist.

12. Verwendung eines Oxonolfarbstoffes nach Anspruch 10 bei der optischen Datenspeicherung.

13. Verwendung eines Metallkomplexes der Formel (I-1), wobei Me, D¹ und D², R⁵ und R⁶, R¹ und R⁴ wie in Anspruch 1 definiert sind, R² und R³ eine Doppelbindung bilden, und R^{2'} und R^{3'} Cyanogruppen sind, bei der optischen Datenspeicherung.

14. Optischer Filter, umfassend eine Trägerschicht und eine Filterschicht, wobei die Filterschicht eine Zusammensetzung der Erfindung nach einem der Ansprüche 1 bis 6 umfaßt.

15. Druckertinte, umfassend eine Zusammensetzung der Erfindung nach einem der Ansprüche 1 bis 6.

## Revendications

1. Composition comprenant au moins un colorant oxonol et au moins un complexe métallique de formule suivante : 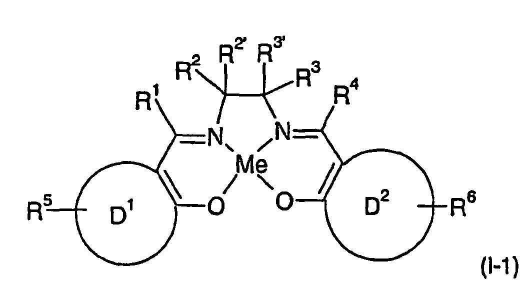 ou 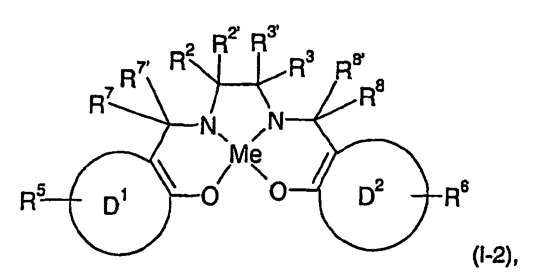 dans lesquelles
Me représente un métal de transition du sous-groupe 7, 8, 9, 10, 11 ou 12, de préférence 9, 10 ou 11,
D¹ et D² représentent chacun, indépendamment l'un de l'autre, un carbocycle, un hétérocycle ou un système de carbocycles ou d'hétérocycles qui peuvent être non substitués ou substitués par un ou plusieurs groupes R⁵ et R⁶,
R⁵ et R⁶ représentant chacun un atome d'halogène tel qu'un atome de fluor, de chlore ou de brome, un groupe amino, un groupe alkylamino, un groupe dialkylamino, un groupe nitro, un groupe cyano, un groupe hydroxyle, un radical alkyle non substitué ou substitué, un radical hydroxyalkyle non substitué ou substitué, un radical alcoxyle non substitué ou substitué, un radical alkyle qui est interrompu une ou plusieurs fois par -O- ou par -S- et qui peut être non substitué ou substitué, un radical acyle, un groupe phényle, un groupe ester tel qu'un groupe ester phosphonique, phosphorique ou carboxylique, un groupe carboxamide, un groupe sulfamide, un groupe ammonium, un groupe acide carboxylique, acide sulfonique, acide phosphonique ou acide phosphorique ou un de leurs sels,
R¹ et R⁴ représentent chacun, indépendamment l'un de l'autre, un atome d'hydrogène ou un radical alkyle, un radical aryle ou un radical aralkyle non substitué ou substitué,
R², R^{2'}, R³ et R^{3'} représentent chacun, indépendamment les uns des autres, un atome d'hydrogène, un groupe cyano, un radical alkyle, un radical alcoxyle, un radical aryle ou un radical aralkyle non substitué ou substitué, un groupe ester, un groupe carboxamide, un groupe sulfamide, un groupe trialkylammonium, un groupe acide carboxylique, acide sulfonique, acide phosphonique ou acide phosphorique ou un de leurs sels, ou
R² et R³ ensemble ou R^{2'} et R^{3'} ensemble forment une double liaison, un radical cycloalkyle ou un hétérocycle, ou
R², R^{2'}, R³ et R^{3'} forment ensemble un carbocycle ou un hétérocycle aromatique,
R² et R³ ensemble et/ou R^{2'} et R^{3'} ensemble forment, chaque paire indépendamment l'une de l'autre, un groupe carbonyle ou un groupe thiocarbonyle,
R⁷, R^{7'}, R⁸ et R^{8'} représentent chacun, indépendamment les uns des autres, un atome d'hydrogène ou un radical alkyle, un radical aryle ou un radical aralkyle non substitué ou substitué, ou
R⁷ et R^{7'} ensemble et/ou R⁸ et R^{8'} ensemble forment, chaque paire indépendamment l'une de l'autre, un groupe carbonyle ou un groupe thiocarbonyle,

2. Composition selon la revendication 1, dans laquelle le colorant oxonol est un colorant de formule : 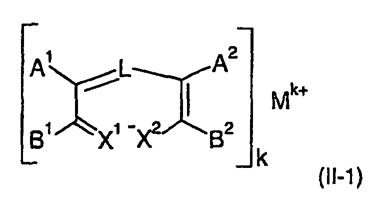 ou 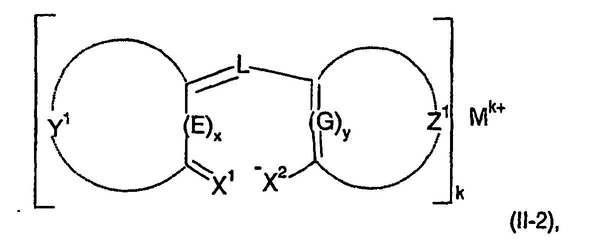 dans lesquelles A¹, A², B¹ et B² représentent dans chaque cas un substituant ; Y¹ et Z¹ représentent dans chaque cas un groupe d'atomes nécessaire à la formation d'un carbocycle ou d'un hétérocycle ; E et G représentent dans chaque cas un groupe d'atomes nécessaire à la formation d'une chaîne contenant des doubles liaisons conjuguées ; X¹ représente =O, =NR⁹ ou =C(CN)₂, R⁹ représentant un substituant ; X² représente -O, -NR⁹ ou -C(C_{N})₂, R⁹ représentant un substituant ; L représente un groupe méthine qui peut être substitué ou un groupe complétant un groupe polyméthine, 3, 5 ou 7 groupes méthine pouvant être liés pour former une chaîne contenant des doubles liaisons conjuguées, chaîne qui peut être substituée ; M^{k+} représente un cation organique ou inorganique, le complexe métallique de formule (I-1) ou (I-2) pouvant être le cation à condition qu'il porte une ou plusieurs charges positives ; x et y valent 0 ou 1, et k représente un nombre entier valant 1 à 10.

3. Composition selon l'une quelconque des revendications 1 ou 2, dans laquelle M^{k+} représente un cation ammonium ou un colorant cationique.

4. Composition selon la revendication 3, dans laquelle le colorant cationique présente un pic d'absorption dans la gamme allant de 550 à 620 nm et/ou inférieure à 450 nm.

5. Composition selon l'une quelconque des revendications 1 à 3, dans laquelle le colorant oxonol est représenté par la formule générale suivante : 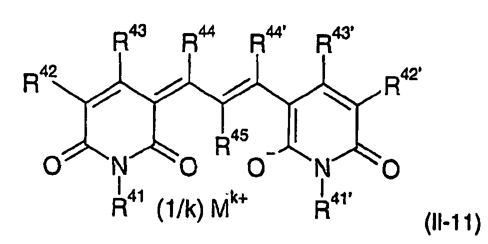 ou 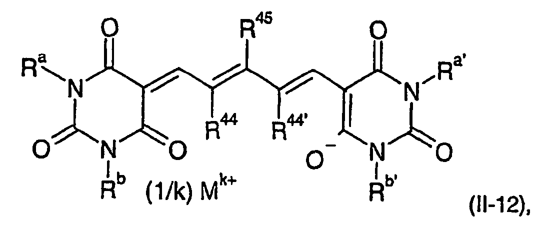 dans laquelle M^{k+} représente un cation ammonium, k représente un nombre entier valant 1 à 4, en particulier 1 ou 2,
R^{a}, R^{b}, R^{a'} et R^{b'} représentent chacun, indépendamment les uns des autres, un atome d'hydrogène, un radical alkyle en C₁ à C₈, en particulier un radical alkyle en C₁ à C₄, un radical hydroxyalkyle(en C₁ à C₈), un radical alcényle en C₁ à C₈, par exemple -CH₂-CH=CH₂, un radical aryle en C₆ à C₁₂ non substitué ou substitué par un groupe alkyle en C₁ à C₄ ou alcoxyle en C₁ à C₄, par exemple un radical phényle, ou un radical aralkyle en C₇ à C₁₂, par exemple un radical benzyle,
R⁴¹ et R^{41'} représentent chacun, indépendamment l'un de l'autre, un atome d'hydrogène, un radical alkyle en C₁ à C₄, par exemple un radical méthyle ou éthyle, ou un radical perfluoroalkyle(en C₁ à C₄), par exemple un radical trifluorométhyle, un radical hydroxyalkyle(en C₁ à C4), ou un radical alkyle en C₁ à C₈ interrompu une ou plusieurs fois par -O-, par exemple CH₂CH₂CH₂-O-CH(CH₃)₂, un radical aryle en C₆ à C₁₀, par exemple un radical phényle, ou un radical aralkyle en C₇ à C₁₂, par exemple un radical benzyle,
R⁴² et R^{42'} représentent chacun, indépendamment l'un de l'autre, un atome d'hydrogène, un groupe cyano ou un groupe carboxamide,
R⁴³ et R^{43'} représentent chacun, indépendamment l'un de l'autre, un atome d'hydrogène, un groupe acide carboxylique ou un de ses sels ou un radical alkyle en C₁ à C₄,
R⁴⁴ et R^{44'} représentent chacun, indépendamment l'un de l'autre, un atome d'hydrogène, un radical alkyle en C₁ à C₄, un radical aryle en C₆ à C₁₂ ou aralkyle en C₇ à C₁₂,
ou
R⁴⁴ et R^{44'} forment ensemble un cycle à cinq ou à six éléments tel qu'un radical cyclohexényle ou cyclopentényle, et
R⁴⁵ représente un atome d'hydrogène, un atome d'halogène, en particulier un atome de chlore, un radical aryle en C₆ à C₁₂ non substitué ou substitué par un groupe alkyle en C₁ à C₄ ou alcoxyle en C₁ à C₄, par exemple un radical phényle ou p-méthylphényle, ou un radical aralkyle en C₇ à C₁₂, par exemple un radical benzyle.

6. Composition selon la revendication 5, dans laquelle M^{k+} est choisi parmi les cations suivants : 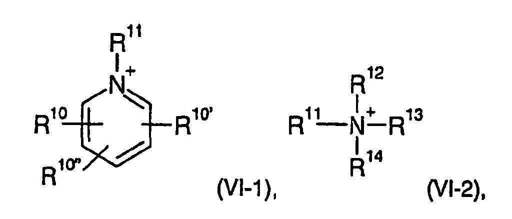 où R¹⁰, R^{10'} et R^{10"} représentent chacun, indépendamment les uns des autres, un atome d'hydrogène, un radical cycloalkyle en C₃ à C₂₄ qui est non substitué ou substitué, par exemple, par un à trois radicaux alkyle en C₁ à C₄, par exemple un radical cyclohexyle ou 3,3,5-triméthylcyclohexyle ou colophane aminée D, ou un radical alkyle en C₁ à ₂₄ à chaîne droite ou ramifiée, R¹¹, R¹², R¹³ et R¹⁴ représentent chacun un atome d'hydrogène, un radical alkyle en C₁ à C₃₆, de préférence un radical alkyle en C₁ à C₁₆, à chaîne droite ou ramifiée qui peut être non substitué ou substitué, un radical hydroxyalkyle(en C₁ à C₃₆), en particulier un radical hydroxyalkyle(en C₁ à C₈), à chaîne droite ou ramifiée, un radical aryle en C₆ à C₂₄, en particulier un radical aryle en C₆ à C₁₀, ou un radical aralkyle en C₇ à C₂₄, en particulier un radical aralkyle en C₇ à C₁₂, ou deux des radicaux R¹¹, R¹², R¹³ et R¹⁴, conjointement avec l'atome d'azote auquel ils sont liés, forment un hétérocycle à cinq ou à six éléments tel qu'un radical pyrrolidino, pipéridino ou morpholino ; ou 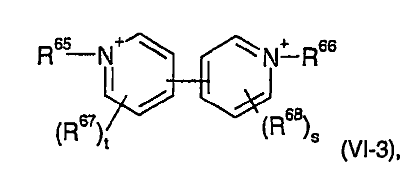 de préférence 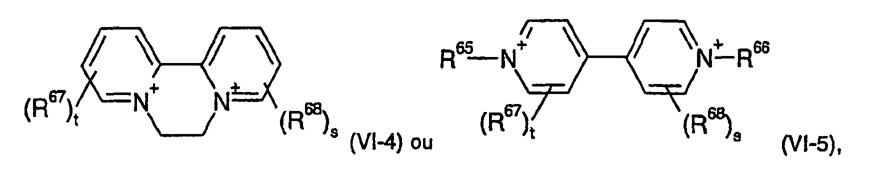 où R⁶⁷ et R⁶⁸ représentent chacun, indépendamment l'un de l'autre, un substituant, R⁶⁵ et R⁶⁶ représentent chacun, indépendamment l'un de l'autre, un radical alkyle substitué ou non substitué, un radical alcényle substitué ou non substitué, un radical alcynyle substitué ou non substitué, un radical aralkyle substitué ou non substitué, un radical aryle substitué ou non substitué ou un hétérocycle substitué ou non substitué, sachant qu'il est possible que les paires R⁶⁷ et R⁶⁸, R⁶⁷ et R⁶⁵, R⁶⁸ et R⁶⁶, et R⁶⁵ et R⁶⁶ soient reliées pour former un cycle, et s et t valent chacun, indépendamment l'un de l'autre, 0 ou un nombre entier valant 1 à 4, à condition que lorsque s et t ont une valeur supérieure ou égale à 2, les groupes R⁶⁷ et R⁶⁸ puissent être identiques ou différents; ou de formule : 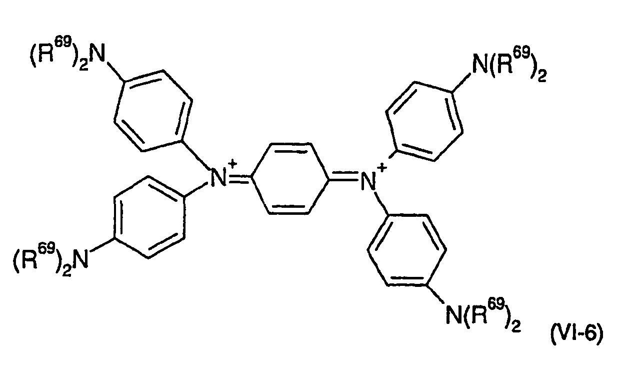 dans laquelle R⁶⁹ représente un radical alkyle en C₁ à C₈ à chaîne droite ou ramifiée, en particulier un radical méthyle, éthyle, propyle, butyle ou *tert*-butyle qui peut être non substitué ou substitué, par exemple, par un groupe cyano, un atome d'halogène ou un radical alcoxyle en C₁ à C₄ ; 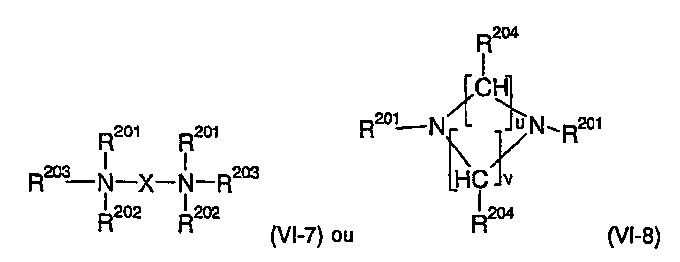 où R²⁰¹, R²⁰² et R²⁰³ représentent chacun, indépendamment les uns des autres, un atome d'hydrogène, un radical alkyle en C₁ à C₃₆, de préférence un radical alkyle en C₁ à C₁₆, à chaîne droite ou ramifiée qui peut être non substitué ou substitué, un radical hydroxyalkyle(en C₁ à C₃₆), en particulier hydroxyalkyle(en C₁ à C₈), qui est non substitué ou substitué par un ou plusieurs radicaux alkyle en C₁ à C₄ et/ou alcoxyle en C₁ à C₄, un radical cycloalkyle en C₃ à C₂₄, en particulier un radical cycloalkyle en C₅ à C₇, un radical aryle en C₆ à C₂₄, en particulier un radical aryle en C₆ à C₁₀, ou un radical aralkyle en C₇ à C₂₄, en particulier un radical aralkyle en C₇ à C₁₂, ou deux des radicaux R²⁰¹, R²⁰² et R²⁰³, conjointement avec l'atome d'azote auquel ils sont liés, forment un hétérocycle à cinq ou à six éléments, R²⁰⁴ représente un atome d'hydrogène, un radical alkyle en C₁ à C₄ ou alcoxyle en C₁ à C₄, u et v représentent des nombres entiers valant 1 à 3, la somme de u et v valant 3, 4 ou 5, et
X représente un groupe de liaison divalent tel qu'un radical alkylène en C₁ à C₈ qui est non substitué ou substitué par un ou plusieurs radicaux alkyle en C₁ à C₄ et/ou alcoxyle en C₁ à C₄, ou un groupe 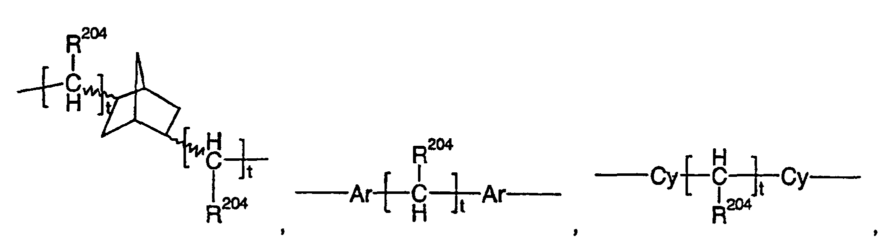 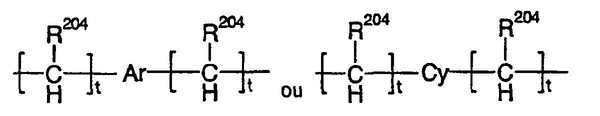 où R²⁰⁴ est tel que défini ci-dessus, Ar représente un radical aryle en C₆ à C₁₀ qui est non substitué ou substitué par un ou plusieurs radicaux alkyle en C₁ à C₄ et/ou alcoxyle en C₁ à C₄, Cy représente un radical cycloalkyle en C₅ à C₇ qui est non substitué ou substitué par un ou plusieurs radicaux alkyle en C₁ à C₄ et/ou alcoxyle en C₁ à C₄, et t représente un nombre entier valant 0 à 4 ;
ou un complexe métallique de formule : 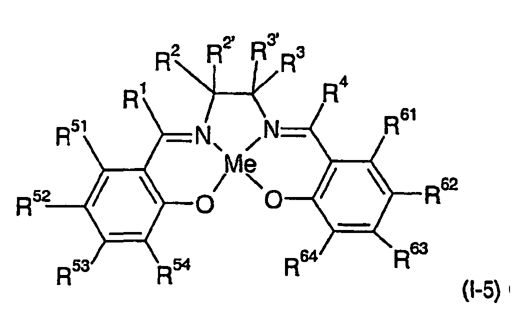 ou 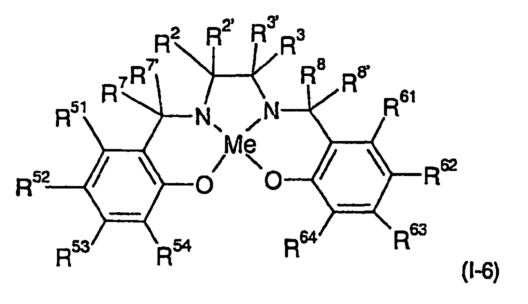 dans lesquelles
Me représente Cu, Ni ou Co ;
R⁵¹, R⁵², R⁵³, R⁵⁴, R⁶¹, R⁶², R⁶³ et R⁶⁴ représentent chacun un atome d'hydrogène, un atome de chlore, un atome de brome, un groupe hydroxyle, un radical alkyle en C₁ à C₈ qui peut être non substitué ou substitué par un groupe di- ou tri-alkylammonium, un radical alcoxyle en C₁ à C₁₆ qui peut être non substitué ou substitué par un groupe di- ou tri-alkylammonium, un radical alkyle en C₁ à C₈ qui est interrompu une ou plusieurs fois par -O- ou par -S- et qui peut être non substitué ou substitué par un groupe di- ou tri-alkylammonium ; un groupe ester tel qu'un groupe ester phosphonique, phosphorique et carboxylique, un groupe carboxamide, un groupe sulfamide ou un groupe di- ou tri-alkylammonium,
R¹ et R⁴ représentent chacun, indépendamment l'un de l'autre, un atome d'hydrogène ou un radical alkyle en C₁ à C₈ ;
R², R^{2'}, R³ et R^{3'} représentent chacun un atome d'hydrogène, un groupe cyano ou un radical alkyle en C₁ à C₈ ou les paires des radicaux R² et R^{2'}, et R³ et R^{3'} forment chacune un radical cyclohexane, au moins un des radicaux R⁵¹, R⁵², R⁵³, R⁵⁴, R⁶¹, R⁶², R⁶³ et R⁶⁴ représentant un groupe di- ou tri-alkylammonium ou étant substitué par un groupe di- ou tri-alkylammonium ;
R⁷, R^{7'}, R⁸ et R^{8'} représentent chacun, indépendamment les uns des autres, un atome d'hydrogène ou un radical alkyle en C₁ à C₈ non substitué ou substitué, un groupe phényle ou un groupe benzyle, ou
R⁷ et R^{7'} ensemble et/ou R⁸ et R^{8'} ensemble forment, chaque paire indépendamment l'une de l'autre, un groupe carbonyle ou un groupe thiocarbonyle.

7. Support d'enregistrement optique comprenant un substrat et au moins une couche d'enregistrement, dans lequel la couche d'enregistrement comprend une composition selon l'une quelconque des revendications 1 à 6.

8. Utilisation de la composition selon l'une quelconque des revendications 1 à 6 pour la production de supports d'enregistrement optiques, de filtres colorés (filtres optiques) et d'encres d'imprimerie.

9. Procédé de production d'un support d'enregistrement optique dans lequel une solution d'une composition selon l'une quelconque des revendications 1 à 6 dans un solvant non halogéné est appliquée sur un substrat comportant des creux.

10. Colorant oxonol de formule (II-1) ou (II-2) selon la revendication 2, dans lequel M^{k+} représente un colorant cationique.

11. Procédé selon la revendication 9, dans lequel le solvant organique est un alcool.

12. Utilisation d'un colorant oxonol selon la revendication 10 pour la mémorisation optique d'informations.

13. Utilisation d'un complexe métallique de formule (I-1) dans laquelle Me, D¹ et D², R⁵ et R⁶, R¹ et R⁴ sont tels que définis dans la revendication 1, R² et R³ forment une double liaison et R^{2'} et R^{3'} représentent des groupes cyano, pour la mémorisation optique d'informations.

14. Filtre optique comprenant une couche-support et une couche filtrante, dans lequel la couche filtrante comprend une composition de la présente invention selon l'une quelconque des revendications 1 à 6.

15. Encre d'imprimerie comprenant une composition de la présente invention selon l'une quelconque des revendications 1 à 6.
